(19)

**Europäisches Patentamt**

**European Patent Office**

**Office européen des brevets**

(11) **EP 2 782 291 A1**

(12) **EUROPEAN PATENT APPLICATION**

(43) Date of publication:
24.09.2014 Bulletin 2014/39

(51) Int Cl.:
*H04L 12/24* (2006.01)          *H04L 12/751* (2013.01)
*H04L 12/715* (2013.01)          *H04L 12/931* (2013.01)
*H04L 12/803* (2013.01)          *H04L 12/705* (2013.01)

(21) Application number: 13160228.6

(22) Date of filing: 20.03.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Wolting Holding B.V.
1271 CZ Huizen (NL)**

(72) Inventor: **Wolting, Simon
1271 CZ Huizen (NL)**

(74) Representative: **Nederlandsch Octrooibureau
P.O. Box 29720
2502 LS The Hague (NL)**

(54) **Compiler for and method of software defined networking**

(57)     Method of and a compiler for controlling a network based on a logical network model. The network has physical nodes and virtual nodes. The physical nodes are interconnected by physical links in accordance with a physical network layout. The logical network model has logical nodes indicated with a logical node name which refers to at least one physical or at least one virtual node in the network. The method uses a physical forwarding point-of-attachment relation defining physical paths of the physical network in dependence on a physical forwarding policy, a first mapping relation defining how the virtual nodes and the physical nodes are mapped to one another, and a second mapping relation defining how the logical nodes are mapped to the physical nodes and the virtual nodes. The method also includes transforming paths in the physical network to paths between the physical nodes and the virtual nodes in dependence on the physical forwarding point-of-attachment relation and on the first mapping relation, as well as transforming paths between the physical nodes and virtual nodes to possible link relationships between the logical nodes in dependence on the paths between the physical nodes and virtual nodes and on the second mapping relation. Logical forwarding point-of-attachment relation defining logical paths in the logical network are calculated and forwarding table entries are created for the physical nodes and the virtual nodes from the logical forwarding point-of-attachment relation.

**EP 2 782 291 A1**

**Description**

**TECHNICAL FIELD**

The present invention relates to communication networks and computing equipment. Such networks may be packet switched. In particular, the present invention relates to a method for configuring packet forwarding devices, computing equipment, virtual switches and virtual machines in physical and virtual networks.

**BACKGROUND INFORMATION**

Recent developments in the field of Packet Switched Networking (PSN) and Computing have lead to the notion of Software Defined Networking (SDN). Within the context of this invention we consider Software Defined Networking as the capability to define a network in a high-level specification (such as, but not limited to, a high-level programming or scripting language) and through an automated process instruct the appropriate physical and virtual networking and computing resources in accordance with this specification.

Such recent developments can be found in WO2010115060 "Method and apparatus for implementing and managing virtual switches" and WO2012082988 "Methods for configuring network switches".

Recently, it has become possible to instruct packet forwarding devices with the desired forwarding behavior using an open interface through a standardized protocol. The current leading protocol for this is OpenFlow, but the present invention is not limited or bound to the OpenFlow protocol, but generic in nature and could work with future protocols that provide programmatic access to forwarding table(s) of packet forwarding devices. The forwarding table(s) contains the information against which information from the incoming packet and input port is matched, providing the desired output port(s) to forward the packet out to.

We will refer to 'packet forwarding device' as 'switch' throughout the remainder of this document, referencing to any device performing packet forwarding, not limited to Open Systems Interconnection (OSI) Layer 2. Besides the forwarding functionality a switch might provide additional operation(s) on the packet, such as but not limited to monitoring and/or recording and/or modifying of the incoming packet header and/or payload before forwarding the packet to one or more of it's output ports. The switch might also not forward (block) the packet. These type of devices performing additional operation(s) on the packet other than packet switching are typically referred to as middleboxes and are included in the definition of a switch used in this document.

Recently, interest has grown to perform switching and middlebox functions in virtual machines running on virtualized physical servers, typically referred to as Network Functions Virtualization (NFV), to allow for greater flexibility and agility in deploying network functionality and to potentially reduce cost. An SDN Compiler, as described and claimed in the present invention, should have the capability to create forwarding instructions for these virtual machines.

The distribution of these forwarding tables to switches is typically done by a so-called 'SDN controller'. The SDN controller is functionally a central place (implementations are typically redundant) at which the centrally specified forwarding tables are distributed among the typically geographically distributed switches in the network. Further, the SDN controller provides at its northbound interface a centralized view of the physical and/or virtual network resources, e.g. switches in the network, their topology, status of individual links.

The above outlines an important difference between SDN and traditional networking: the forwarding tables for the switches in the network are calculated in a centralized manner, as opposed to the distributed manner traditional networks operate which is based on a large variety of networking control protocols. This allows the user of the SDN network (user in the broadest sense: e.g. but not limited to network operator, IT operator, operations system, application, other network, other SDN Compiler) to centrally specify the desired behavior of the network, greatly enhancing the control over the network. Further, with the introduction of the Cloud Computing, a tight integration between and centralized control over both computing and networking resources has become a mandatory requirement.

Currently, the networking industry is focused on programmatic access to forwarding table(s) of packet forwarding devices. In order to create a tight integration between networking and computing, however, there is a need to provide instructions to physical hosts, virtual hosts and physical NICs as well. E.g. a host could be instructed over which interface to send a packet to a particular destination node. E.g. a host could be instructed which packets to accept and which to drop. E.g. a NIC could be instructed which packets to forward and which to drop. This requires a holistic approach to Software Defined Networking including physical and virtual networking and computing resources.

In the field of computing it has become common practice to virtualize physical servers into one or more virtual machines, resulting in aforementioned Cloud Computing. The process of server virtualization creates a logical abstraction of physical computing resources. Given today's tight integration between computing and networking a need has arisen for logical abstraction of physical and virtual networking resources.

## SUMMARY OF THE INVENTION

It is an object of the present invention to provide a method and a compiler that address the above mentioned tight integration between computing and networking, and need for logical abstraction of physical and virtual networking resources.

To that end, the present invention provides a method of controlling a network by a compiler based on a logical network model, the network comprising a first number of physical nodes and a second number of virtual nodes, the first number being equal to or larger than one, the second number being equal to or larger than zero, but the first and second numbers being such that their sum is at least two, the physical nodes being interconnected by physical links in accordance with a physical network layout, the logical network model comprising a third number of logical nodes, each logical node being indicated with a logical node name, each logical node name referring to at least one physical or at least one virtual node in the network, the method as performed by the compiler comprising the following actions:

a) Storing physical node names, each physical node name being an unique identifier of one physical node, and storing point-of-attachment names of the physical nodes, each of the point-of-attachment names of a physical node concerned being an unique identifier of a point-of-attachment between the certain physical node concerned and a physical link connecting the physical node concerned to another physical node;

b) Storing a physical forwarding point-of-attachment relation defining physical paths of the physical network in dependence on a physical forwarding policy of the physical network, on the physical node names, and on the point-of-attachment names of the physical nodes, a physical path denoting a physical route a packet follows from a physical source node to a physical destination node,

c) Storing virtual node names, storing a first mapping relation defining how the virtual nodes and the physical nodes are mapped to one another, and storing a second mapping relation defining how the logical nodes are mapped to the physical nodes and the virtual nodes,

d) Transforming paths in the physical network to paths between a set of nodes comprising the physical nodes and virtual nodes in dependence on the physical forwarding point-of-attachment relation and on the first mapping relation, as well as transforming paths between the set of physical nodes and virtual nodes to possible link relationships between the logical nodes in dependence on the paths between the set of physical nodes and virtual nodes and on the second mapping relation;

e) Storing logical node names for the logical nodes and a set of logical links between the logical nodes, ;

f) Calculating a logical forwarding point-of-attachment relation defining logical paths in the logical network in dependence on a logical forwarding policy of the logical network, on the logical node names, and on the set of logical links between the logical nodes, a logical path denoting a logical route a packet follows from a logical source node to a logical destination node,

g) Creating forwarding table entries for the physical nodes and the virtual nodes from the logical forwarding point-of-attachment relation;

h) Sending the forwarding table entries, either directly or indirectly, to selected physical nodes and selected virtual nodes.

Thus, the present invention provides a method for translating or compiling a high-level network specification into a set of instructions for the appropriate physical and/or virtual networking and/or computing resources. These instructions state which actions to perform on incoming packets such as forwarding, receiving, dropping incoming packets as well as how to send packets from a source node.

The invention also relates to a SDN compiler arranged to perform such a method.

In order to accomplish this task, the SDN compiler retains a model of each logical network that is defined through a high-level network specification. Also, the SDN compiler retains a model of physical and/or virtual networking and/or computing resources. Both models as well as their relationship are represented in a set of relations, such as matrices. The logical network comprises logical nodes. The forwarding path between each logical source and logical destination node is determined through operations performed on these matrices resulting in a list of Points-of-Attachments (e.g. but not limited to an Ethernet Media Access Control (MAC) Address) of physical and virtual resources. From these forwarding paths stored in matrices the above mentioned appropriate instructions are derived. The above approach allows for definition and creation of multiple simultaneous logical networks on the same physical and virtual resources.

In case matrix relations are used, by means of a hierarchical naming structure for the logical nodes and networks, the size of the matrices is kept within reasonable limits to allow current computing hardware and software to calculate these matrices in a reasonable timeframe

Further, the vast majority of the above mentioned matrices are independent from each other allowing for parallel computation speeding up the computation process. Also, the hierarchical naming structure results in a reasonable size of the forwarding tables even for very large production-networks, which can be supported in current hardware and software implementations. The described method can be applied to currently available OpenFlow-based products, but is not limited to OpenFlow and could work with future protocols that provide programmatic access to forwarding table(s) of packet forwarding devices. The described method can be applied to currently widely used identifiers of Point-of-Attachment, such as Ethernet MAC Addresses. The described method can be applied to IPv4 and IPv6 naming and packet formats.

Enhancements to the usage of IPv4 and IPv6 naming are proposed to provide further benefits in deployment of the proposed method.

## BRIEF DESCRIPTION OF DRAWINGS

The invention will be explained in detail with reference to some drawings that are only intended to show embodiments of the invention and not to limit the scope. The scope of the invention is defined in the annexed claims and by its technical equivalents. I.e., a person skilled in the art will understand that features, components, elements, etc. explicitly used to explain the invention can be substituted by technical equivalents unless otherwise stated. Moreover, separate features of different embodiments can be combined, even if not explicitly shown in the drawings or explained in the specification, unless such combination is physically impossible.

The drawings show:

Figure 1 is a diagram of depicting the various components of a Software Defined Network

Figure 2A is a diagram showing a functional representation of physical nodes BA, BB, BC and BD

Figure 2B is a diagram showing a functional representation of physical network BAA, consisting of physical nodes BA, BB, BC and BD interconnected by links.

Figure 2C is a diagram showing a functional representation of physical nodes BA, BB, BC, BD interconnected by links, of which the interconnection between a physical node and a physical link is denoted by a physical Point-of-Attachment (PoA), p101 through p108

Figure 2D is a diagram showing a functional representation of physical nodes BA, BB, BC, BD interconnected by physical links, of which the cost of the physical link in each direction of the physical link is shown

Figure 2E is a diagram showing a functional representation of physical nodes BA, BB, BC, BD interconnected by physical links, of which the cost of the physical path in each direction of the path is shown

Figure 2F is a diagram showing a functional representation of physical network BAA, consisting of physical nodes BA, BB, BC and BD interconnected by physical links, of which the interconnection between a physical node and a physical link is denoted by a physical Point-of-Attachment (PoA), p101 through p108, of which the cost of the physical link in each direction of the physical link is shown

Figure 2G is a diagram showing a weighted directed graph representation of physical network BAA, consisting of vertices (nodes) BA, BB, BC and BD interconnected by edges, of which the interconnection between a vertex and an edge is denoted by a physical Point-of-Attachment (PoA), p101 through p108, of which the cost of each edge is shown

Figure 2H is a diagram depicting the functionality of 3 types of nodes: Switch node, Host node, NIC node

Figure 2I is a table depicting the various physical and virtual nodes types: physical switch node, physical host node, physical NIC node, virtual switch node, virtual host node

Figure 2J is a diagram depicting a functional representation and symbols used for physical and virtual nodes of various node types

Figure 3A is a diagram showing a physical representation of a Packet Forwarding System

Figure 3B is a diagram showing a functional representation of a Packet Forwarding System

Figure 3C is a diagram showing a directed graph representation of a Packet Forwarding System

Figure 4A is a diagram showing a physical representation of Non-Virtualized Computing Equipment

Figure 4B is a diagram showing a functional representation of Non-Virtualized Computing Equipment

Figure 4C is a diagram showing a directed graph representation of Non-Virtualized Computing Equipment

Figure 5A is a diagram showing a physical representation of Virtualized Computing Equipment

Figure 5B is a diagram showing a functional representation of Virtualized Computing Equipment

Figure 6A is a diagram showing a functional representation of 1:1 Physical to Virtual Mapping with virtual PoA at physical node and virtual PoA at virtual node and with cost value in each direction of the mapping

Figure 6B is a diagram showing a functional representation of 1:N Physical to Virtual Mapping with virtual PoA at physical node and virtual PoA at virtual node and with cost value in each direction of the mapping

Figure 6C is a diagram showing a functional representation of N:1 Physical to Virtual Mapping with virtual PoA at physical node and virtual PoA at virtual node and with cost value in each direction of the mapping

Figure 7A is a diagram showing a physical representation of Virtualized Computing Equipment, illustrating additional aspects

Figure 7B is a diagram showing a functional representation Virtualized Computing Equipment, illustrating additional aspects

Figure 8A is a diagram showing a physical representation of a Network Interface Card (NIC)

Figure 8B is a diagram showing a functional representation of a NIC

Figure 8C is a diagram showing a directed graph representation of a NIC

Figure 9A is a diagram showing a physical representation of a NIC Coupler/Splitter

Figure 9B is a diagram showing a functional representation of a NIC Coupler/Splitter

Figure 9C is a diagram showing a directed graph representation of a NIC Coupler/Splitter

Figure 10A is a diagram showing a physical representation of interconnected Computing Equipment and Packet Forwarding System

Figure 10B is a diagram showing a functional representation of interconnected Computing Equipment and Packet Forwarding System

Figure 11A is a diagram showing a physical representation of a new device termed 'virtualized physical switch'

Figure 11B is a diagram showing a functional representation of a new device termed 'virtualized physical switch'

Figure 12A is a diagram showing a functional representation of 1:1 Physical to Logical Mapping with cost value in each direction of the mapping

Figure 12B is a diagram showing a functional representation of 1:N Physical to Logical Mapping with cost value in each direction of the mapping

Figure 12C is a diagram showing a functional representation of N:1 Physical to Logical Mapping with cost value in each direction of the mapping

Figure 12D is a diagram showing a functional representation of 1:1 Virtual to Logical Mapping with cost value in each direction of the mapping

Figure 12E is a diagram showing a functional representation of 1:N Virtual to Logical Mapping with cost value in each direction of the mapping

Figure 12F is a diagram showing a functional representation of N:1 Virtual to Logical Mapping with cost value in each direction of the mapping

Figure 12G is a diagram showing a functional representation of N:1 Physical and Virtual to Logical Mapping with cost value in each direction of the mapping

Figure 13A is a table depicting the mapping of physical and virtual switch node to logical switch node, mapping of physical and virtual host node to logical host node

Figure 13B is a diagram depicting the functional representation and symbols used for physical, virtual and logical nodes of various node types

Figure 14A is a diagram showing a physical representation of an example network

Figure 14B is a diagram showing a functional representation of physical network DAA

Figure 14C is a diagram showing a weighted directed graph representation of physical network DAA

Figure 14D is a diagram showing a functional representation of mapping from physical node DA to virtual nodes HA and HB

Figure 14E is a diagram showing a functional representation of virtual network HAA

Figure 15A is a diagram showing a functional representation of logical network UUU

Figure 15B is a diagram showing a weighted directed graph representation of logical network UUU

Figure 15C is a diagram showing a functional representation representation of physical nodes in network DAA and virtual nodes in network HAA to logical nodes in network UUU with mapping cost value of zero for all mappings in both directions

Figure 16 is a diagram showing a functional representation of physical nodes DA through DG, physical network DAA, virtual nodes HA and HB, logical nodes UU through UZ and logical network UUU as well as the mapping from physical to virtual nodes and physical/virtual to logical nodes

Figure 17 is a diagram depicting packet forwarding

Figure 18A is a diagram of a switch node performing only a packet forwarding function

Figure 18B is a diagram of a switch node performing a packet forwarding function as well as optional function(s)

Figure 19 is a diagram of a host node

Figure 20A is a diagram of a NIC node, showing a 1:1 relationship between input and output port

Figure 20B is a diagram of a NIC Coupler/Splitter node with packet forwarding from single input to multiple outputs, showing a 1:N relationship between input port and output ports

Figure 20C is a diagram of a NIC Coupler/Splitter node with packet forwarding from multiple inputs to single output, showing aN: relationship between input ports and output port

Figure 21A is a diagram of a generic representation of a PoA-type Adjacency and Forwarding matrix consisting of an arbitrary number of rows and columns

Figure 21B is a diagram of a generic representation of a Cost-type Adjacency and Forwarding matrix consisting of an arbitrary number of rows and columns

Figure 22A is a diagram of a generic representation of a PoA-type and Cost-type mapping matrix consisting of an arbitrary number of rows and columns

Figure 22B is a diagram of a generic representation of a network-mapping-type matrix consisting of a single row and an arbitrary number columns

Figure 23A shows matrix RRA used to explain matrix multiplication between PoA-type matrices and used to explain matrix multiplication between Cost-type matrices

Figure 23B shows the row elements 1 through q of 'sa', 'sa' being the value of element (RR,RU) of Matrix RRA

Figure 23C shows the row elements 1 through r of 'sb', 'sb' being the value of element (RR,RV) of Matrix RRA

Figure 23D shows the row elements 1 through s of 'sc', 'sc' being the value of element (RR,RW) of Matrix RRA

Figure 23E shows matrix RRB used to explain matrix multiplication between PoA-type matrices and used to explain matrix multiplication between Cost-type matrices

Figure 23F shows the row elements 1 through t of 'sk', 'sk' being the value of element (RU,RX) of Matrix RRB

Figure 23G shows the row elements 1 through u of 'sn', 'sn' being the value of element (RU,RY) of Matrix RRB

Figure 23H shows the row elements 1 through w of 'sr', 'sr' being the value of element (RU,RZ) of Matrix RRB

Figure 24A shows PoA-type matrix RRC, resulting from matrix multiplication of PoA-type matrices RRC=RRA•RRB

Figure 24B shows result of 'sa ** sk', 'sa ** sk' being the first row of element (RR,RX) of matrix RRC

Figure 24C shows value of element (RR,RX) of matrix RRC

Figure 24D shows result of 'sa ** sk' in case $sa_1$ equals 1 (one), 'sa ** sk' being the first row of matrix RRC

Figure 24E shows Cost-type matrix RRD, resulting from matrix multiplication of Cost-type matrices RRC=RRA•RRB

Figure 24F shows result of 'sa ++ sk', 'sa ++ sk' being the first row of element (RR,RX) of matrix RRD

Figure 24G shows value of element (RR,RX) of Matrix RRD

Figure 24H is a diagram showing a functional representation of physical network CAA comprising of nodes CH, CJ, CK, CL with PoAs p171 through 178 and cost value of all links in both directions being one.

Figure 24I is a diagram showing a functional representation of mapping from physical node CH to virtual node GR and from physical node CJ to virtual nodes GS and GT, with PoAs p179 through p184 and cost value of all mappings in both directions being zero.

Figure 24J shows Adjacency Matrix PoA Network CAA ($A^{PoA}_{CAA}$) of example network CAA

Figure 24K shows Forwarding Matrix PoA Network CAA ($F^{PoA}_{CAA}$) of example network CAA

Figure 24L shows PoA-type Mapping Matrix from virtual nodes GR, GS, GT to physical nodes CH, CJ, CK, CL ($M^{PoA}_{GAA-CAA}$) of mapping depicted in figure 24I.

Figure 24M shows result of matrix multiplication $M^{PoA}_{GAA-CAA} \cdot F^{PoA}_{CAA}$ providing all paths from a virtual node (GR, GS, GT) to a physical node (CH, CJ, CK, CL)

Figure 25 is a flowchart of a detailed example of a SDN Compiler method for a single physical network, a single virtual network and a single logical network

Figure 26 is a diagram outlining various matrices involved in a detailed example of a SDN Compiler method for a single physical network, a single virtual network and a single logical network

Figure 27A shows Network-Mapping Matrix of Network DAA ($M_{DAA}$) of example network DAA, HAA, UUU (physical example network DAA, virtual example network HAA, logical example network UUU) resulting from step 1 of the flowchart of figure 25.

Figure 27B shows Adjacency Matrix PoA Network DAA ($A^{PoA}_{DAA}$) of example network DAA, HAA, UUU resulting from step 2 of the flowchart of figure 25.

Figure 27C shows Adjacency Matrix Cost1 Network DAA ($A^{Cost1}_{DAA}$) of example network DAA, HAA, UUU resulting from in step 2 of the flowchart of figure 25.

Figure 27D shows Forwarding Matrix PoA Network DAA ($F^{PoA}_{DAA}$) of example network DAA, HAA, UUU resulting from step 4 of the flowchart of figure 25.

Figure 27E shows Forwarding Matrix Cost1 network DAA ($F^{Cost1}_{DAA}$) of example network DAA, HAA, UUU resulting from step 4 of the flowchart of figure 25.

Figure 28A shows Network-Mapping Matrix HAA ($M_{HAA}$) of example network DAA, HAA, UUU resulting from step 5 of the flowchart of figure 25.

Figure 28B shows PoA-type Mapping Matrix DAA/HAA to DAA ($M^{PoA}_{DAA/HAA-DAA}$) of example network DAA, HAA, UUU resulting from step 5 of the flowchart of figure 25.

Figure 28C shows PoA-type Mapping Matrix DAA to DAA/HAA ($M^{PoA}_{DAA-DAA/HAA}$) of example network DAA, HAA, UUU resulting from step 5 of the flowchart of figure 25.

Figure 28D shows Cost-type Mapping Matrix Cost1 DAA/HAA to DAA ($M^{Cost1}_{DAA/HAA-DAA}$) of example network DAA, HAA, UUU resulting from step 5 of the flowchart of figure 25.

Figure 28E shows Cost-type Mapping Matrix Cost1 DAA to DAA/HAA ($M^{Cost1}_{DAA-DAA/HAA}$) of example network DAA, HAA, UUU resulting from step 5 of the flowchart of figure 25.

Figure 28F shows Network-Mapping Matrix Network UUU ($M_{UUU}$) of example network DAA, HAA, UUU resulting from step 5 of the flowchart of figure 25.

Figure 28G shows PoA-type Mapping Matrix UUU to DAA/HAA ($M^{PoA}_{UUU-DAA/HAA}$) of example network DAA, HAA, UUU resulting from step 5 of the flowchart of figure 25.

Figure 28H shows PoA-type Mapping Matrix DAA/HAA to UUU ($M^{PoA}_{DAA/HAA-UUU}$) of example network DAA, HAA, UUU resulting from step 5 of the flowchart of figure 25.

Figure 28I shows Cost-type Mapping Matrix Cost1 UUU to DAA/HAA ($M^{Cost1}_{UUU-DAA/HAA}$) of example network DAA, HAA, UUU resulting from step 5 of the flowchart of figure 25.

Figure 28J shows Cost-type Mapping Matrix Cost1 DAA/HAA to UUU ($M^{Cost1}_{DAA/HAA-UUU}$) of example network DAA, HAA, UUU resulting from step 5 of the flowchart of figure 25.

Figure 28K shows the intermediate step calculation of Matrix $A^{PoA\ ALL}_{UUU}$ of example network DAA, HAA, UUU resulting from step 6 of the flowchart of figure 25.

Figure 28L shows Adjacency Matrix PoA ALL network UUU ($A^{PoA\ ALL}_{UUU}$) of example network DAA, HAA, UUU resulting from step 6 of the flowchart of figure 25.

Figure 28M shows the intermediate step calculation of Matrix $A^{Cost1\ ALL}_{UUU}$ of example network DAA, HAA, UUU resulting from step 6 of the flowchart of figure 25.

Figure 28N shows Adjacency Matrix Cost1 ALL network UUU ($A^{Cost1\ ALL}_{UUU}$) of example network DAA, HAA, UUU resulting from step 6 of the flowchart of figure 25.

Figure 29A shows Adjacency Matrix Cost2 network UUU ($A^{Cost2}_{UUU}$) of example network DAA, HAA, UUU resulting from step 8 of the flowchart of figure 25.

Figure 29B shows Adjacency Matrix PoA network UUU ($A^{PoA}_{UUU}$) of example network DAA, HAA, UUU resulting from step 8 of the flowchart of figure 25.

Figure 29C shows Forwarding Matrix PoA network UUU ($F^{PoA}_{UUU}$) of example network DAA, HAA, UUU resulting from step 10 of the flowchart of figure 25.

Figure 29D shows Forwarding Matrix Cost2 network UUU ($F^{Cost2}_{UUU}$) of example network DAA, HAA, UUU resulting from step 10 of the flowchart of figure 25.

Figure 29E shows Forwarding Matrix PoA Table network UUU ($F^{PoA\ Table}_{UUU}$) of example network DAA, HAA, UUU resulting from step 11 of the flowchart of figure 25.

Figure 29F shows Forwarding Matrix Cost2 Table network UUU ($F^{Cost2\ Table}_{UUU}$) of example network DAA, HAA, UUU resulting from step 11 of the flowchart of figure 25.

Figure 30A presents the forwarding table for physical switch node DA with PoAs p71, p72, p85, p87 of example network DAA, HAA, UUU resulting from step 11 of the flowchart of figure 25.

Figure 30B presents the forwarding table for physical switch node DB with PoAs p73, p74, p75 of example network DAA, HAA, UUU resulting from step 11 of the flowchart of figure 25.

Figure 30C presents the forwarding table for physical switch node DC with PoAs p76, p77 of example network DAA, HAA, UUU resulting from step 11 of the flowchart of figure 25.

Figure 30D presents the forwarding table for physical switch node DD with PoAs p78, p83 of example network DAA, HAA, UUU resulting from step 11 of the flowchart of figure 25.

Figure 30E presents the forwarding table for physical NIC node DE with PoAs p81, p82 of example network DAA, HAA, UUU resulting from step 11 of the flowchart of figure 25.

Figure 30F presents the forwarding table for physical NIC node DF with PoAs p79, p80 of example network DAA, HAA, UUU resulting from step 11 of the flowchart of figure 25.

Figure 30G presents the forwarding table for physical host node DG with PoA p84 of example network DAA, HAA, UUU resulting from step 11 of the flowchart of figure 25.

Figure 30H presents the forwarding table for virtual host node HA with PoA p86 of example network DAA, HAA, UUU resulting from step 11 of the flowchart of figure 25.

Figure 30I presents the forwarding table for virtual switch node HB PoA p88 of example network DAA, HAA, UUU resulting from step 11 of the flowchart of figure 25.

Figure 31 is a diagram of a general outline of a computer arrangement

**DETAILED DESCRIPTION OF THE INVENTION AND PREFERRED EMBODIMENT**

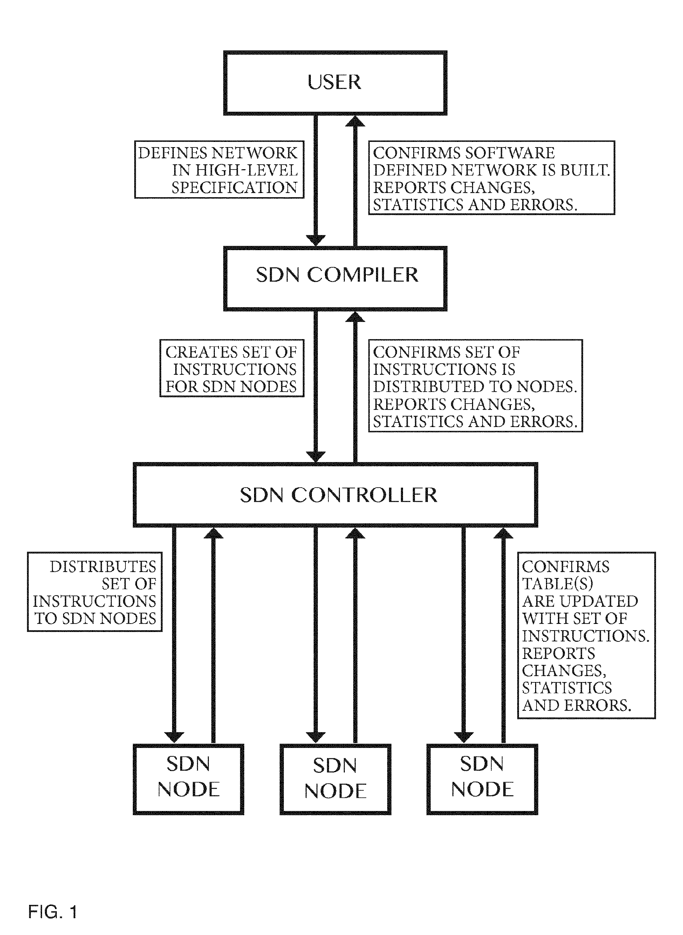

The definition of SDN as given in the introduction above, has lead the inventor of the present invention to a system comprising the following components, as depicted in figure 1.

1. A User defining a network in a high-level network specification.

2. A SDN Compiler translating the high-level network specification into a set of instructions for physical and virtual networking and computing resources.

3. A SDN Controller distributing this set of instructions to physical and virtual networking and computing resources.

4. Physical and virtual networking and computing resources performing an action on an incoming packet in accordance with the received set of instructions. In figure 1, they are indicated with the term "SDN node".

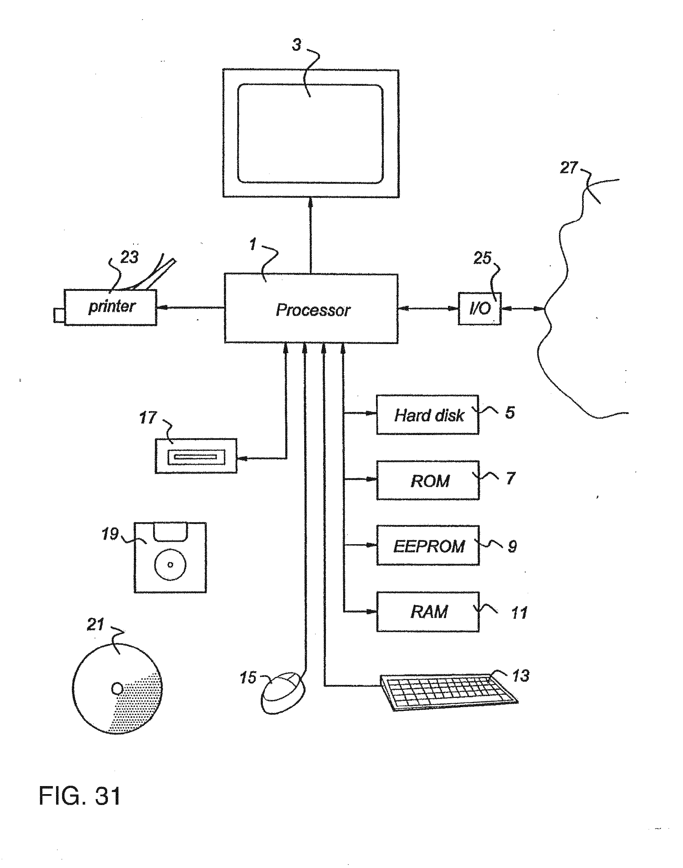

A user mentioned at point 1 above could be, but is not limited to, a person, a network management system, a cloud management system, an application, another SDN Compiler. So, a User may refer to "user equipment", i.e., any suitable computer equipment like a computer work station that may be stand-alone or part of a larger network. An example of such a computer equipment is shown in figure 31 and will be described later.
In figure 1, in the direction from bottom to top, the various components report on their northbound interface that particular tasks have been performed and report changes, statistics and errors.
The resources mentioned at point 4 comprise typical networking and computing resources such as, but not limited to:

- Physical packet forwarding devices (such as, but not limited to, layer 2 switch, layer 3 router, firewall, deep packet inspection device, caching node, or other type of middleboxes).

- Physical devices acting as network host, such as but not limited to physical server, personal computer, laptop, tablet, mobile phone.

- Physical Network Interface Cards (NICs).

- Virtual switches in virtualized physical servers.

- Virtual machines in virtualized physical servers.

The specification of this logical network abstraction is the 'high-level network specification' inputted by the user and mentioned at point 1 above. Ideally, this specification specifies an arbitrary logical network, consisting of an arbitrary number of logical nodes in an arbitrary topology with an arbitrary forwarding policy, determining the forwarding paths, the logical nodes being mapped to arbitrary physical and virtual network and computing resources. Multiple logical networks can be defined and created simultaneously on the same physical and virtual networking and computing resources.
Point 2 above refers to 'Translation of the high-level network specification into a set of instructions for networking and computing resources'. In case of a switch, these instructions are the forwarding table entries of that switch according to which packets should be forwarded. In case of a host, these instructions are the filter table entries according to which packets should be accepted or dropped and instructions to which output port to send packets originating from that host node to a particular destination node. In case of a NIC these instructions are the filter table entries according to which packets should be forwarded or dropped. Point 2 referred to above provides the translation or compilation from a high-level network specification into a set of instructions for the appropriate physical and virtual networking and computing resources. We have termed this process an 'SDN Compiler' process in analogy with compilers used in computing, translating a high-level language into lower-level instructions. Please note that the above process should provide instructions to both the physical and virtual networking and computing resources, in contrast to so-called 'overlay' virtual networks (such as proposed e.g. by Nicira/VMWare) which essentially create a virtual tunnel on top of the physical network, without configuring the physical switches, except for the tunnel in- and egress switches. The desired SDN Compiler method should provide an integral approach including both the virtual and physical resources, including the entire physical network. Further, the desired SDN Compiler method should also instruct non-switching network devices, referred to above, with the required instructions. Moreover, as current OpenFlow implementations are available in software (e.g. Open vSwitch providing a Virtual Switch running in a virtualized physical server) as well as in hardware (e.g. NEC ProgrammableFlow PF5240 Switch), there is a need to determine the aforementioned instructions across virtual and physical networking and computing resources. In an implementation, functionality of the 'SDN Compiler', or at least part of it, and functionality of the 'SDN Controller', or at least part of it, could be combined into a single system.

The 'SDN Compiler' process should allow for reasonably fast calculation of these instructions when any change in the logical network definition or physical or virtual resources occurs. E.g. a reasonable time might be in the order of 10's of milliseconds. Also, the list of forwarding or filter tables should be kept within reasonable limits for production-scale networks to be supported by current hardware and software implementations. E.g. a reasonable number order entries might be in the order of 5000 forwarding table entries.

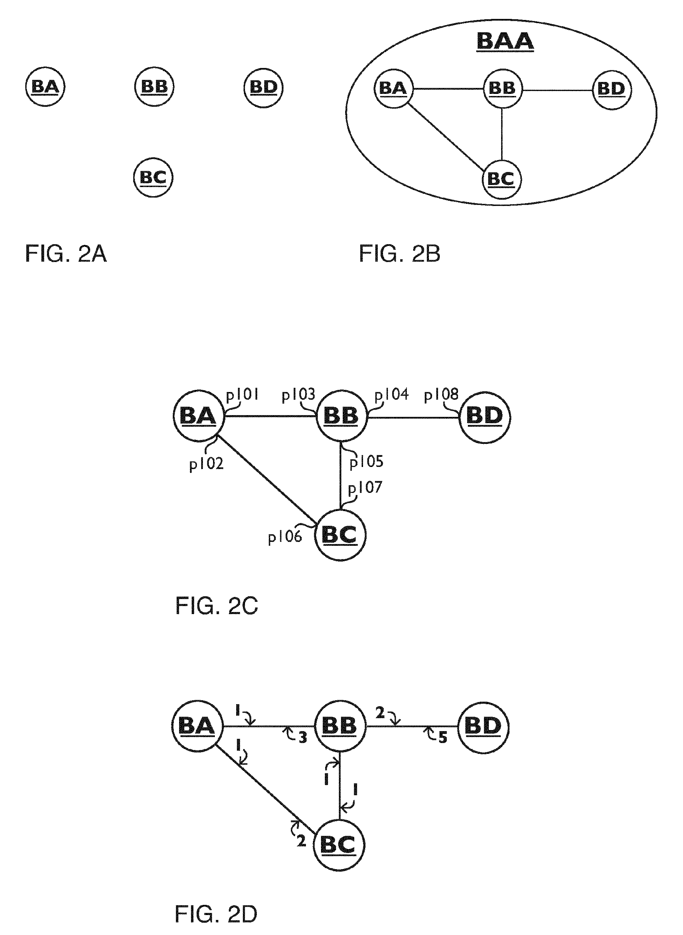

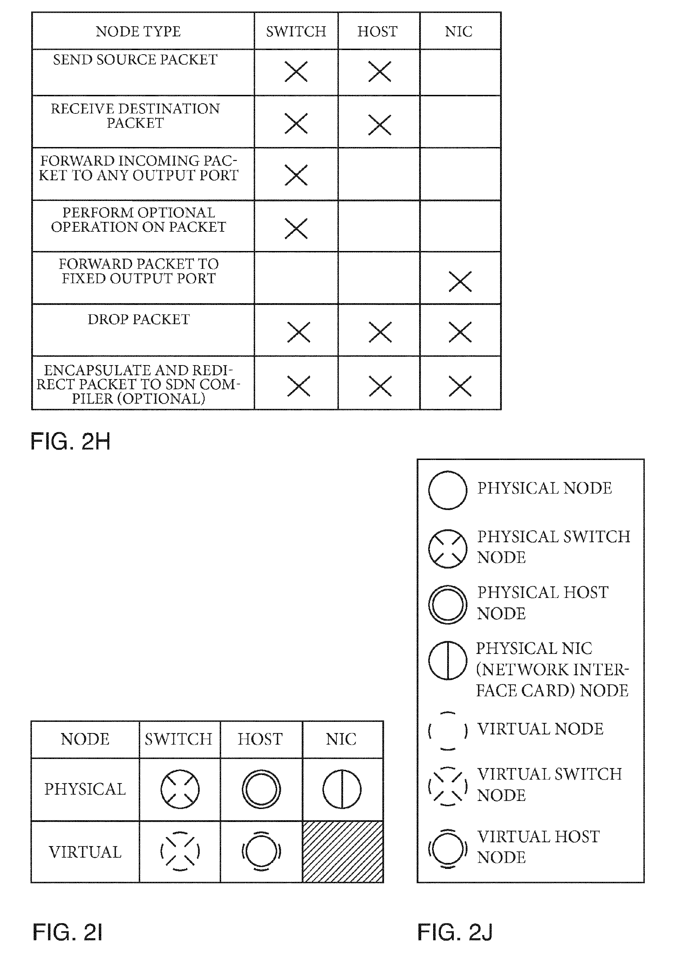

We will now first describe the physical and virtual resources for which the SDN compiler creates the appropriate instructions, using a functional representation. Figures 2A-2G depict the components of a physical network. Example physical nodes are shown in figure 2A and are considered physical resources onto which a logical network is created. As such the name of the physical node (BA through BD in figure 2A) is only used to identify the physical resource and not used to make any forwarding decision upon. As depicted in figure 2B, we define a physical network (identified with BAA in figure 2B) as a collection of physical nodes. Physical nodes are interconnected by physical links (denoted by a solid line).

In case a physical link is bidirectional, a physical link creates a pair of adjacencies between a pair of physical nodes, one adjacency in each direction. In case a physical link is unidirectional, a physical link creates a single adjacency between a pair of physical nodes. The physical link can be any physical medium, including but not limited to, fiber optic cable, copper cable, air. The physical link can also be a path provided by another networking technology, such as but not limited to an optical wavelength, a Time Division Multiplexing (TDM) circuit, a multi protocol label switching (MPLS) path. The set of physical nodes combined with the set of physical links determines the physical topology of the network. The physical network can consist of an arbitrary number of nodes, with arbitrary links, resulting in an arbitrary topology.

As depicted in figure 2C, the interface between the physical node and the physical link is referred to as Physical 'Point-of-Attachment' (PoA), indicated by p101 to p108. A typical example of a Physical PoA identifier in currently deployed networks is an Ethernet Media Access Control (MAC) Address, but our invention is not limited to this. The PoA identifier has to be unique within the collection of networks that is under control of the SDN Compiler. The PoA identifies both the 'Input Port' of a node when a packet is received by a node and the 'Output Port' of a node when a packet is sent from a node.

As depicted in figure 2D, each physical link has one or multiple cost types and a cost value(s) associated with each cost type in each direction. A typical cost type used in physical networks is the delay of the link, with cost values typically expressed in milliseconds, but any type of cost can be used. Each bidirectional physical link has 2 cost values, one for each direction. Each unidirectional physical link has 1 cost value for each cost type. The cost value of a physical link in a particular direction is shown closest to the physical node from which the packets originate for that particular direction. E.g. the link from BA to BB has a cost value of 1. The link from BB to BA has a cost value of 3.

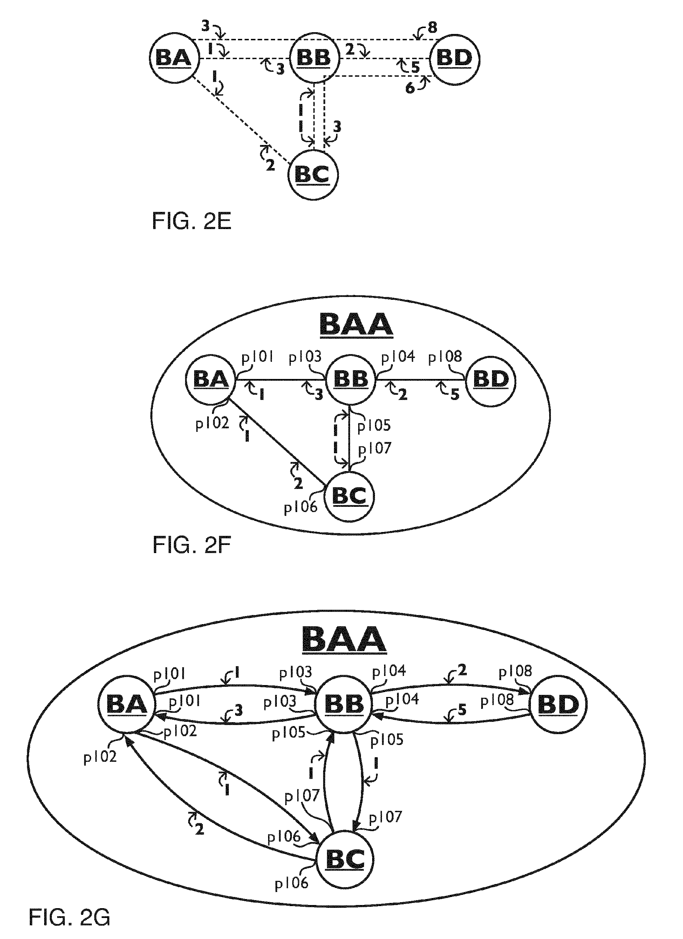

While a physical link denotes the adjacency-relationship(s) between a pair of physical nodes, a physical path denotes a physical route a packet follows from a physical source node to a physical destination node, in case of unicast networking. This is illustrated by some example paths in figure 2E. In case of multicast or broadcast networking there are physical path relationships between a single physical source node and multiple physical destination nodes. Physical paths can have multiple cost types in each direction with typically a cost value equal to the sum of the cost values of that particular cost type in that particular direction of the physical links it consists of. A physical path is a sequence of physical PoAs through which the packet traverses from source node to destination node. Alternative terminology for a 'path' is a 'flow', e.g. the OpenFlow specification uses the terminology 'flow'.

Putting the above elements together, a typical representation of a physical network is illustrated in figure 2F showing the physical network BAA, physical nodes BA through BD, physical PoAs p101 through p108 and cost values for each physical link.

In order to be able to apply a forwarding policy (e.g. but not limited to Shortest-Path First) we represent the network also as a weighted directed graph. The weighted directed graph of network BAA is given in figure 2G, showing the vertices (nodes) BA through BD and the directed edges that connect pairs of vertices. When represented as a directed graph, a bi-directional physical link between two vertices is represented by 2 edges. Each edge corresponds to an adjacency.

As depicted in figure 2H we distinguish between 3 types of physical nodes:

• Physical switch node, with the following functionality:

a) Send packet of which it is the source node

b) Receive packet of which it is the destination node

c) Forward an incoming packet received on any of the input ports to any of the output ports (including the port on which it was received)

d) Optionally provide operation(s) on the packet, such as but not limited to monitoring and/or recording and/or modifying of the incoming packet header and/or payload before forwarding the packet to one or more of it's output ports. Also, not forwarding (blocking) the packet.

e) Drop packet

f) Encapsulate and redirect packet to SDN Compiler (optional)

• Physical host node, with the following functionality:

a) Send packet of which it is the source node

b) Receive packet of which it is the destination node

c) Drop packet

d) Encapsulate and redirect packet to SDN Compiler (optional)

• Physical Network Interface Card (NIC), with the following functionality:

a) Forward an incoming packet received on a particular input port to a particular output port (fixed relationship between input and output ports)

b) Drop packet

c) Encapsulate and redirect packet to SDN Compiler (optional)

Physical Switch, Host and NIC nodes are represented by the symbols shown in figure 2I. Virtual nodes will be explained hereafter.

In order to be able to create the appropriate instructions by the SDN Compiler for the physical and virtual nodes, we will now model physical and virtual equipment typically deployed in current networks.

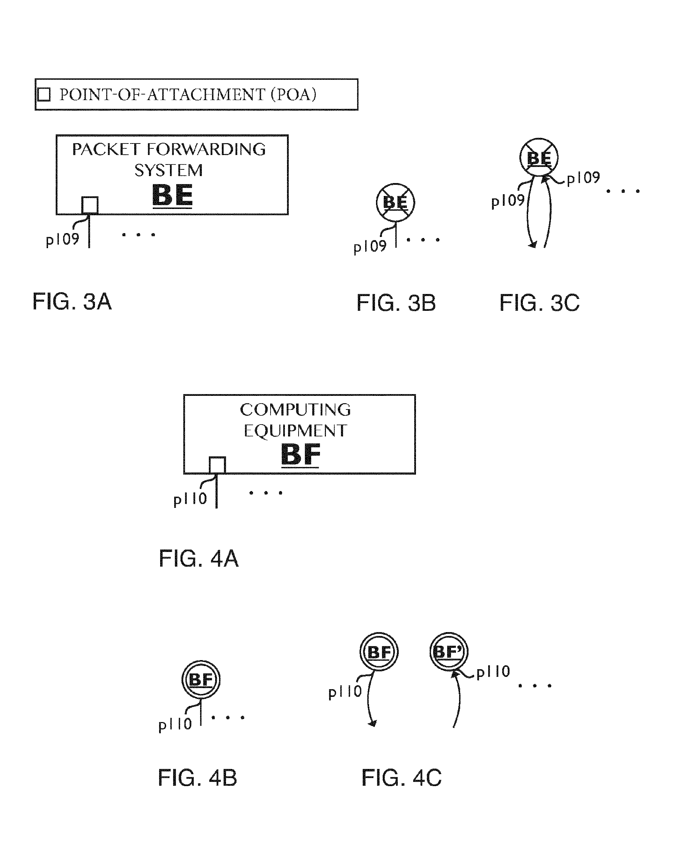

Figure 3A depicts a physical packet forwarding system BE (e.g., but not limited to, physical layer 2 switch, physical layer 3 router, firewall, deep packet inspection device, caching node, or other type of middleboxes). A physical packet forwarding system has one or more PoAs p109.

A physical packet forwarding system is represented as a physical switch node, as depicted by the functional representation given in figure 3B. The corresponding directed graph is given in figure 3C.

Figure 4A depicts non-virtualized computing equipment BF (e.g., but not limited to, physical server, personal computer, laptop, tablet, mobile phone). Non-virtualized computing equipment has one or more PoAs p110.

Non-virtualized computing equipment is typically in use as a physical host node, as depicted by the functional representation given in figure 4B. The corresponding directed graph is given in figure 4C. Host node BF has been split into 2 nodes: node BF in figure 4C is representing a sending host, while node BF' in figure 4C is representing a receiving host. This distinction is made as a host node is not allowed to forward any incoming packets, as per figure 2H. The functionality of the host node of sending source packets and receiving destination packets is represented by node BF and BF', respectively, in figure 4C.

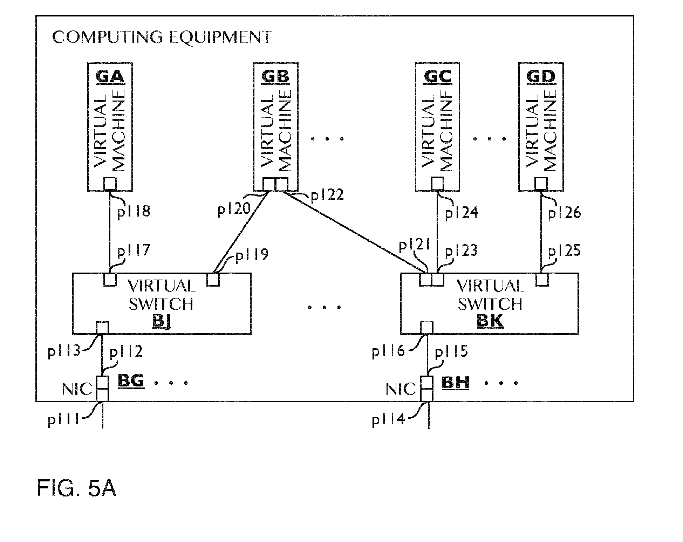

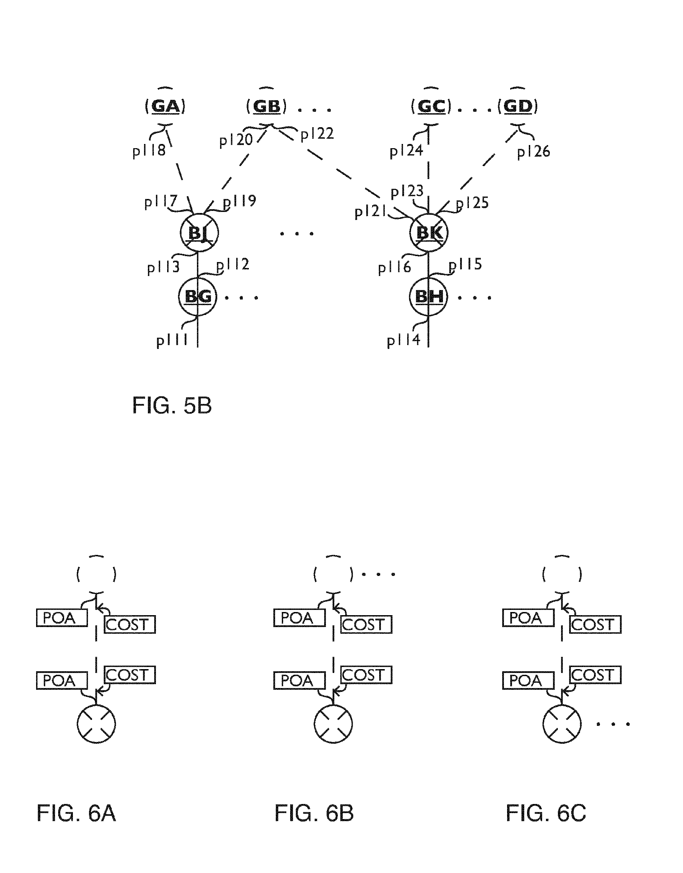

Figure 5A depicts virtualized computing equipment, e.g., but not limited to, a virtualized physical server or a virtualized blade server, in which an arbitrary number of virtual machines GA-GD are created, connected to an arbitrary number of virtual switches, using virtualization techniques. Virtualized computing equipment has PoAs p111, p112, p114, p115 on so-called Network Interface Cards (NICs) BG, BH, providing connectivity from the virtual switches BJ, BK to nodes outside the computing equipment. A virtual switch BJ, BK can be connected to one or multiple NICs BG, BH. A single virtual machine GA-GD can be connected to a single virtual switch (illustrated by virtual machine GA and virtual switch BJ). Multiple virtual machines can be connected to a single virtual switch, as illustrated by virtual machines GC and GD and virtual switch BK. A single virtual machine can be connected to multiple virtual switches, as illustrated by virtual machine GB and virtual switches BJ and BK. We will refer to this as 1:1, 1:N, N:1 physical to virtual mapping respectively. The functional model of virtualized computing equipment shown in figure 5A is depicted in figure 5B. A physical NIC BG, BH is represented by the symbol defined in figure 2I. Please note that virtual switches BJ, BK are represented as physical switch nodes and represented by the physical switch node symbol as defined in figure 2I, as virtual switches BJ, BK are functionally equivalent to physical forwarding equipment.

The difference is in implementation as virtual switches BJ, BK are typically implemented in software rather than hardware. The physical to virtual mapping is denoted by a dashed line with virtual PoAs p117-p126 identifying the point-of-attachment of the virtual switch BJ, BK and of the virtual machine GA-GD. In typical implementations these PoAs p117-p126 are typically referred to as virtual NICs or vNICs, but other terminology can be used as well. The virtual PoAs p117-p126 identify the point-of-attachments of a physical node (virtual switch) and of a virtual node (virtual machine) of a physical to virtual mapping.

Figures 6A-6C show the functional representation of 1:1, 1:N and N:1 physical to virtual mapping. Figure 6A depicts 1:1 physical to virtual mapping, figure 6B depicts 1:N physical to virtual mapping, figure 6C depicts N:1 physical to virtual mapping. A physical to virtual mapping can have an optional cost value for each direction of the mapping. In case of physical server virtualization typically reference is made to 1:1, 1:N, N:1 virtualization, referring to the ratio of number of physical servers to virtual machines. Please note that in the physical to virtual mapping introduced above the ratio 1:1, 1:N, N:1 is referring to the ratio of number of virtual switches to virtual machines.

As depicted in figure 2H we distinguish between 2 types of virtual nodes, both being virtual machines:

- Virtual switch node, with the following functionality:

    a) Send packet of which it is the source node

    b) Receive packet of which it is the destination node

    c) Forward an incoming packet received on any of the input ports to any of the output ports (including the port on which it was received)

    d) Optionally provide operation(s) on the packet, such as but not limited to monitoring and/or recording and/or modifying of the incoming packet header and/or payload before forwarding the packet to one or more of it's output ports. Also, not forwarding (blocking) the packet.

    e) Drop packet

    f) Encapsulate and redirect packet to SDN Compiler (optional)

The above mentioned virtual switch node allows for Network Functions Virtualization (NFV): a virtual switch node is implemented in a virtual machine through which traffic is forwarded. Typically, the virtual switch node would perform optional operations on the packet as mentioned at d) above.

- Virtual host node, with the following functionality:

    a) Send packet of which it is the source node

    b) Receive packet of which it is the destination node

    c) Drop packet

    d) Encapsulate and redirect packet to SDN Compiler (optional)

In analogy with the physical network, we define a virtual network as a collection of virtual nodes. It is observed that we refer to 'virtual switch node' when referring to a virtual machine that has the above properties of a switch, while we refer to a 'physical switch node' when referring to the virtual switch in the virtualized physical server.

It is also observed that the virtual machines depicted in figure 5B and figures 6A, 6C can either be a virtual switch node or a virtual host node. As such, the crosses symbol representing a switch and the circle symbol representing a host node are omitted in these figures.

Virtual machine GH, virtual switches BR, BS, and NICs BP, BQ are accommodated in one computing equipment. Virtual switch BU, and NIC BT are accommodated in another computing equipment. Virtual machine GJ is accommodated in both instances of computing equipment. Examples of connections are shown via links between respective PoAs p133-p153.

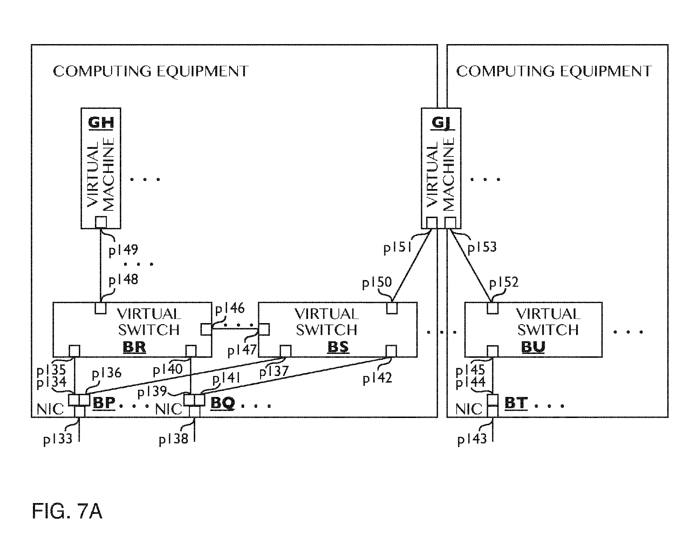

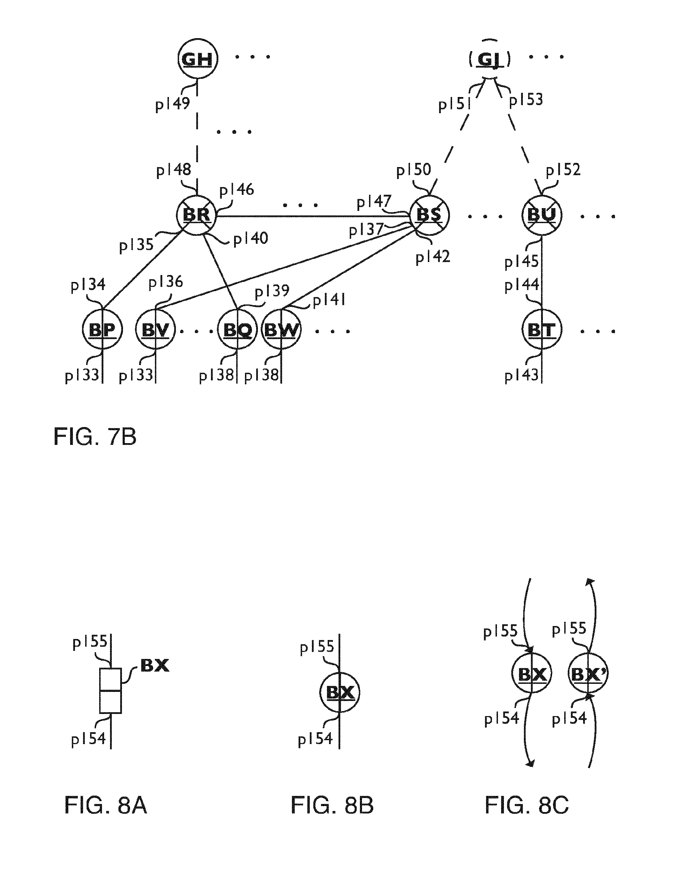

Figure 7A illustrates some additional properties of virtualized computing equipment. Figure 7A shows two virtual machines GH, GJ, three virtual switches BR, BS, BU, and three NICs BP, BQ, BT. As illustrated by PoAs p146 and p147, virtual switches can be interconnected, represented by a physical link in figure 7B. Note this interconnection is represented by a physical link as a virtual switch is represented by a physical switch node. As illustrated by virtual machine GJ, a virtual machine can be connected to multiple virtual switches each residing in different computing equipment instances. For redundancy purposes virtual switches are typically connected to multiple NICs. To make efficient use of the NIC resources and physical links to other computing equipment or packet forwarding systems, multiple virtual switches can be connected to a single NIC. The NIC now acts as a coupler/splitter forwarding packets from multiple input ports (identified by multiple PoAs) to a single output port (identified by a single PoA), and from a single input port to multiple output ports. In figure 7A the physical NIC nodes BP and BQ provide this coupler/splitter functionality: they are both connected to two virtual switches BR, BS. We refer to this type of NIC as 'NIC coupler/splitter'.

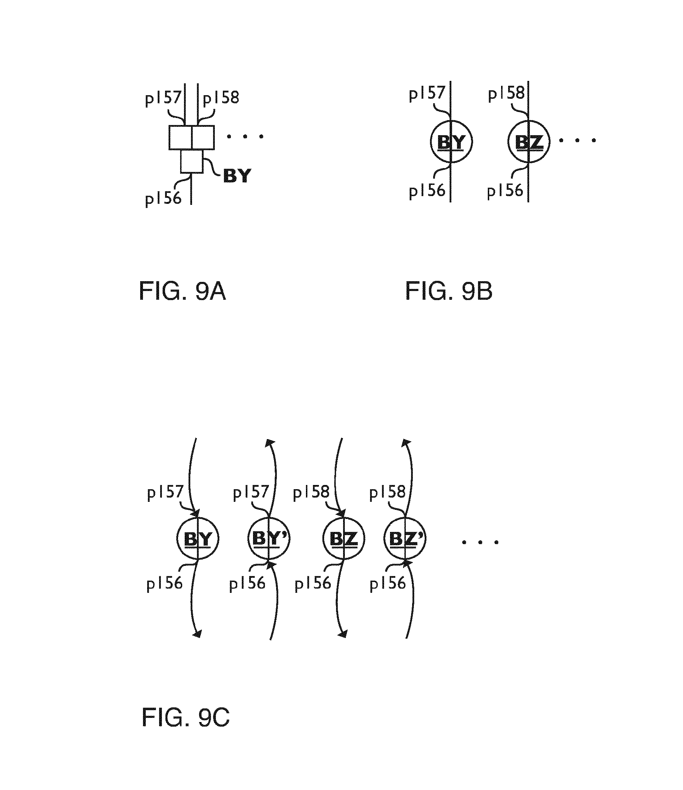

Figure 7B depicts a functional representation of the virtualized computing equipment shown in figure 7A. The functional representation of NIC coupler/splitter is explained below. it is observed that the NIC has no switching capability, but provides a fixed relationship between input port(s) and output port(s). This is depicted in figures 8A-8C and 9A-9C.

Figure 8A shows a NIC BX with PoAs p154 and p155. The functional model is shown in figure 8B. Incoming packets at PoA p154 are forwarded to PoA p155 and incoming packets at PoA p155 are forwarded to PoA p154. The representation in a directed graph of a NIC is given in figure 8C. NIC Node BX has been split into 2 nodes BX and BX' in figure 8C to represent its functionality: the NIC node is forwarding packets from a fixed input port to a fixed output port in either direction.

The NIC acting as a coupler/splitter is depicted in figures 9A-9C. Figure 9A shows a 1:2 NIC coupler/splitter BY with three PoAs p156, p157 and p158. Incoming packets at PoA p156 are forwarded to both PoA p157 and PoA p158, incoming packets at PoA p157 are forwarded to PoA p156, incoming packets at PoA p158 are forwarded to PoA p156. We model this as 2 nodes BY and BZ in the functional model in figure 9B, each providing a one-to-one forwarding relationship between PoA p156, PoA p157 and PoA p156, PoA p158 respectively. A 1:N NIC coupler/splitter will result in N individual nodes in the functional model. NIC coupler/splitter nodes BP and BQ are represented by nodes BP, BV and BQ, BW in the functional representation of figure 7B. In case a Network Interface Card would be used that provides switching capabilities it would be modeled as a physical switch node. The NIC is situated at the boundary of the computing equipment and provides connectivity between the resources outside the computing equipment and resources within the computing equipment. As explained in figure 2H, the NIC is never a source or destination node of packets. The directed graph of a NIC acting as a coupler/splitter is given in figure 9C. Similar to the NIC of figure 8A, the NIC acting as coupler/splitter of figure 9A represented by nodes BY and BZ is now represented by nodes BY, BY', BZ, BZ'. In figures 2G, 3C, 4C, 8C, 9C a directed graph representation of physical nodes is shown. The exact same representation in directed graphs applies to virtual and logical nodes as well, with this exception that virtual and logical nodes are not NIC-type nodes.

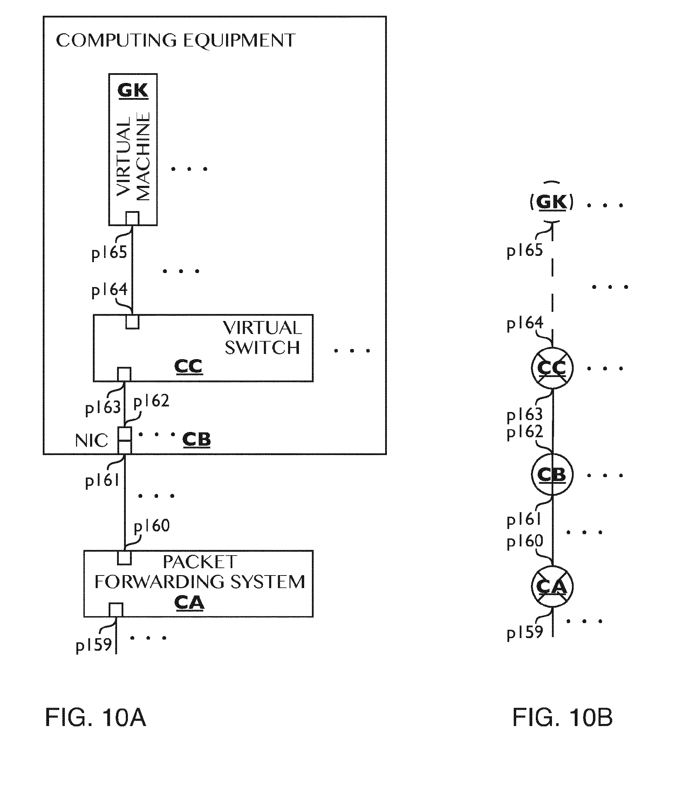

A typical deployment can contain a packet forwarding system co-located with virtualized computing equipment, as depicted in figure 10A, while the functional representation is depicted in figure 10B. In such a deployment, a packet forwarding system CA provides packet forwarding to other packet forwarding systems or computing equipment, while a virtual switch CC provides packet forwarding to virtual machines, like virtual machine GK in the shown computing equipment, and NICs, like the shown NIC CB. Examples of connections are shown via links between respective PoAs p159-p165.

A new type of equipment is proposed in this invention: a packet forwarding system that provides both connectivity to other packet forwarding systems or computing equipment, as well as packet forwarding to virtual machines, while it provides the capability to create, modify, migrate and delete virtual machines. We term this new device 'virtualized physical switch', in analogy to a 'virtualized physical server', which we have referred to as 'virtualized computing equipment' above.

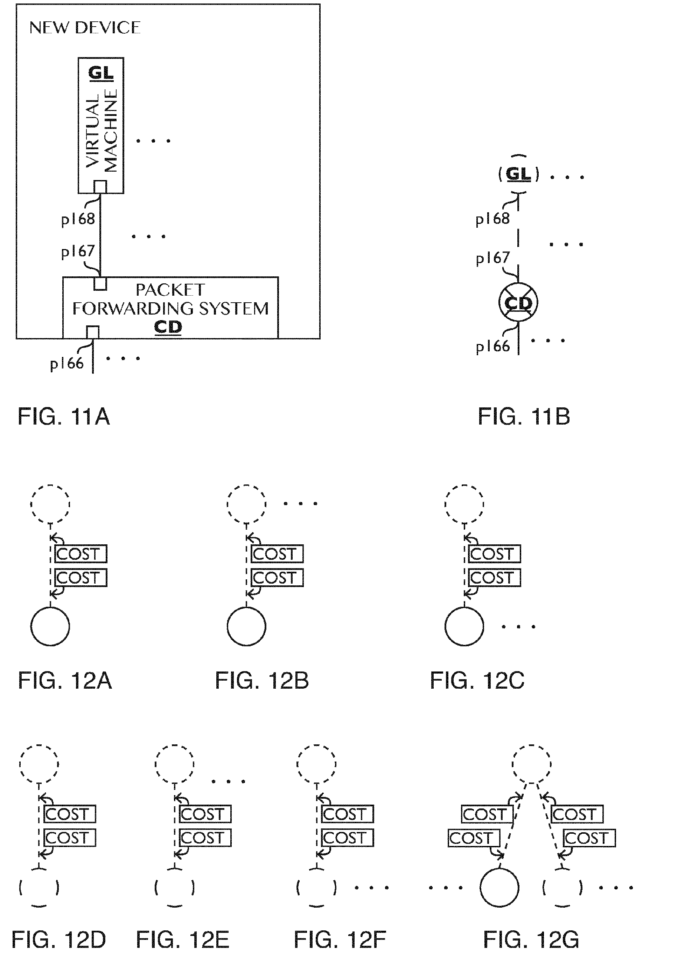

The virtualized physical switch is shown in figure 11A, while a functional representation is shown in figure 11B. As shown in figure 11A, the virtualized physical switch comprises a packet forwarding system CD having a PoA p166 to receive/transmit messages (packets) from/to external equipment. Moreover, the virtualized physical switch comprises a virtual machine GL which is connected to the packet forwarding system CD via a link attached to the virtual machine GL at a PoA 168 and to a PoA p167 at packet forwarding system CD.

The virtualized physical switch can support one or more virtual machines. The virtual machines can either provide virtual switch node or virtual host node functionality. The virtual machine GL and the packet forwarding system CD can be connected through multiple internal connections for increased redundancy and throughput. From a functional point of view, the virtualized physical switch provides both the packet forwarding capabilities of a physical forwarding device and the capability to host virtual machines of virtualized computing equipment. As such the virtualized physical switch can be regarded as the networking-equivalent of a virtualized physical server. As an example, an implementation of the virtualized physical switch could comprise of one or more hardware components (such as but not limited to Application-Specific Integrated Circuits (ASICs)) and virtualization software to provide packet switching from/to external equipment as well as from/to one or more virtual machines. Likewise virtualized computing equipment, the virtualized physical switch could have the capability to support virtual machines that are spread across multiple instances of virtualized physical switches.

The proposed system is particularly important for the deployment of virtual switch node capabilities, which include the virtual switch node capability described above to optionally provide operation(s) on the packet, such as but not limited to monitoring and/or recording and/or modifying of the incoming packet header and/or payload before forwarding the packet to one or more of it's output ports, as well as not forwarding (blocking) the packet. Today, this functionality is typically provided by dedicated hardware devices, referred to as middle-boxes, such as but not limited to firewalls, deep packet inspection devices and caching nodes. Realizing this functionality in a virtual switch node will create benefits for example but not limited to reduced equipment costs, reduced operational costs, faster provisioning of network services. In the industry this is referred to as Network Functions Virtualization (NFV).

The SDN compiler provides the relevant instructions to the virtual switch node. The NFV functions could be realized in a virtual switch node implemented in virtualized computing equipment. While doing so, however, a combination of one or more instances of virtualized computing equipment and one or more packet forwarding systems are needed at each location in the network where it is desirable to provide this functionality, as depicted in figure 10A.

Deploying a virtualized physical switch, as depicted in figure 11A results in a much more efficient approach, realizing a substantial reduction in hardware while retaining functionality. Savings include savings in physical NICs, interconnection(s) between a packet forwarding system and a virtualized computing equipment, powering, cooling and data center real estate. Furthermore, operational savings can be gained through operations and maintenance of a single device. Also, this allows the operator of the network to implement NFV on a more granular scale: rather than having NFV implemented at a limited number of locations through the usage of virtualized computing equipment, NFV could be realized at a larger number of locations through the usage of virtualized physical switches. Resulting in benefits such as reduced latency, improved utilization of the network and dedicated NFV functions tailored to a particular geographical area.

As mentioned above, we consider Software Defined Networking as the capability to define a network in a high-level specification (such as, but not limited to, a high-level programming or scripting language) and through an automated process instructing the appropriate physical and virtual networking and computing resources in accordance with this specification. By now, we have provided a functional model of the physical and virtual networking and computing resources. Now, to illustrate the present invention, we consider a logical network that can be defined in a high-level specification and is independent from physical and virtual resources.

The logical network is defined by specifying:

1. Name of the logical network
2. Name of the logical nodes of which the logical network consists
3. Adjacencies between logical nodes
4. One or more Cost Types of the logical network
5. Cost(s) of logical adjacencies between logical nodes for each Cost Type
6. Forwarding policy of logical network, which will be explained below
7. Mapping from physical and/or virtual nodes to logical nodes

The physical and/or virtual nodes as explained above are mapped to logical nodes using a 1:1, 1:N or N:1 mapping. This is depicted in figures 12A-12G, as follows:

- Figure 12A: 1:1 1 physical to logical mapping

- Figure 12B: 1:N physical to logical mapping

- Figure 12C: N:1 physical to logical mapping

- Figure 12D: 1:1 1 virtual to logical mapping

- Figure 12E: 1:N virtual to logical mapping

- Figure 12F: N:1 virtual to logical mapping

- Figure 12G: N:1 physical and virtual to logical mapping

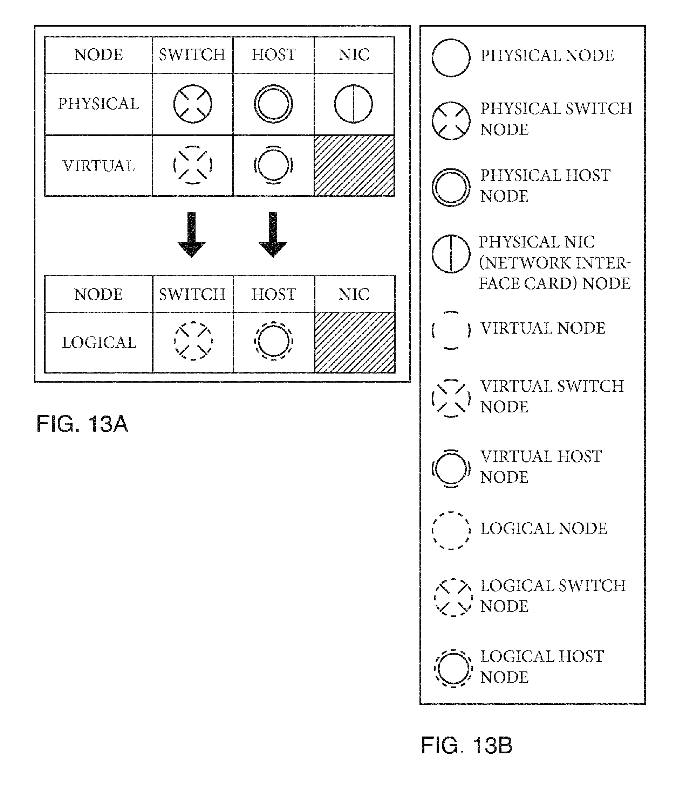

The functional representation of a logical node is a dashed circle, as depicted in figure 13B. A physical/virtual to logical mapping can have an optional cost value for each direction of the mapping.

The user of the SDN Compiler defines the logical network. The user could be, but is not limited to, a person, a network management system, a cloud management system, an application, another SDN Compiler. The logical network can consist of an arbitrary number of logical nodes, with arbitrary logical adjacencies, resulting in an arbitrary logical topology. As an example the logical network could be specified as a graph in a high-level programming language, with the physical and/or virtual node(s) to which the logical node has been mapped being an attribute of each logical node.

For the logical nodes, we use a logical name space that is independent from the namespace of the physical and virtual resources. The logical network can now be defined in terms of logical node names, which may be expressed in any suitable form with any suitable number of unique characters and are mapped to the appropriate virtual and physical resources as required. By changing this mapping, the logical network can be re-mapped to other virtual and physical resources.

1:N physical to logical mapping allows for naming a single physical resource with multiple logical names. 1:N virtual to logical mapping allows for naming a single virtual resource with multiple logical names. Please note that the logical network is independent from the physical network and virtual resources, of course with the constraint a path exists between physical and virtual resources, and as such provides an abstraction of the physical network and virtual resources.

As depicted in figure 13A we distinguish between 2 types of logical nodes:

- Logical switch node, with the same functionality of the physical and/or virtual switch node it is mapped to.

- Logical host node, with the same functionality of the physical and/or virtual host node it is mapped to.

As depicted in figure 13A, a logical switch node is the result of a mapping of physical and/or virtual switch node(s) to a logical node. A logical host node is the result of a mapping of physical and/or virtual host node(s) to a logical node. A physical NIC is not mapped to an entity in the logical network. The complete list of node types and symbols is summarized in figure 13B.

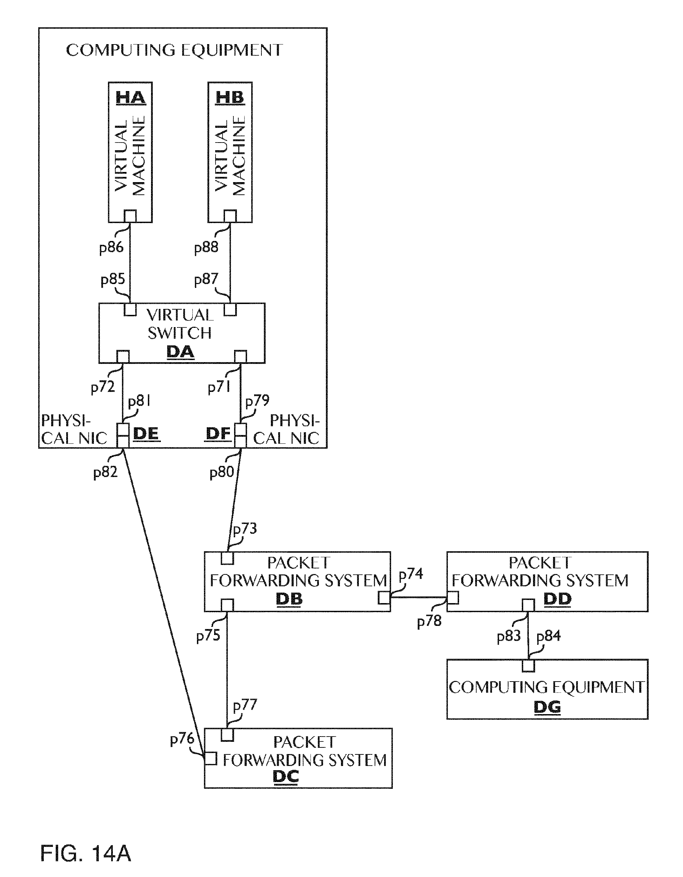

The above modeling of nodes is illustrated by the modeling of the network shown in figure 14A, consisting of 3 packet forwarding systems DB, DC, DD, one virtualized computing equipment with virtual switch DA, NICs DE and DF and virtual machines HA and HB and one non-virtualized computing equipment DG.

Packet forwarding system DB is connected via a link at a PoA p75 to a PoA p77 at packet forwarding system DC, and via a link at a PoA p74 to a PoA p78 at packet forwarding system DD. Packet forwarding system DB is connected via a link at a PoA p73 to a PoA p80 of a physical NIC DF of the computing equipment. Packet forwarding system DC is connected via a link at a PoA p76 to a PoA p82 of a physical NIC DE of the computing equipment.

Packet forwarding system DD is connected via a link at a PoA p83 to a PoA p84 at computing equipment DG.

The virtual switch DA is connected via a link at a PoA p72 to a PoA p81 at physical NIC DE. The virtual switch DA is also connected via a link at a PoA p71 to a PoA p79 at physical NIC DF.

The virtual machine HA is connected via a link at a PoA p86 to a PoA p85 at virtual switch DA. The virtual machine HB is connected via a link at a PoA p88 to a PoA p87 at virtual switch DA.

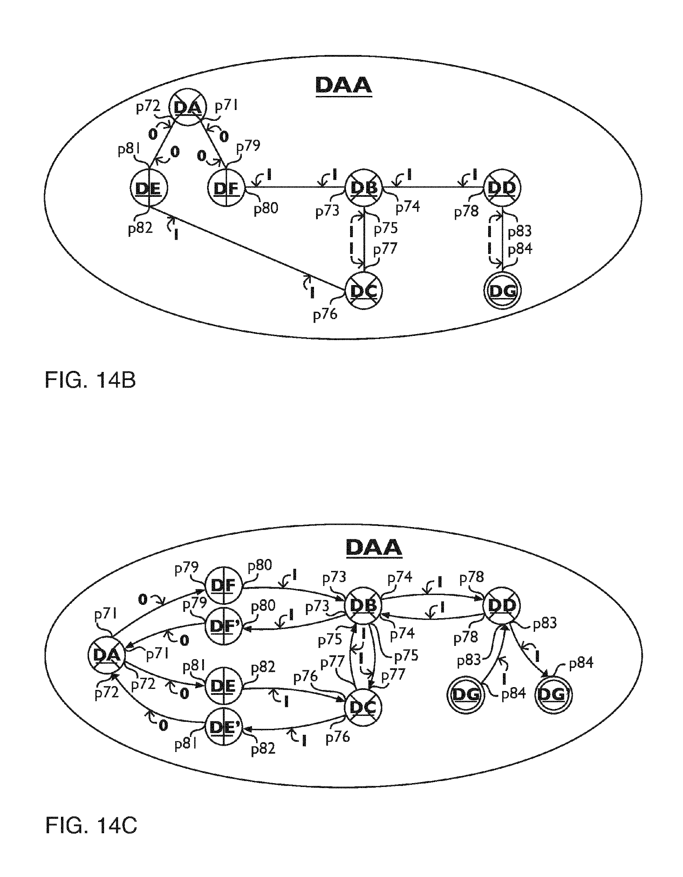

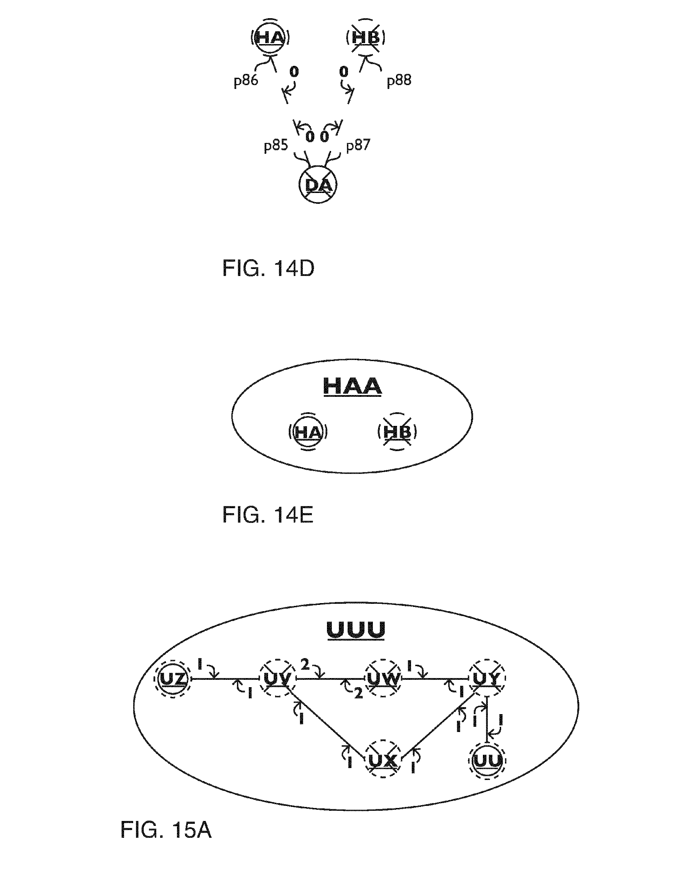

The functional representation of all physical nodes is shown in figure 14B, according to the approach explained above. In figure 14B, the weights of the various links have been added for each direction of the bi-directional link. The collection of these physical nodes is referred to as physical network DAA. Note that the virtual switch DA is a physical switch node in the functional representation of figure 14B. The weighted directed graph representation of the network of figure 14B is given in figure 14C. Figure 14D depicts the physical to virtual mapping between physical node DA and virtual nodes HA and HB, which is the only physical to virtual mapping in network DAA. Note that PoAs p85 through p88 are virtual PoAs. Also note that the cost of both mappings is zero in both directions. In the example here, virtual machine HA provides functionality of a virtual host node, while virtual machine HB provides functionality of a virtual switch node. We refer to the collection of virtual nodes HA and HB as virtual network HAA, as depicted in figure 14E. We will use this example to explain the mapping of a logical network onto the virtual and physical resources.

Figure 15A depicts an example logical network UUU, consisting of logical nodes UU, UV, UW, UX, UY and UZ. The name of the logical node is used to make forwarding decisions upon. Please note that the logical node itself is named, not its interfaces. In analogy with the physical network, we define a logical network (identified with UUU in figure 15A) as a collection of logical nodes. Logical nodes are interconnected by logical links (denoted by a solid line). In case a logical link is bidirectional, a logical link creates a pair of adjacencies between a pair of logical nodes. In case a logical link is unidirectional, a logical link creates a single adjacency between a pair of physical nodes. The set of logical nodes combined with the set of logical links determines the logical topology of the network. Each logical link has one or multiple cost types and cost value(s) associated with each cost type. Each bidirectional logical link has 2 cost values for each cost type, one for each direction. Each unidirectional logical link has 1 cost value for each cost type. The cost value of a logical link in a particular direction is shown closest to the logical node from which the packets originate for that particular direction.

While a logical link denotes the adjacency-relationship(s) between a pair of logical nodes, a logical path denotes a logical route a packet follows from a logical source node to a logical destination node, in case of unicast networking. In case of multi-cast or broadcast networking there are logical path relationships between a single logical source node and multiple logical destination nodes. Logical paths can have multiple cost types in each direction with typically a cost value equal to the sum of the cost values of that particular cost type in that particular direction of the logical links it consists of.

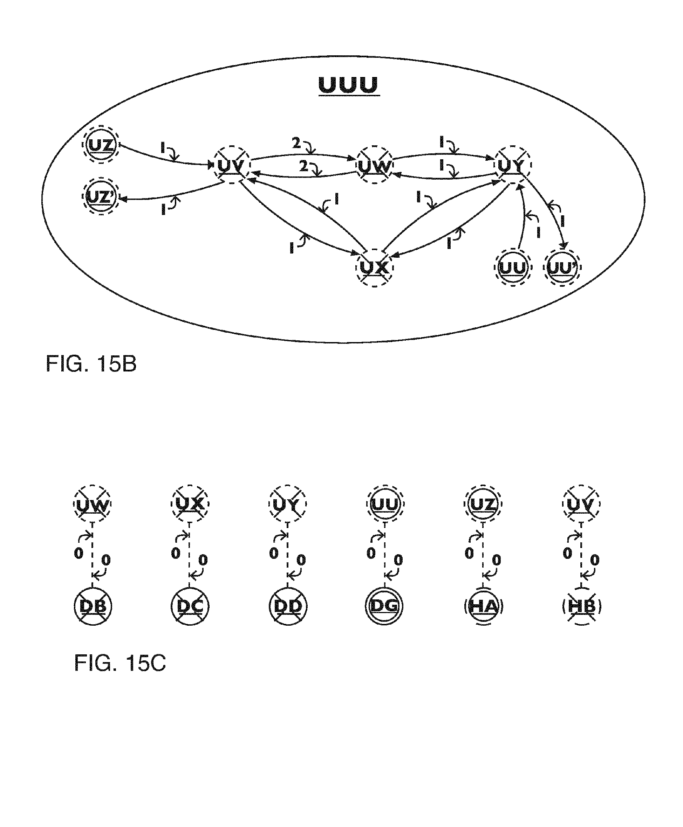

A logical path is a sequence of physical PoAs and/or virtual PoAs through which the packet traverses from logical source node to logical destination node. Here we have arrived at an important relationship: a relationship between logical source and logical destination nodes and a path described in terms of physical and virtual PoA's. This will allow us to define a network in logical node names and translate (compile) the defined network into instructions in terms of physical and/or virtual PoAs for the physical and/or virtual networking and/or computing resources. The weighted directed graph representation of logical network UUU is shown in figure 15B. The mapping between physical and virtual nodes to logical nodes is depicted in figure 15C. Please note that the cost of all mappings between the physical/virtual nodes and the logical nodes is zero.

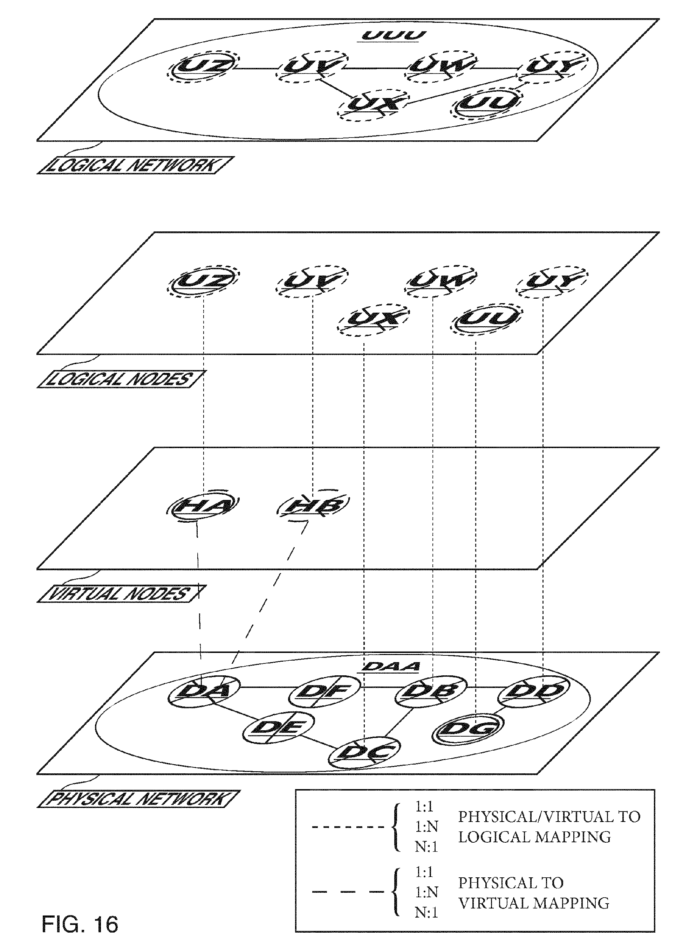

Figure 16 summarizes the relationship between physical, virtual, logical nodes and physical and logical networks for the example given in figures 14A-14E and 15A-15C. At the bottom of figure 16 physical network DAA is shown. The physical network DAA comprises the nodes DA through DG with their physical links and physical PoAs as shown. Two virtual machines named HA (virtual host node) and HB (virtual switch node) are mapped to physical node DA (1:2 physical to virtual mapping). Logical nodes UU, UV, UW, UX, UY, UZ are mapped to respectively physical node DG, virtual node HB, physical nodes DB, DC, DD and virtual node HA through a 1:1 physical and/or virtual to logical mapping. We will refer to physical and/or virtual to logical mapping as 'physical/virtual to logical mapping'. The logical network UUU comprises the logical nodes UU through UZ with the logical links as shown in figure 15.

As physical NIC nodes do not send packets of which it is the source node or receiving packets of which it is the destination node (see figure 2H), no physical/virtual to logical mapping can be done on NIC nodes. Hence, node DE and node DF being physical NIC nodes, no physical/virtual to logical mapping is done for node DE and node DF. Please note that no physical/virtual to logical mapping is done on physical node DA. This is a choice for this particular example, there could also have been a physical/virtual to logical mapping on physical node DA. This illustrates that also a physical/virtual to logical mapping need not necessarily be done on a physical or virtual switch or host node. This example only shows 1:1 physical/virtual to logical mapping to keep the example relatively simple. In a similar way 1:N or N: physical/virtual to logical mapping could have been used. In general, the number of nodes in a logical network is independent from the number physical and virtual nodes it was mapped to. Note that the topology of logical network UUU differs from the topology of physical network DAA even between nodes that are mapped with a 1:1 physical/virtual to logical mapping. E.g. in logical network UUU there is no link between logical node UW and logical node UX, while there is a link between physical node DB and physical node DC in physical network DAA, while logical node UW is mapped to physical node DB and logical node UX is mapped to physical node DC. Also, in logical network UUU there is a link between logical node UX and logical node UY, while there is no link between physical node DC and physical node DD in physical network DAA, while logical node UX is mapped to physical node DC and logical node UY is mapped to physical node DD. This illustrates an important property of a logical network: the links in the logical network are independent from the links in the physical network and the mapping from physical to virtual nodes.

Furthermore, the cost of the adjacencies in the logical network can differ from the cost of the same adjacencies in the physical network. This allows for forwarding of packets along a particular path in the logical network that is different from the forwarding policy specified in the physical network. This is illustrated by using a cost value of 2 in both directions on the link between logical node UV and logical node UW (cf. figure 15B). The ability to forward packets along a particular path in the logical network that is different from the forwarding policy specified in the physical network is very useful when virtual machines acting as virtual switch nodes are used to provide operation(s) on the packet, such as but not limited to monitoring and/or recording and/or modifying of the incoming packet header and/or payload, or not forwarding (blocking) the packet. By selecting the appropriate cost values for the adjacencies in the logical network and applying a forwarding policy within the logical network, paths can be created between logical source and logical destination nodes that traverse particular virtual machine acting as virtual switch nodes performing certain functions other than forwarding on the packet.

For completeness, we summarize the physical, virtual and logical elements.

Physical elements:

- Physical network

- Physical switch node

- Physical host node

- Physical NIC node

- Physical PoA

- Physical link

- Physical path

Virtual elements:

- Virtual network

- Virtual switch node

- Virtual host node

- Virtual PoA

Logical elements:

- Logical network

- Logical switch node

- Logical host node

- Logical link

- Logical path

The relationship between the adjacencies in a network and the paths in a network is determined by the forwarding policy of the particular network. In essence, the forwarding policy of a network provides a translation of the adjacencies in the network to a set of forwarding paths. Examples of typical policies, but not limited to, used in networking are:

• Shortest Path First (SPF)

• Firewall (no path allowed)

• Specified Path (specifying all nodes in a path)

• Load-Balancing

Multiple policies can be combined into an overall policy.
As we define the network in terms of logical components, packet forwarding decisions will be based on logical node names. Physical and virtual nodes are named solely for the purpose of identifying physical and virtual resources. Never is the physical or virtual node name used in a forwarding decision.

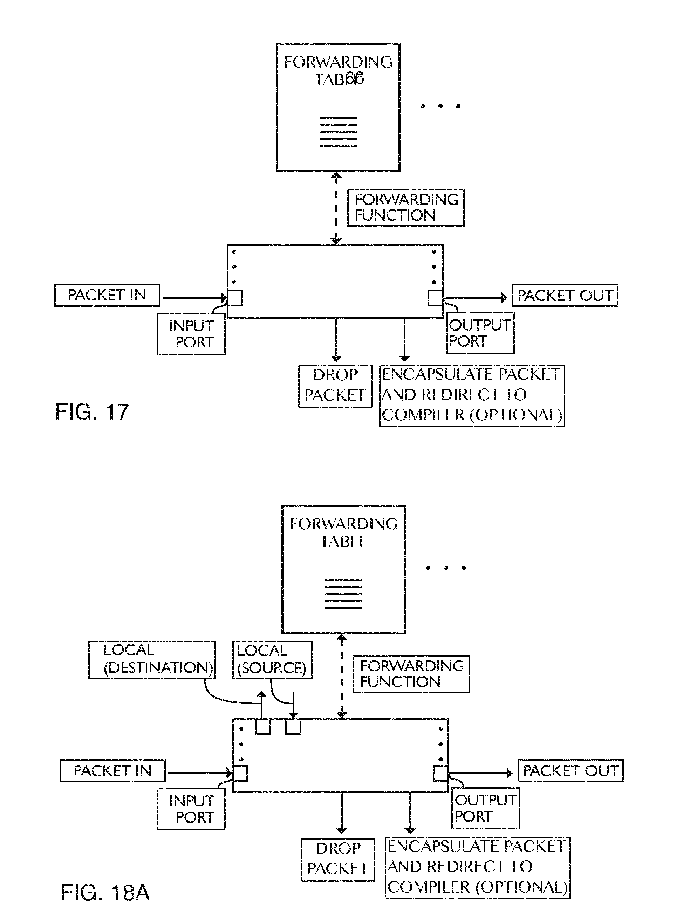

Figure 17 depicts packet forwarding in a packet forwarding system. Packet forwarding is described by:

$$\text{output port} = \text{forwarding function f (logical source node, logical destination node,}$$
$$\text{input port, load-balancing identifier)}$$

in which:

- Forwarding function f: Local forwarding function provided by a lookup against the forwarding table(s)

- Logical source node: Logical node from which the packet is originating, as stated in the header of the incoming packet.

- Logical destination node: Logical node for which the packet is destined, as stated in the header of the incoming packet.

- Input Port: Physical or virtual PoA at which the packet enters the forwarding node

- Output Port: Physical or virtual PoA to which the packet is forwarded to.

- Load-Balancing identifier: optional identifier for load-balancing purposes.

Each entry in the forwarding table contains: logical source node, logical destination node, input port, optional load-balancing identifier, output port. In case a particular element is not relevant for the forwarding decision (e.g. logical source node) a '*' (asterisk) is used as a wildcard symbol. Alternative terminology for a 'forwarding table' is a 'flow table', e.g. the OpenFlow specification uses the terminology 'flow table'.

In case of a unicast each entry specifies a single output port to which the packet is forwarded. In case of multicast or broadcast the incoming packet is forwarded to multiple output ports.

The local forwarding function f provides the relationship between logical node names (logical source node, logical destination node) and the physical and/or virtual output port to forward to. This relationship is crucial as it allows for the definition and creation of a network in terms of logical components, translating into physical and virtual output ports. Also, packets can be dropped or can optionally be encapsulated and redirected to the SDN Compiler.

The forwarding behavior of the three different types of nodes we have considered, i.e. switch node, host node and NIC node, are depicted in figures 18A, 18B, 19, 20A-20C respectively. Figure 18A depicts a physical or virtual switch node with the capability to:

a) Send packets of which it is the source node to any of the output ports based on the forwarding function f

b) Receive packets of which it is the destination node based on the forwarding function f

c) Forward an incoming packet received on any of the input ports to any of the output ports (including the port on which it was received) based on the forwarding function f.

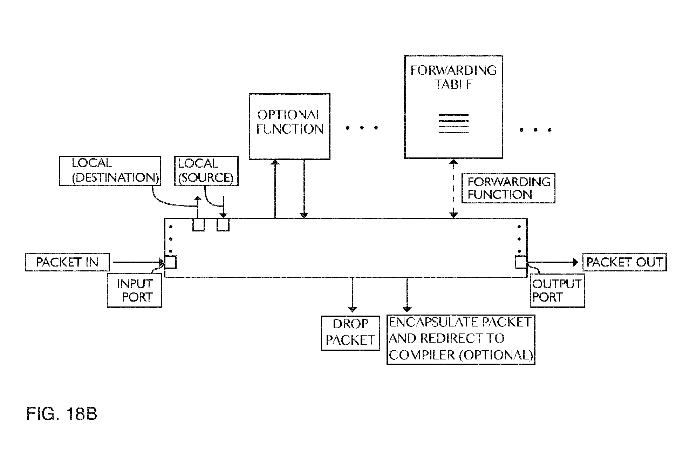

In case no match is found in the forwarding table lookup the packet is dropped and/or optionally encapsulated and redirected to the SDN compiler. Figure 18B depicts a switch node providing the capabilities of the switch node of figure 18A and additionally the ability to:

d) Optionally provide operation(s) on the packet, such as but not limited to monitoring and/or recording and/or modifying of the incoming packet header and/or payload before forwarding the packet to one or more of it's output ports or not forwarding (blocking) the packet. This is referred to as an 'optional function' in figure 18B. A switch node can perform multiple optional functions.

Please note although at a) and b) above packets are not forwarded, we still refer to a 'forwarding function', to have a single function to refer to.

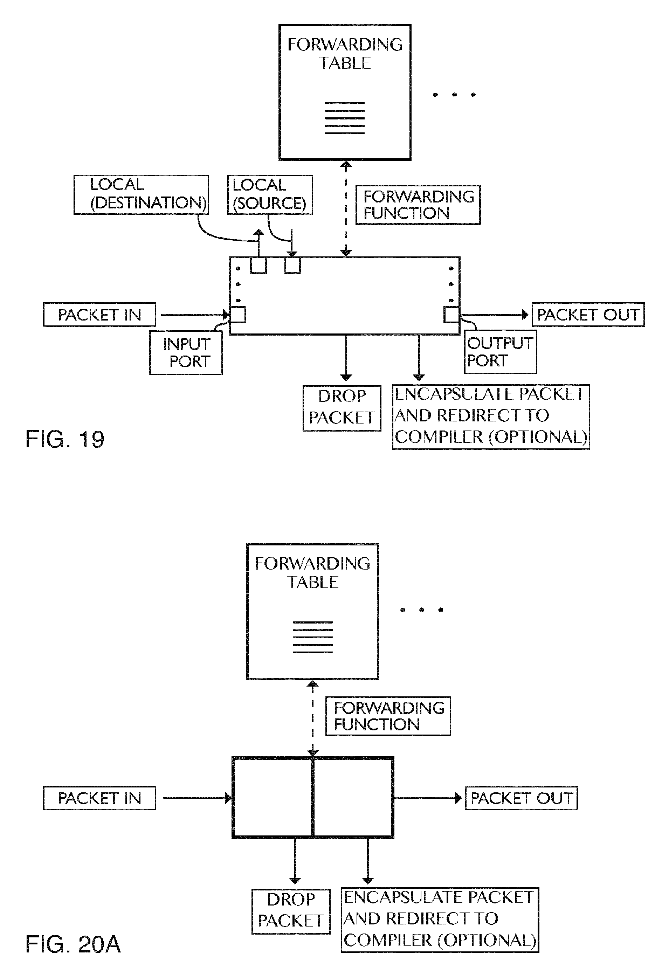

Figure 19 depicts a physical or virtual host node with the capability to:

a) Send packets of which it is the source node to any of the output ports based on the forwarding function f
b) Receive packets of which it is the destination node based on the forwarding function f

In case no match is found in the forwarding table lookup the packet is dropped and/or optionally encapsulated and redirected to the SDN compiler. The physical or virtual host node does not provide any forwarding of packets. We will however refer to the function f as a forwarding function also in case of a host node to be consistent in naming of this function irrespective of node type. In case of a host node the forwarding function f specifies to which output port packets originating from the host node destined for a particular node should be sent. Also it specifies whether incoming packets should be received or dropped.

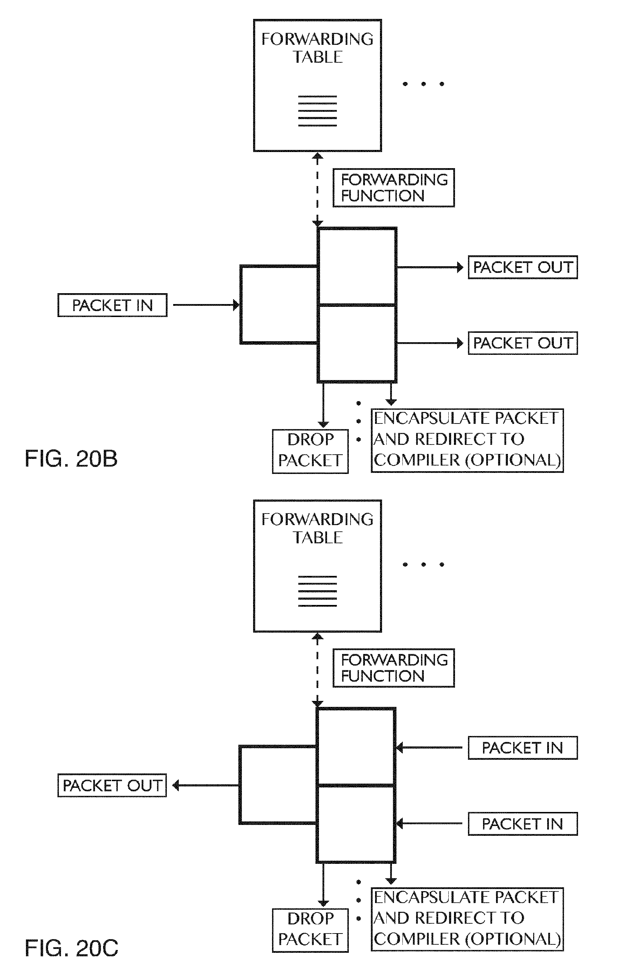

Figures 20A, 20B, 20C depict a physical NIC node forwarding an incoming packet received on a particular input port to a particular output port, in a fixed relationship between input and output ports. Figure 20A shows a 1:1, figure 20B a 1:N and figure 20C a N:1 relationship. Packets are forwarded according to the forwarding table, which is essentially a filter table in case of a NIC. Also, packets can be dropped or can optionally be encapsulated and redirected to the SDN Compiler.

In an implementation, some nodes might be limited in functionality. As an example a NIC might not have the ability to encapsulate the packet and redirect it to the SDN Compiler. Although this provides less functionality in the overall system, this is a working implementation. Also as an example, a NIC might not have the ability to filter packets and will forward all packets irrespective of the source address in the packet header, the destination address in the packet header, the input port and/or the optional load balancing identifier. Although this results in less security, this is a working implementation. Also, as an example a host might not support a forwarding table created by the SDN Compiler at all, but receive all incoming traffic and send all traffic out on a single output port (PoA). Modeling this host with this single PoA in the SDN Compiler, results in a working implementation.

In order to create a method to be performed by the SDN compiler, the above model is now described in terms of matrices. We distinguish between the following 6 matrix types:

- Adjacency matrices with PoA denoted by $A^{PoA}$: describing adjacency relationships between nodes expressed in PoAs

- Forwarding matrices with PoA denoted by $F^{PoA}$: describing forwarding (path) relationships between nodes expressed in PoAs

- Mapping matrices with PoA denoted by $M^{PoA}$: describing mapping relationships between nodes expressed in PoAs

- Adjacency matrices with cost value denoted by $A^{Cost}$: describing adjacency relationships between nodes expressed in adjacency cost value

- Forwarding matrices with cost value denoted by $F^{Cost}$: describing forwarding (path) relationships between nodes expressed in path cost value

- Mapping matrices with cost value denoted by $M^{Cost}$: describing mapping relationships between nodes expressed in mapping cost value

We refer to the first three matrices as PoA-type matrices. We refer to the last three matrices as Cost-type matrices.

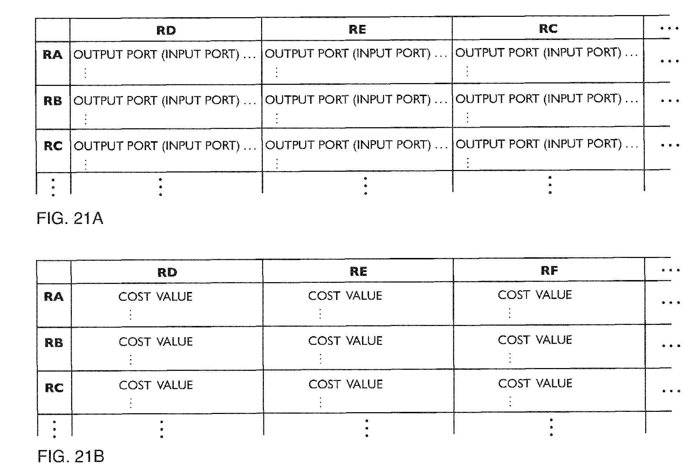

All matrices have rows and columns and are indexed by node names in both the row (index i) and the column (index j) direction. Index i indicates the source node while index j indicates the destination node in the adjacency, path or mapping relationship the matrix represents. In case of an adjacency matrix and in case of a forwarding matrix the rows and columns are indexed by the same set of nodes. The order of the nodes indexing the rows can be different than the order of the nodes indexing the columns however. In case of a mapping matrix the set of nodes indexing the rows can either be different from or be identical to the set of nodes indexing the columns. A generic representation of a PoA-type adjacency and forwarding matrices is depicted in figure 21A. Each element of the matrix contains one or more rows, with on each row a sequence of PoAs of the form 'Output Port (Input Port) ...' of arbitrary length. In case of a PoA-type adjacency matrix, this sequence of PoAs denotes the adjacency from the node indexed by row i to the node indexed by column j. Multiple adjacencies between node i and node j result in multiple rows in element i, j, each representing an adjacency. In case no adjacency exists between node i and node j, the value of element i,j in a PoA-type adjacency matrix is 0 (zero). In case a node has no adjacency with itself, the value of the corresponding element of the PoA-type adjacency matrix is 0 (zero).

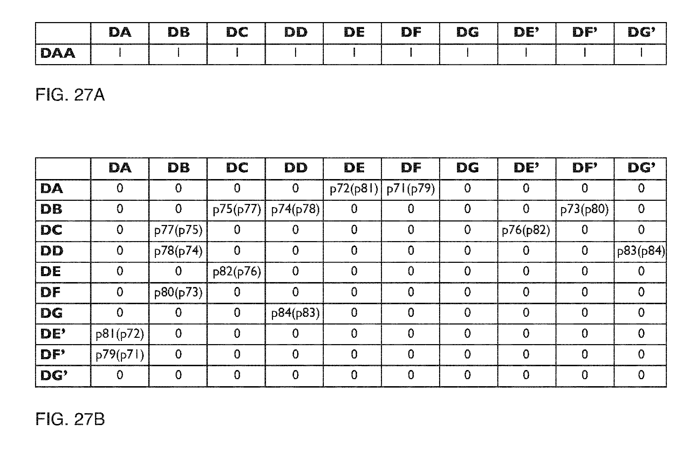

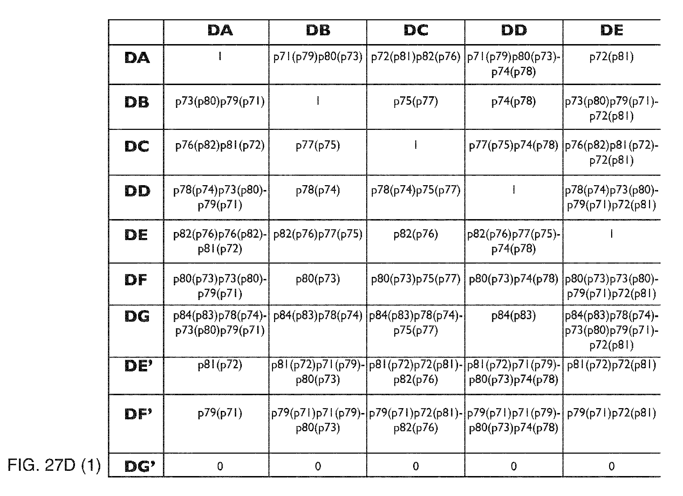

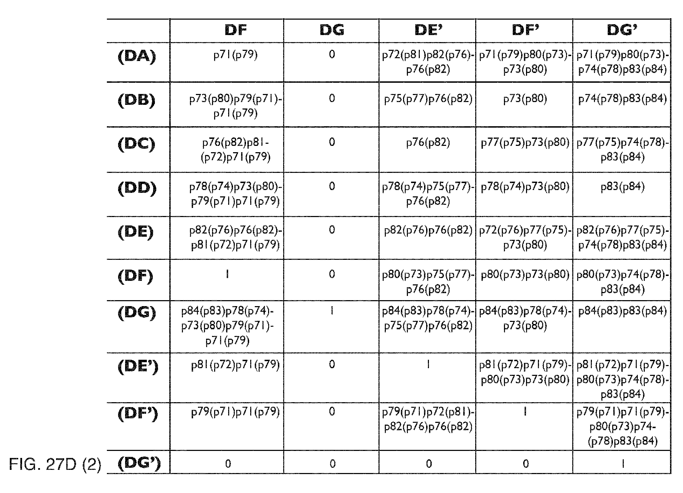

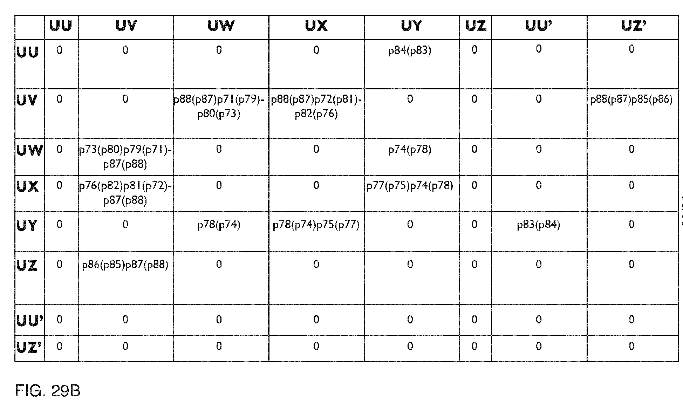

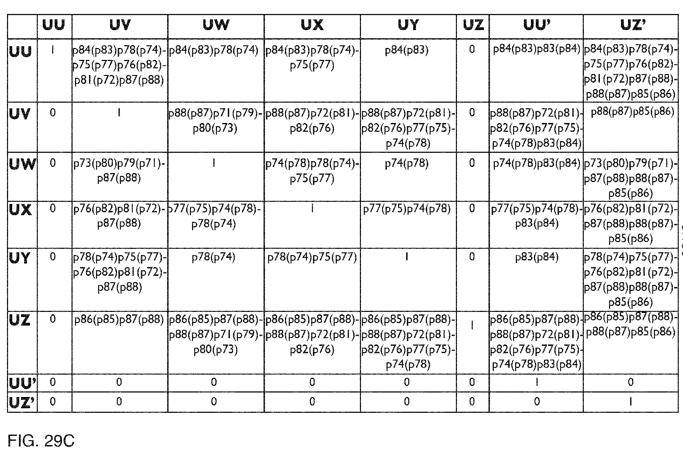

In case of a PoA-type forwarding matrix, this sequence of PoAs denotes the path from source node i to destination node j. Multiple paths between node i and node j result in multiple rows in element i, j, each representing a path. In case no path exists between node i and node j, the value of element i,j is 0 (zero). As there is no path needed for a node to get to itself, the corresponding value of cell i,j in case index i and index j identify the same node of a PoA-type forwarding matrix has value 1 (one), indicating no output port (input port) is needed. Examples of adjacency PoA-type matrix are shown in figures 27B and 29B. Examples of forwarding PoA-type matrix are shown in figures 27D and 29C.

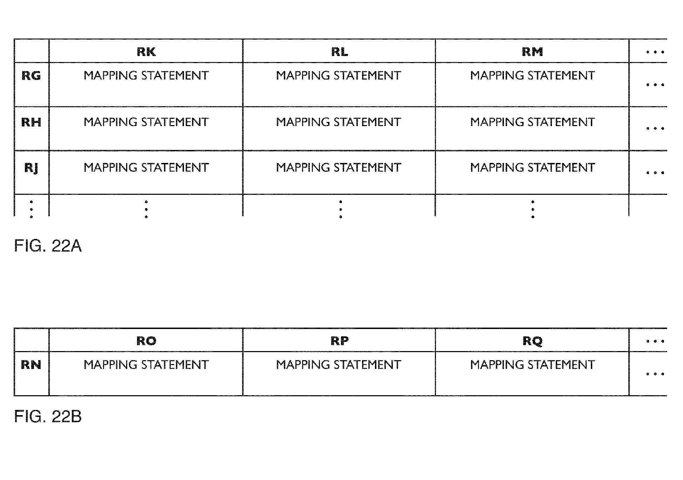

A generic representation of a PoA-type mapping matrix is given in figure 22A. The mapping statement contains either one of the following values:

- Output Port (Input Port)

- 1 (one)

- 0 (zero)

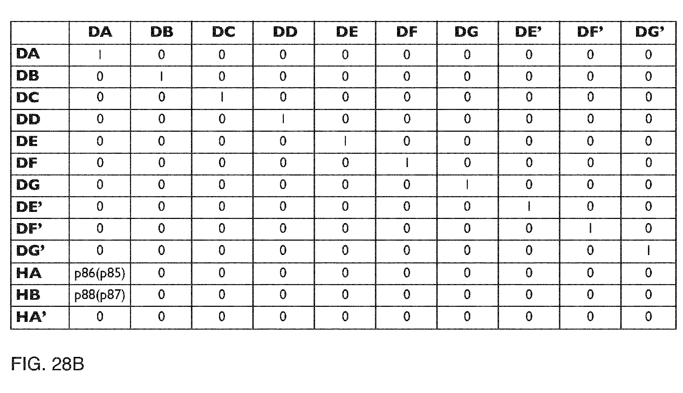

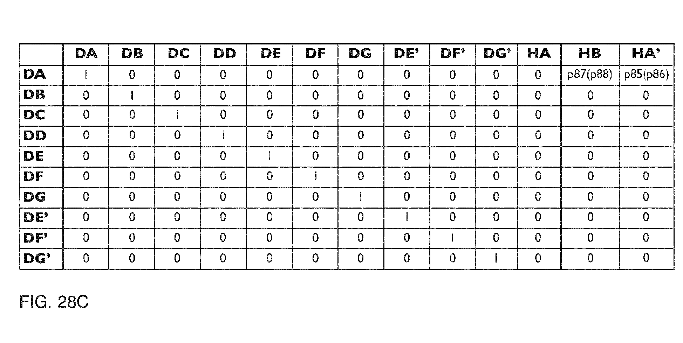

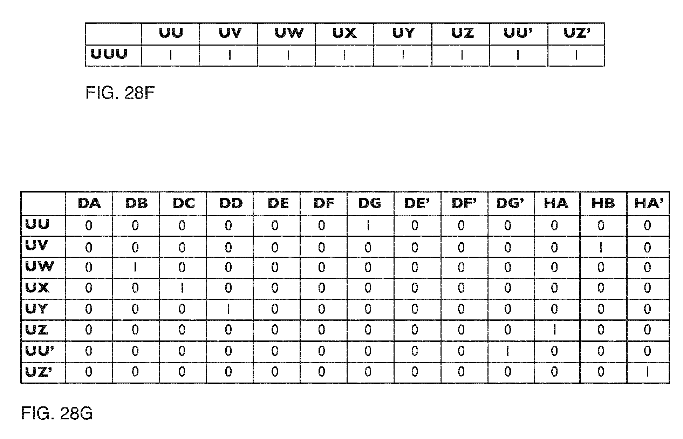

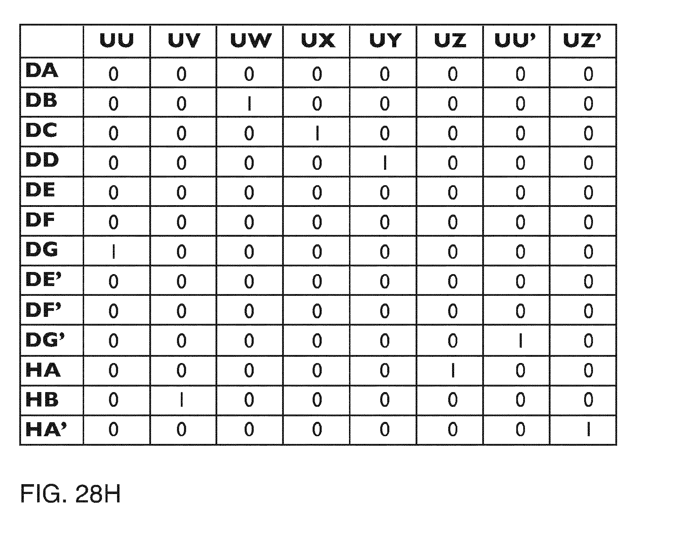

The value 'Output Port (Input Port)' indicates a mapping between the node indexed by row i and the node indexed by column j, with 'Output Port' of node i and 'Input Port' of node j. The value '1' indicates a mapping between the node indexed by row i and the node indexed by column j, without any specified PoAs. The value '0' indicates no mapping between the node indexed by row i and the node indexed by column j. Examples of PoA-type mapping matrices are shown in figures 28B, 28C, 28G, 28H.

The PoA-type matrices are accompanied by Cost-type matrices. The indexing of the rows and columns of the Cost-type matrix is identical to the indexing of rows and columns of the corresponding PoA-type matrix. A generic representation of Cost-type adjacency and forwarding matrices is depicted in figure 21B. The adjacency cost matrix contains the cost values of the adjacencies specified in adjacency PoA matrix it accompanies. Each PoA-type adjacency matrix can have one or more accompanying Cost-type adjacency matrices each representing a particular Cost Type. In case no adjacency exists between node i and node j, the value of element i,j in a Cost-type adjacency matrix is ∞ (infinity). Multiple adjacencies between node i and node j result in multiple rows in element i, j each representing a cost value corresponding to the particular row in element i, j of the PoA-type adjacency matrix it accompanies. In case a node has no adjacency with itself, the value of the corresponding element of the Cost-type adjacency matrix is ∞ (infinity).

The forwarding Cost matrix contains the cost values of the paths specified in the forwarding PoA matrix it accompanies. Each PoA-type forwarding matrix can have one or more accompanying Cost-type forwarding matrices each representing a particular Cost Type. In case no path exists between node i and node j, the value of element i,j in a Cost-type forwarding matrix is ∞ (infinity).

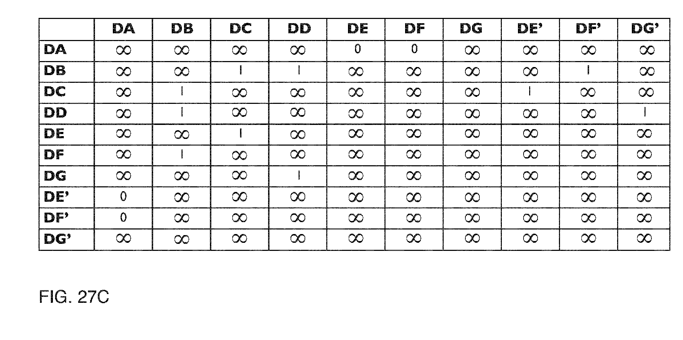

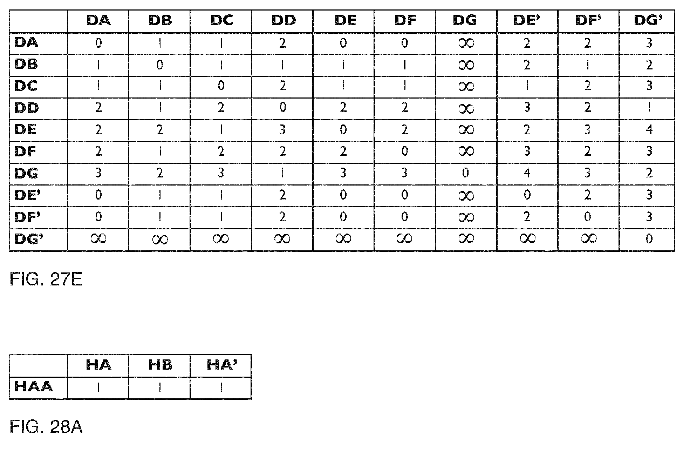

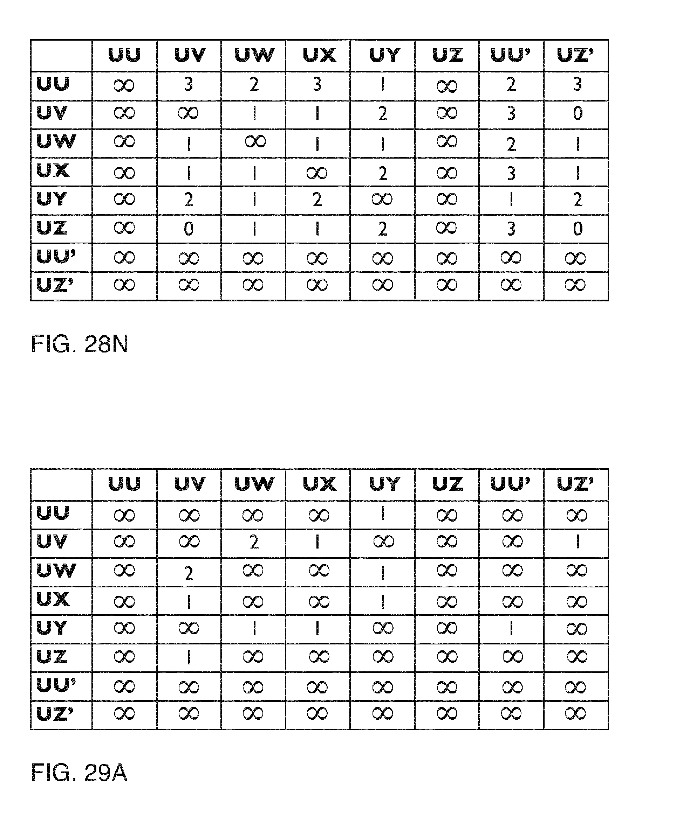

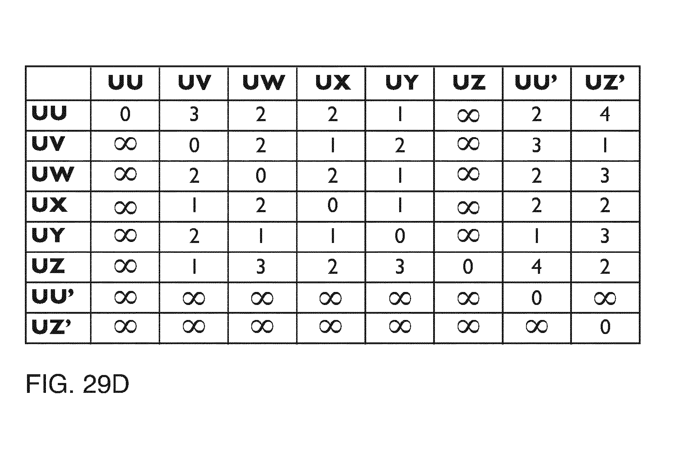

Multiple paths between node i and node j result in multiple rows in element i, j, each representing a cost value corresponding to the particular row in element i, j of the PoA-type forwarding matrix it accompanies. As there is no path needed for a node to get to itself, the corresponding element of a Cost-type forwarding matrix is 0 (zero), indicating a cost of zero. Examples of adjacency Cost-type matrix are shown in figures 27C and 29A. Examples of forwarding Cost-type matrix are shown in figures 27E and 29D.

A generic representation of a Cost-type mapping matrix is given in figure 22A. Each PoA-type mapping matrix can have one or more accompanying Cost-type mapping matrices each representing a particular Cost Type. The mapping statement contains either one of the following values:

- Cost value

- ∞ (infinity)

The Cost value indicates a mapping between the node indexed by row i and the node indexed by column j, with Cost value being the cost value of the particular cost type the particular Cost-mapping matrix represents. The cost value cannot be infinity. The Cost-mapping statement value '∞' (infinity) indicates no mapping between the node indexed by row i and the node indexed by column j.

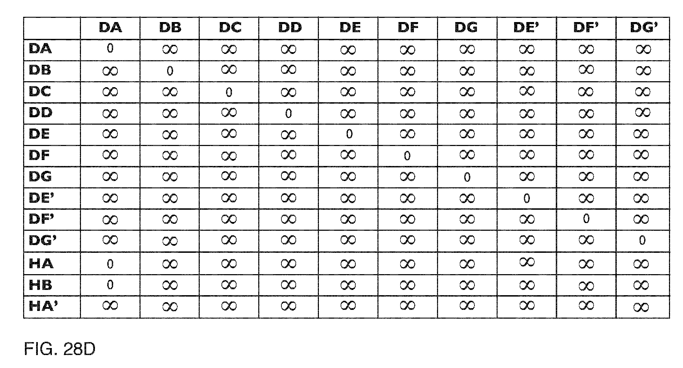

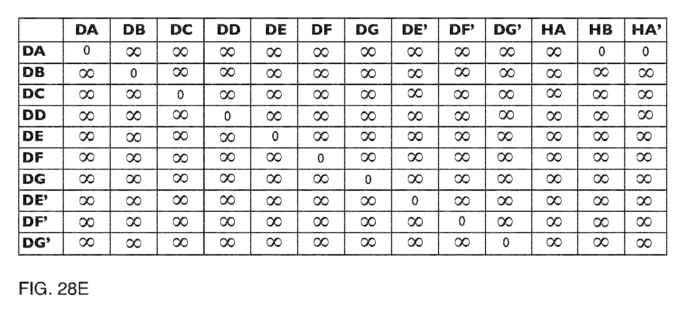

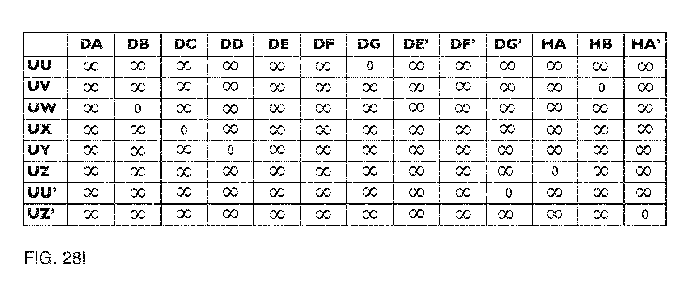

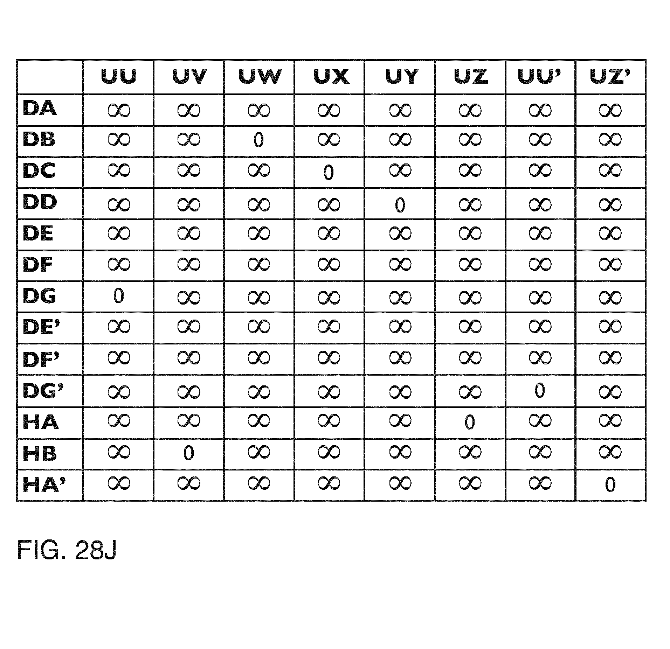

Examples of Cost-type mapping matrices are shown in figures 28D, 28E, 28I, 28J.

Another type of mapping matrix is introduced as well providing a mapping between nodes and networks. A generic representation of this type of mapping matrix is given in figure 22B. The single row of this type of matrix is indexed by a network name and the columns (index j) are indexed by one or more node names. The value of element i,j is:

- 1 (one) in case the node indexed by j is part of network i

- 0 (zero) in case the node indexed by j is not part of network i

We will refer to this matrix as network-mapping matrix. The network-mapping matrix is a PoA-type matrix. Examples of mapping matrices between a network and nodes are shown in figures 27A, 28A 28F.

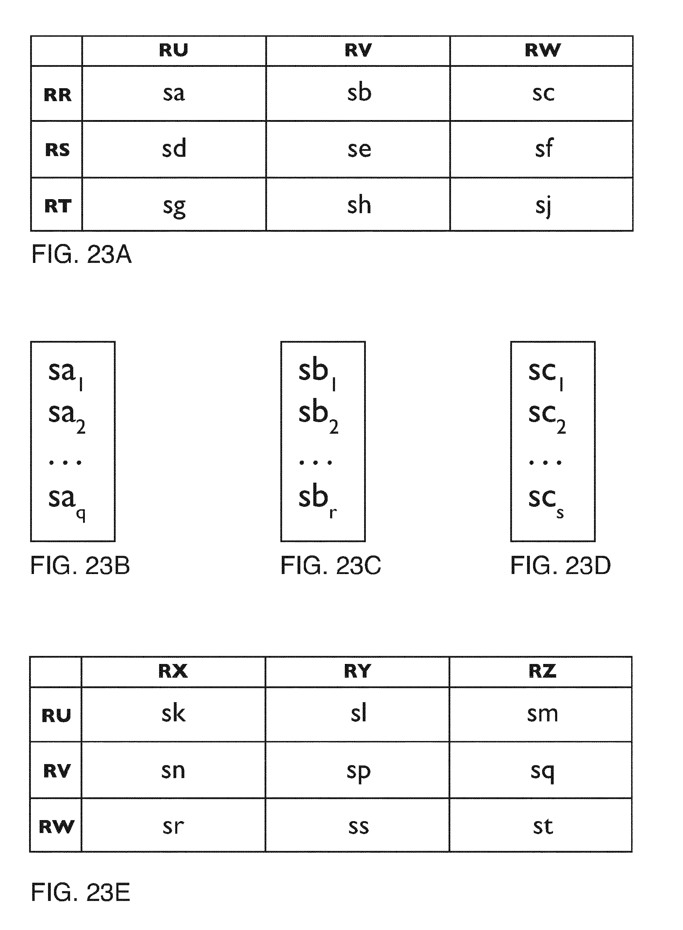

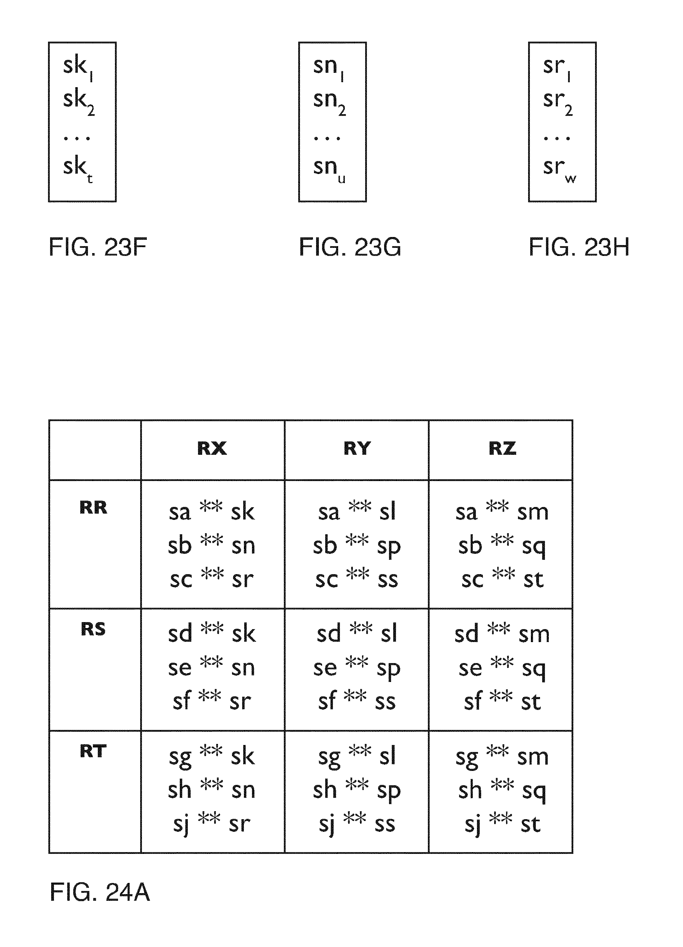

The main operation that will be performed on the above matrices is matrix multiplication. The operation bears similarities to standard matrix multiplication, in which the elements of a row of the first matrix are multiplied with the corresponding elements in a column of the second matrix. The matrix multiplication on PoA-type and Cost-type matrices is explained in figures 23A-23H and 24A-24M. The matrices involved in the matrix multiplication need to be of the same type, either PoA-type or Cost-type matrices.

We first consider matrix multiplication for PoA-type matrices. Two matrices RRA and RRB are defined in figures 23A and 23C respectively. For the purpose of explaining matrix multiplication these matrices are 3 by 3 matrices, however in general matrices of arbitrary number of rows and columns can be used. The columns of the first matrix and the rows of the second matrix in the matrix multiplication should be equal in number and be indexed by the same set of nodes in the same order. Matrix RRA is a PoA-type matrix, and matrix RRB is a PoA-type matrix. Each element of RRA consists of one or more rows as depicted in figure 23B for element 'sa' consisting of q rows, as depicted in figure 23C for element 'sb' consisting of r rows, as depicted in figure 23D for element 'sc' consisting of s rows. Each element of RRB consists of one or more rows as depicted in figure 23F for element 'sk' consisting of t rows, as depicted in figure 23G for element 'sn' consisting of u rows, as depicted in figure 23H for element 'sr' consisting of w rows. In case an element consists of two or more rows, the value of any of these rows cannot be 0 (zero).

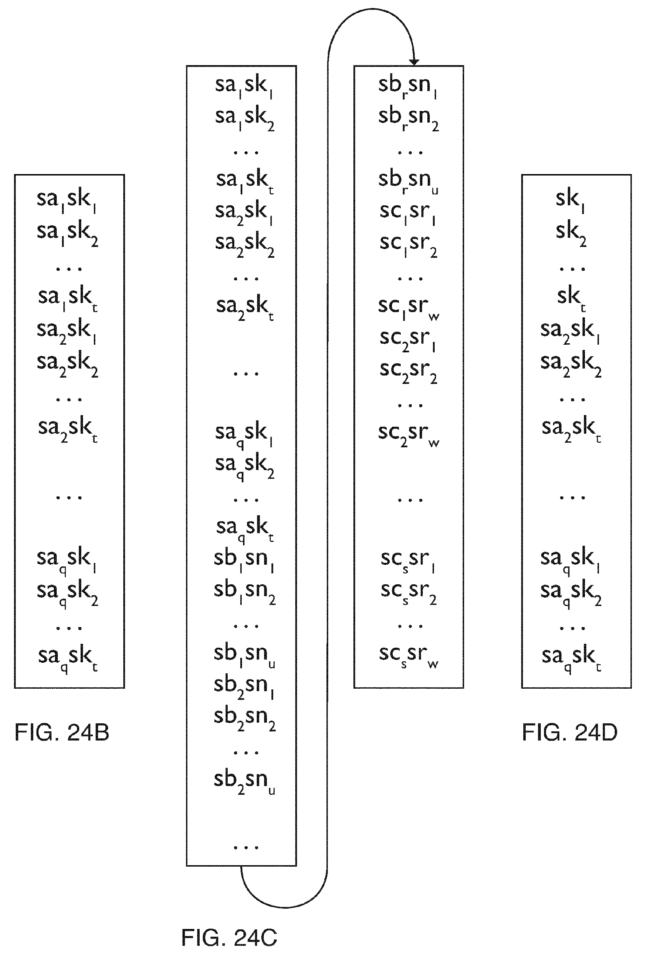

Matrix multiplication RRC=RRA•RRB (in which • denotes the matrix multiplication operation as defined in this section) results in matrix RRC depicted in figure 24A. Basically, the standard matrix multiplication process is used in which the elements of a row of the first matrix are multiplied with the corresponding elements in a column of the second matrix, but a multiplication of elements resulting from the standard matrix multiplication operation is changed to a '**' operation and a summation of elements resulting from the standard matrix operation is resulting in a new row. In matrix RRC the first row of element (RR,RX) is 'sa ** sk'. The operation 'sa ** sk' is resulting in the row elements depicted in figure 24B. In essence, the sequence of PoAs of the various rows of 'sa' are appended by the sequence of PoAs of the various rows of 'sk' in all possible combinations. In the same way, the second row 'sb ** sn' and the third row 'sc ** sr' of element (RR,RX) of RRC are calculated. The resulting rows of 'sa ** sk', sb ** sn' and 'sc ** sr' are combined into a single element consisting of all the rows, as depicted in figure 24C for element (RR,RX) of matrix RRC.

In case a matrix element of RRA or RRB contains the value 0 (zero), one of the operands in the '**' operation involving this matrix element is 0 (zero). When one of the operands in the '**' operation is 0 (zero), the '**' operation results in a single row with value 0 (zero). All values 0 (zero) are removed from the matrix resulting from the matrix multiplication, unless the resulting matrix element consists of one or more rows with value 0 (zero) in all these rows, in which case the matrix element is set to a single row with value 0 (zero).

In case a matrix element of RRA or RRB contains the value 1 (one), one of the operands in the '**' operation involving this matrix element is 1 (one). When one of the operands in the '**' operation is 1 (one), the '**' operation results in the value of the other operand.

For any row of 'sa' with value 1 (one), the resulting value of 'sa ** sk' involving that row equals the value of the respective rows of 'sk'. For any row of 'sk' with value 1 (one), the resulting value of 'sa ** sk' involving that row equals the value of the respective rows of 'sa'. This is illustrated in figure 24D in case 'sa$_1$' has value 1 (one).

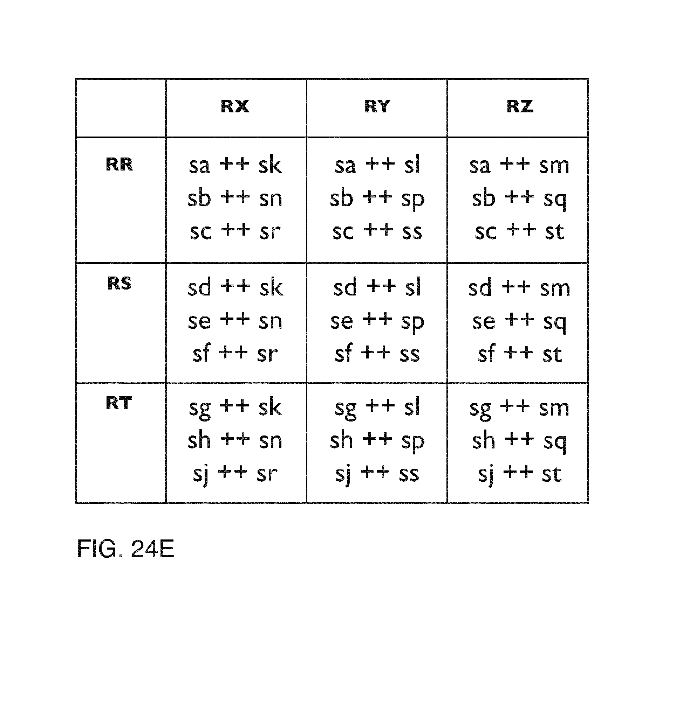

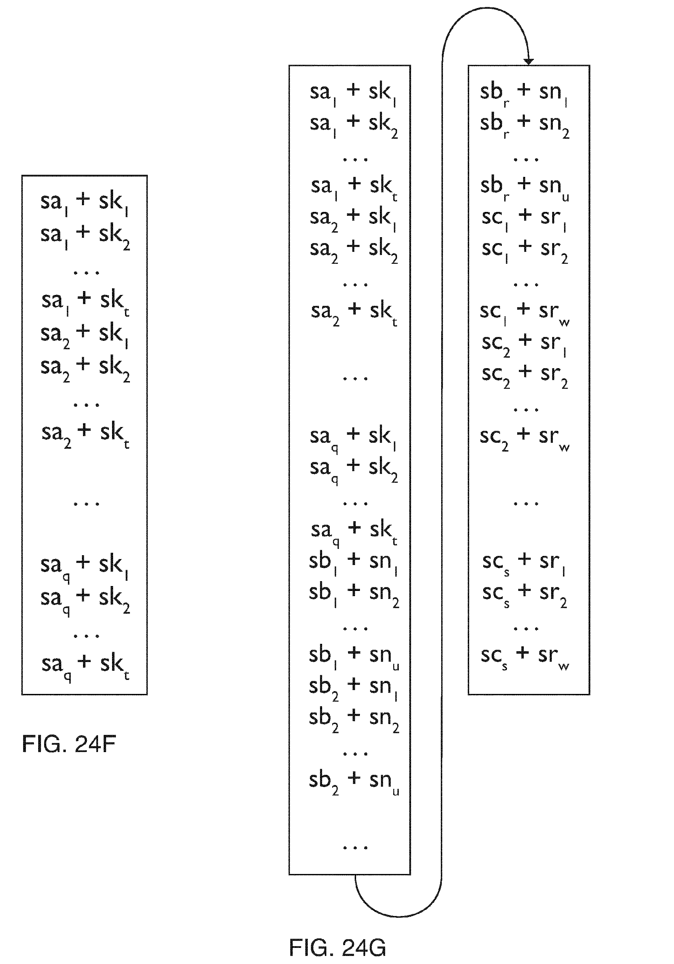

The matrix multiplication operation performed on the Cost-type matrices is explained in figures 23A-23H and 24E, 24F, 24G. Matrices RRA and RRB in figures 23A and 23C respectively are now Cost-type matrices. For the purpose of explaining matrix multiplication these matrices are 3 by 3 matrices, however, in general matrices of arbitrary number of rows and columns can be used. The columns of the first matrix and the rows of the second matrix in the matrix multiplication should be equal in number and be indexed by the same set of nodes in the same order. Matrix RRA is a Cost-type matrix, and matrix RRB is a Cost-type matrix. Each element of RRA consists of one or more rows as depicted in figure 23B for element 'sa' consisting of q rows, as depicted in figure 23C for element 'sb' consisting of r rows, as depicted in figure 23D for element 'sc' consisting of s rows. Each element of RRB consists of one or more rows as depicted in figure 23F for element 'sk' consisting of t rows, as depicted in figure 23G for element 'sn' consisting of u rows, as depicted in figure 23H for element 'sr' consisting of w rows. In case an element consists of two or more rows, the value of any of these rows cannot be ∞ (infinity).

Matrix multiplication RRD=RRA•RRB (in which • denotes the matrix multiplication operation described in this section) results in matrix RRD depicted in figure 24E. Basically, the standard matrix multiplication process is used in which the elements of a row of the first matrix are multiplied with the corresponding elements in a column of the second matrix, but a multiplication of elements resulting from the standard matrix multiplication operation is changed to a '++' operation and a summation of elements resulting from the standard matrix operation is resulting in a new row. In matrix RRD the first row of element (RR,RX) is 'sa ++ sk'. The operation 'sa ++ sk' is resulting in the row elements depicted in figure 24F. In essence, the cost values of various rows of 'sa' are added to the cost values of the various rows of 'sk' in all possible combinations. In the same way, the second row 'sb ++ sn' and the third row 'sc ++ sr' of element (RR,RX) of RRD are calculated. The resulting rows of 'sa ++ sk', 'sb ++ sn' and 'sc ++ sr' are combined into a single element consisting of all the rows, as depicted in figure 24G for element (RR,RX) of matrix RRD.

In case a matrix element of RRA or RRB contains the value ∞ (infinity), one of the operands in the '++' operation involving this matrix element is ∞ (infinity). When one of the operands in the '++' operation is ∞ (infinity), the '++' operation results in a single row with value ∞ (infinity). All values ∞ (infinity) are removed from the matrix resulting from the matrix multiplication, unless the resulting matrix element consists of one or more rows with value ∞ (infinity) in all rows, in which case the matrix element is set to a single row with value ∞ (infinity).

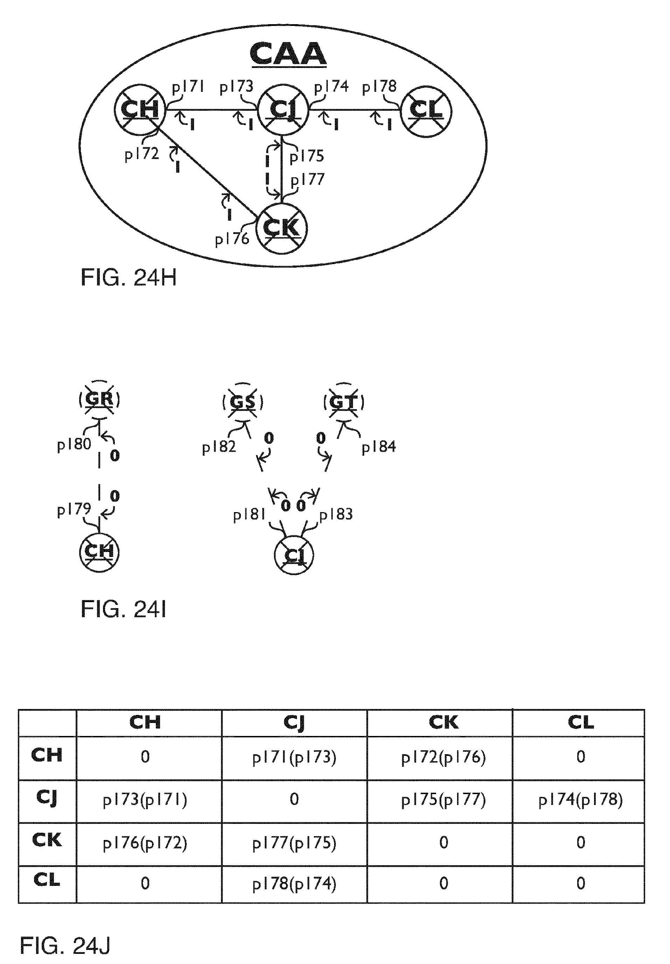

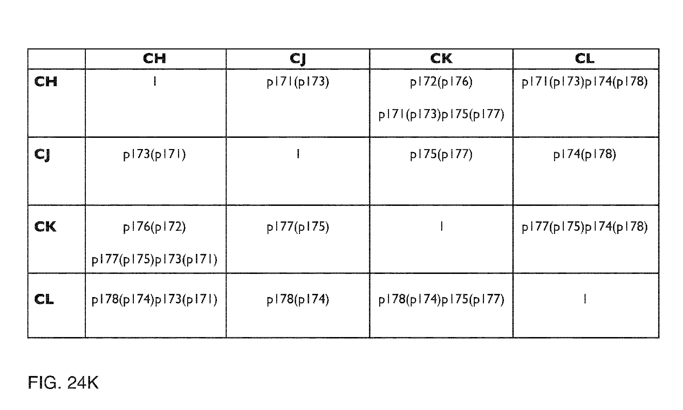

We illustrate matrix multiplication using the example physical network of figure 24H. The physical network CAA consists of physical switch nodes CH, CJ, CK, CL. The virtual network GAA consists, in this example, of virtual switch nodes GR, GS, GT. As depicted in figure 24I physical switch node CH is mapped to virtual switch node GR, while physical switch node CJ is mapped to virtual switch nodes GS and GT. The adjacency matrix of physical network CAA is given in figure 24J, which we refer to as $A^{PoA}_{CAA}$ The forwarding matrix of physical network CAA is given in figure 24K, which we refer to as $F^{PoA}_{CAA}$.

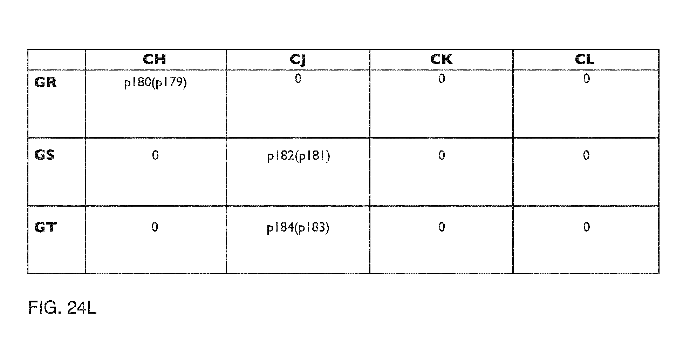

First a Shortest-Path First (SPF) Policy has been applied using the adjacency cost values depicted in figure 24H. Second, additional paths have been created from node CH to node CK through node CJ and from node CK to node CH through node CJ. These additional paths result in a second row in element (CH, CK) and element (CK, CH) of the forwarding matrix of CAA respectively. A PoA-type mapping matrix from virtual nodes GR, GS, GT to physical nodes CH, CJ, CK, CL which we refer to as $M^{PoA}_{GAA-CAA}$ is shown in figure 24L. Applying matrix multiplication

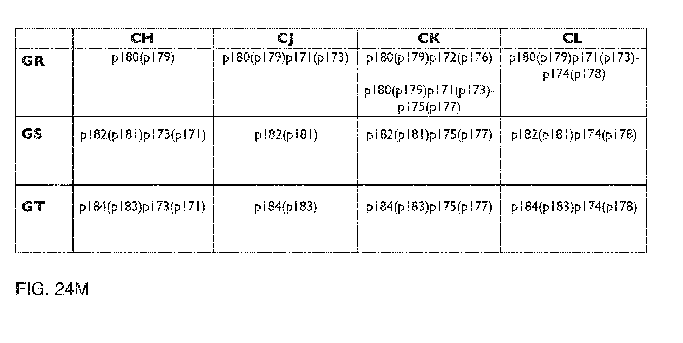

$M^{PoA}_{GAA-CAA} \cdot F^{PoA}_{CAA}$ results into the matrix shown in figure 24M. This matrix provides all paths from a virtual node (GR, GS, GT) to a physical node (CH, CJ, CK, CL). Note that the two paths between physical nodes CH and CK results in two paths between virtual node GR and physical node CK. The '-' symbol in cells (GR, CK) and (GR, CL) denotes that the sequence of PoAs continues on the next line. Essentially, matrix multiplication of PoA-type matrices is creating paths within the network expressed in terms of PoAs. Matrix multiplication of the associated Cost-type matrices is creating the cost of that path for the particular cost type the Cost-type matrix represents.

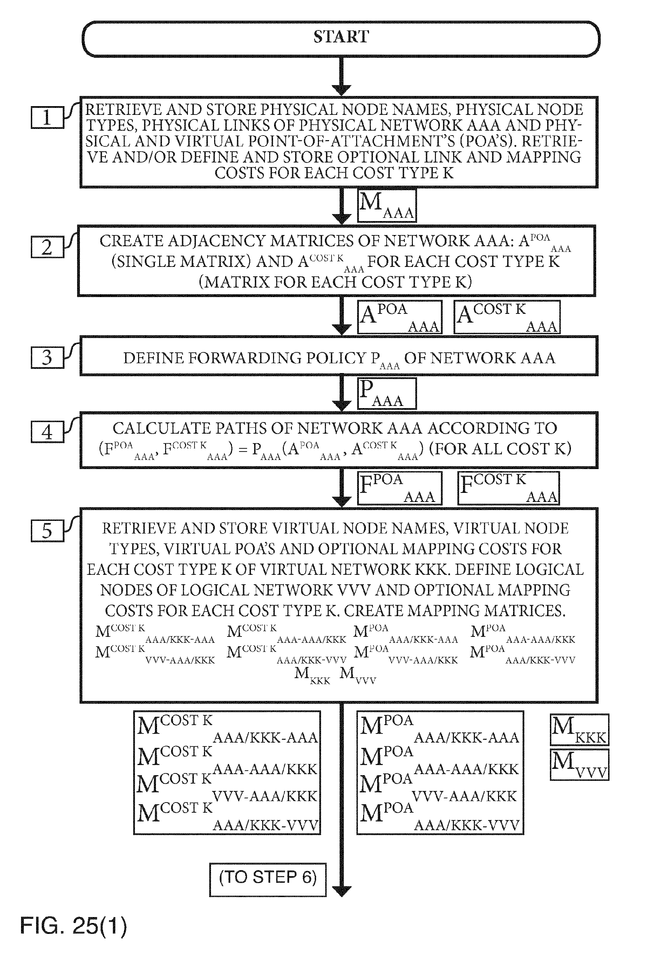

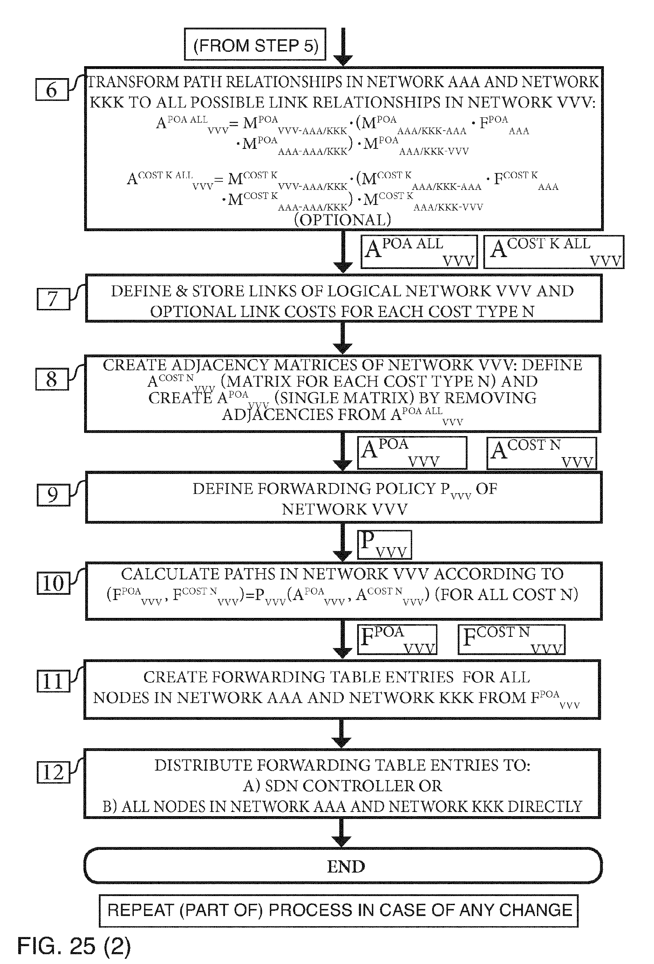

A detailed example of a SDN Compiler method for a single physical network, a single virtual network and a single logical network is depicted in figure 25.

Step 1:

Network AAA is a physical network comprising physical switch nodes, host nodes and NIC nodes interconnected by physical links. The physical node names, physical node types (switch, host, NIC), physical links, physical PoAs, optionally physical link costs for each cost type k, virtual PoAs, optionally cost of physical to virtual mapping in the direction from physical node to virtual node for each cost type k are retrieved and stored for physical network AAA. Depending on the implementation this information could be retrieved from a SDN controller, the nodes directly, a network management system, a network operations system, a cloud management system, other means or a combination of the above. In case the cost type is 'latency', its value is typically retrieved from measurement. In case of other cost types, its value is typically defined in an operations system. We define a network-mapping matrix $M_{AAA}$ providing the relationship between network AAA and the nodes network AAA contains. $M_{AAA}$ is consisting of a single row i indexed by network AAA and one or multiple columns j indexed by the nodes of AAA in which we use the nodes as they are represented in the weighted directed graph representation. Therefore, in $M_{AAA}$ a NIC is represented by 2 nodes: a NIC and NIC' node. In $M_{AAA}$ a host is represented by 2 nodes: a host (representing a sending host) and a host' (representing a receiving host). The value of all matrix elements of $M_{AAA}$ is 1 (one). An example of a network-mapping matrix for the network DAA of figure 16 is given in figure 27A.

Step 2:

Based on the information retrieved in step 1, a single PoA-type adjacency matrix $A^{PoA}_{AAA}$ of physical network AAA is created. One or more accompanying Cost-type adjacency matrices $A^{Cost\,k}_{AAA}$ are created, one for each Cost Type k. Examples of PoA-type adjacency matrix and Cost-type adjacency matrix, respectively, for the network DAA of figure 16 are given in figure 27B and 27C, respectively.

Step 3:

As mentioned above, the relationship between the adjacencies in a network and the paths in a network is determined by the forwarding policy of the particular network. We define a Forwarding Policy $P_{AAA}$ of Network AAA, essentially a function providing a translation of the adjacencies in network AAA to a set of forwarding paths in network AAA. Examples of typical forwarding policies are given in the description of step 4 below.

Step 4:

A single forwarding PoA matrix $F^{PoA}_{AAA}$ of physical network AAA is created, containing all the paths within physical network AAA expressed in terms of physical PoAs. An example for network DAA of figure 16 is shown in figure 27D. One or more accompanying forwarding Cost matrices $F^{Cost\,k}_{AAA}$ are created (see example for network DAA of figure 16 in figure 27D), one for each Cost Type k. $F^{PoA}_{AAA}$ and $F^{Cost\,k}_{AAA}$ are calculated by:

$$(F^{PoA}_{AAA}, F^{Cost\,k}_{AAA}) = P_{AAA}(A^{PoA}_{AAA}, A^{Cost\,k}_{AAA})$$

In essence, the forwarding policy function P of a network provides a translation of the adjacencies in the network (represented by matrices $A^{PoA}$ and one or more $A^{Cost}$ of that particular network) to a set of forwarding paths in the network (represented by matrices $F^{PoA}$ and one or more $F^{Cost}$ of that particular network). We will now describe examples of the forwarding policy function, based on typical currently used forwarding policies, such as:

•    Shortest Path First (SPF)

- Firewall (no path allowed)

- Specified Path (specifying all PoAs in a path)

- Load-Balancing

In general, the forwarding policy function P can take any form, therefore our invention is not limited to the above mentioned policies. Further, multiple policies can also be combined into an overall policy. E.g. one could first apply a SPF policy to the overall network and then apply a firewall policy to specific nodes in the network. When applying forwarding policy, the specific type of the physical node, being physical switch node, physical host node or physical NIC as depicted in figure 2H and 2I should be taken into account.

A SPF policy, such as e.g. Dijkstra's algorithm, can be applied to the Adjacency Matrices used in our model, which represent a weighted directed graph. The PoA-type matrix contains the PoAs and can be used to calculate the sequence of PoAs denoting the path, while the Cost-type matrix contains the cost value of a particular cost type for each adjacency.

A firewall policy does not allow certain paths within the network. In $F^{PoA}$ this is represented by a 0 (zero), while in $F^{Cost}$ this is represented by $\infty$ (infinity). So, in terms of the used forwarding matrices, a firewall policy is applied by setting the respective value of the path between source node (index row i of the forwarding matrix) and the destination node (index column j of the forwarding matrix) to 0 (zero) in $F^{PoA}$ and to $\infty$ (infinity) in $F^{Cost}$.

A Specified Path policy is an explicitly stated sequence of PoAs from source node to destination node. It is implemented by explicitly stating particular elements (i,j) of $F^{PoA}$ and $F^{Cost}$. In $F^{PoA}$ the sequence of PoAs is stated, while the associated cost of a particular cost type is stated in $F^{Cost}$ of that particular cost type.

The next policy we consider is load-balancing. Load-balancing is the ability to utilize multiple paths between a source and a destination node simultaneously. Typically, a load-balancing policy is used to split network traffic among multiple paths. Applying load-balancing can increase bandwidth between source and destination node. Applying Load-balancing can also improve the availability of the network through redundancy of paths, as in case of failing node(s) and/or link(s) some path(s) between source node and destination node might still be available. As depicted in figure 21A and 21B and associated description above, $F^{POA}$ and $F^{Cost}$ can contain multiple paths in a particular element (i,j,) of the matrix, providing the ability to load-balance traffic.

Any forwarding loops resulting from the applied policy $P_{AAA}$ are detected by scanning each row of element i,j of matrix $F^{PoA}_{AAA}$ for any duplicate input ports. Forwarding loops are not allowed by the SDN Compiler as they would result in a packet being forwarded in a loop. In case a forwarding loop is detected, any or more of the following possible actions or other appropriate actions can be taken:

- The forwarding loop is removed from the path by removing the sequence of PoAs in between the duplicate input ports as well as the first occurrence of this duplicate input port.

- A different path is calculated based on an alternative policy specified

- The user of the SDN Compiler is notified

As an alternative to performing steps 1 through 4 in the SDN Compiler, the information contained in $F^{PoA}_{AAA}$ and $F^{Cost\ k}_{AAA}$ could also be retrieved and/or calculated externally outside the SDN Compiler and be inputted into the SDN Compiler.

Step 5:

Virtual switching nodes and/or virtual host nodes are mapped to physical switching nodes of physical network AAA. The name of each virtual node, its node type (virtual switch node or virtual host node), its virtual PoAs and optionally cost of physical to virtual mapping in the direction from virtual node to physical node for each cost type k are retrieved and stored. Optionally, no virtual nodes are mapped to physical network AAA. We define virtual network KKK as a set of virtual nodes. We define a network-mapping matrix $M_{KKK}$ providing the relationship between network KKK and the nodes network KKK contains. $M_{KKK}$ is consisting of a single row i indexed by network KKK and zero or more columns j indexed by the nodes of KKK in which we use the nodes as they are represented in the weighted directed graph representation. Therefore, in $M_{KKK}$ a host is represented by 2 nodes: a host node (representing a sending host) and a host' node (representing a receiving host). The value of all matrix elements of $M_{KKK}$ is 1 (one). Note there are no adjacencies between the nodes of network KKK, basically network KKK is just a collection of virtual nodes. An example of a network-mapping matrix $M_{HAA}$ for network HAA of figure 14E is shown in figure 28A.

We define a set of two PoA-type mapping matrices describing the 1:1, 1:N or N:1 physical to virtual mapping depicted in figures 6A-6C and 16 and explained above. The rows i of PoA-type mapping matrix $M^{PoA}_{AAA/KKK-AAA}$ are indexed by the nodes of physical network AAA and the nodes of virtual network KKK, while the columns j are indexed by the nodes of physical network AAA. The PoA-type mapping matrix contains value zero in all cells, representing 'no mapping', with exception of the following cells:

- cell i,j contains value of 1 (one) in case index i and index j identify the same physical node,

- cell i,j contains 'output port (input port)' in case virtual node i is mapped to physical node j, with the output port being a PoA of virtual node i and the input port being a PoA of physical node j.

An example physical/virtual to physical PoA-type mapping matrix $M^{PoA}_{DAA/HAA-DAA}$ is shown in figure 28B.
The rows i of PoA-type mapping matrix $M^{PoA}_{AAA-AAA/KKK}$ are indexed by the nodes of physical network AAA, while the columns j are indexed by the nodes of physical network AAA and the nodes of virtual network KKK. The PoA-type mapping matrix contains zeros, representing 'no mapping', with exception of the following cells:

- cell i,j contains value of 1 (one) in case index i and index j identify the same physical node

- cell i,j contains 'output port (input port)' in case physical node i is mapped to virtual node j, with the output port being a PoA of physical node i and the input port being a PoA of virtual node j.

An example physical to physical/virtual PoA-type mapping matrix $M^{PoA}_{DAA-DAA/HAA}$ is shown in figure 28C.
We define a set of two Cost-type mapping matrices describing the 1:1, 1:N or N:1 physical to virtual mapping depicted in figures 6A-6C and 16 and explained above for cost type k. The rows i of Cost-type mapping matrix $M^{Cost\,k}_{AAA/KKK-AAA}$ are indexed by the nodes of physical network AAA and the nodes of virtual network KKK, while the columns j are indexed by the nodes of physical network AAA. The Cost-type mapping matrix contains value $\infty$ (infinity) in all cells, representing 'no mapping', with exception of the following cells:

- cell i,j contains value of 0 (zero) in case index i and index j identify the same physical node

- cell i,j contains 'cost value' in case virtual node i is mapped to physical node j, with the cost value in the direction from virtual node i to physical node j.

An example physical/virtual to physical cost-type mapping matrix cost ($M^{Cost1}_{DAA/HAA-DAA}$) is shown in figure 28D.
The rows i of PoA-type mapping matrix $M^{Cost\,k}_{AAA-AAA/KKK}$ are indexed by the nodes of physical network AAA, while the columns j are indexed by the nodes of physical network AAA and the nodes of virtual network KKK. The Cost-type mapping matrix contains value $\infty$ (infinity) in all cells, representing 'no mapping', with exception of the following cells:

- cell i,j contains value of 0 (zero) in case index i and index j identify the same physical node

- cell i,j contains 'cost value' in case physical node i is mapped to virtual node j, with the cost value in the direction from physical node i to virtual node j.

An example physical to physical/virtual ost-type mapping matrix cost1 ($M^{Cost1}_{DAA-DAA/HAA}$) is shown in figure 28E.
We define logical nodes and name each logical node with a logical name. We define network VVV as a set of logical nodes. We define a network-mapping matrix $M_{VVV}$ providing the relationship between network VVV and the nodes network VVV contains. $M_{VVV}$ is consisting of a single row i indexed by network VVV and one or multiple columns j indexed by the nodes of VVV. The value of all matrix elements of $M_{VVV}$ is 1 (one). An example network-mapping matrix $M_{UUU}$ for the logical network UUU (figures 15A, 15B) is given in figure 28F.
We define a second set of two PoA-type mapping matrices describing the 1:1, 1:N or N:1 physical/virtual to logical mapping depicted in figure 12 and explained above. The rows i of PoA-type mapping matrix $M^{PoA}_{VVV-AAA/KKK}$ are indexed by the nodes of logical network VVV while the columns j are indexed by the nodes of physical network AAA and the nodes of virtual network KKK. The PoA-type mapping matrix contains value 0 (zero) in all cells, representing 'no mapping', with exception of the following cells:

- cell i,j contains value of 1 (one) in case logical node i is mapped to physical or virtual node j.

Note that a logical host node (sending host) is mapped to physical or virtual host node(s) and the corresponding logical host' (receiving host) node is mapped to physical or virtual host' node(s).

The rows i of PoA-type mapping matrix $M^{PoA}_{AAA/KKK-VVV}$ are indexed by the nodes of physical network AAA and the nodes of virtual network KKK, while the columns j are indexed by the nodes of logical network VVV. The PoA-type mapping matrix contains value 0 (zero) in all cells, representing 'no mapping', with exception of the following cells:

- cell i,j contains value of 1 (one) in case physical or virtual node i is mapped to logical node j.

Note that a physical or virtual host node is mapped to logical host node(s) (sending host) and the corresponding physical or virtual host' node is mapped to logical host' (receiving host) node(s).

An example logical to physical/virtual PoA-type mapping matrix $M^{PoA}_{UUU-DAA/HAA}$ is shown in figure 28G. An example physical/virtual to logical PoA-type mapping matrix $M^{PoA}_{DAA/HAA-UUU}$ is shown in figure 28H.

We define a second set of two Cost-type mapping matrices describing the cost of the 1:1, 1:N or:N:1 physical/virtual to logical mapping depicted in figure 12 and explained above for cost type k. The rows i of Cost-type mapping matrix $M^{Cost\,k}_{VVV-AAA/KKK}$ are indexed by the nodes of logical network VVV while the columns j are indexed by the nodes of physical network AAA and the nodes of virtual network KKK. The Cost-type mapping matrix contains value ∞ (infinity) in all cells, representing 'no mapping', with exception of the following cells:

- cell i,j contains 'cost value' in case logical node i is mapped to physical or virtual node j, with the cost value in the direction from logical node i to physical or virtual node j.

An example of a logical to physical/virtual cost-type mapping matrix $M^{Cost1}_{UUU-DAA/HAA}$ is shown in figure 28I.

Note that a logical host node (sending host) is mapped to physical or virtual host node(s) and the corresponding logical host' (receiving host) node is mapped to physical or virtual host' node(s).

The rows i of physical/virtual to logical cost-type mapping matrix $M^{Cost\,k}_{AAA/KKK-VVV}$ are indexed by the nodes of physical network AAA and the nodes of virtual network KKK, while the columns j are indexed by the nodes of logical network VVV. The Cost-type mapping matrix contains value ∞ (infinity) in all cells, representing 'no mapping', with exception of the following cells:

- cell i,j contains 'cost value' in case physical or virtual node i is mapped to logical node j, with the cost value in the direction from physical or virtual node i to logical node j.

An example of a physical/virtual to logical cost-type mapping matrix $M^{Cost1}_{DAA/HAA-UUU}$ is shown in figure 28J.

Note that a physical or virtual host node is mapped to logical host node(s) (sending host) and the corresponding physical or virtual host' node is mapped to logical host' (receiving host) node(s).

The calculation of the Cost-type mapping matrices $M^{Cost\,k}_{VVV-AAA/KKK}$, $M^{Cost\,k}_{AAA/KKK-VVV}$, $M^{Cost\,k}_{AAA/KKK-AAA}$ and $M^{Cost\,k}_{AAA-AAA/KKK}$ is optional.

The specific type of the logical node, being logical switch node or logical host node is determined by and identical to the specific type of physical or virtual node it is mapped to as depicted in figure 13A, 13B. Please note that a logical network does not contain any NIC and corresponding NIC' nodes as per figure 13A.

As the above mapping matrices will typically be sparse matrices, usual formats for storing sparse matrices can be used for efficient storage of the matrices and efficient matrix multiplication operations.

Step 6:

The forwarding (path) relationships in physical network AAA are now transformed to, preferably all, possible adjacency relationships between all logical nodes of logical network VVV by:

$$A^{PoA\,ALL}_{VVV} = M^{PoA}_{VVV-AAA/KKK} \cdot (M^{PoA}_{AAA/KKK-AAA} \cdot F^{PoA}_{AAA} \cdot M^{PoA}_{AAA-AAA/KKK}) \cdot M^{PoA}_{AAA/KKK-VVV}$$

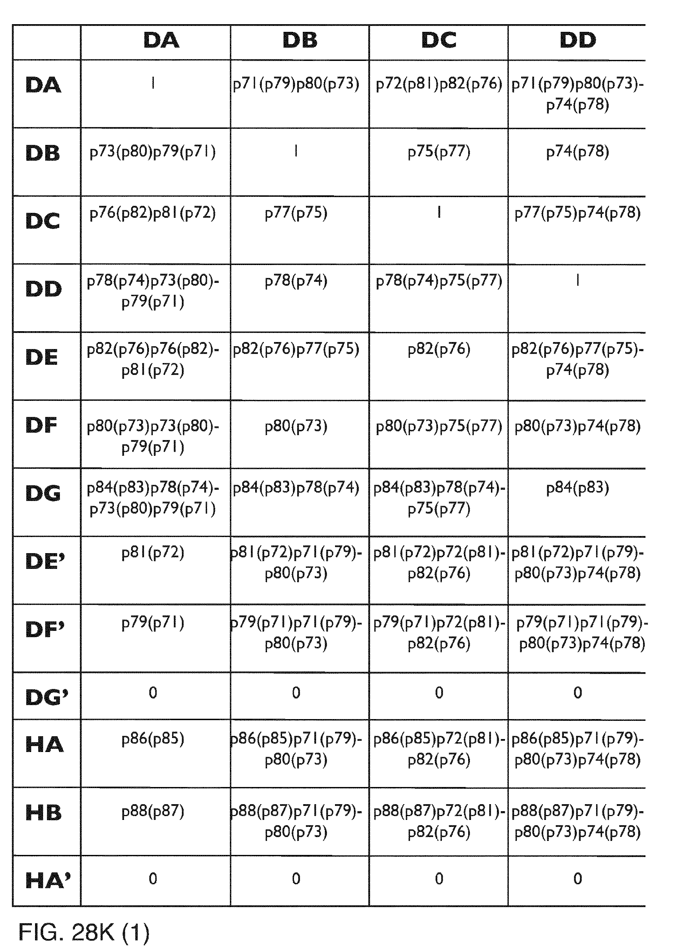

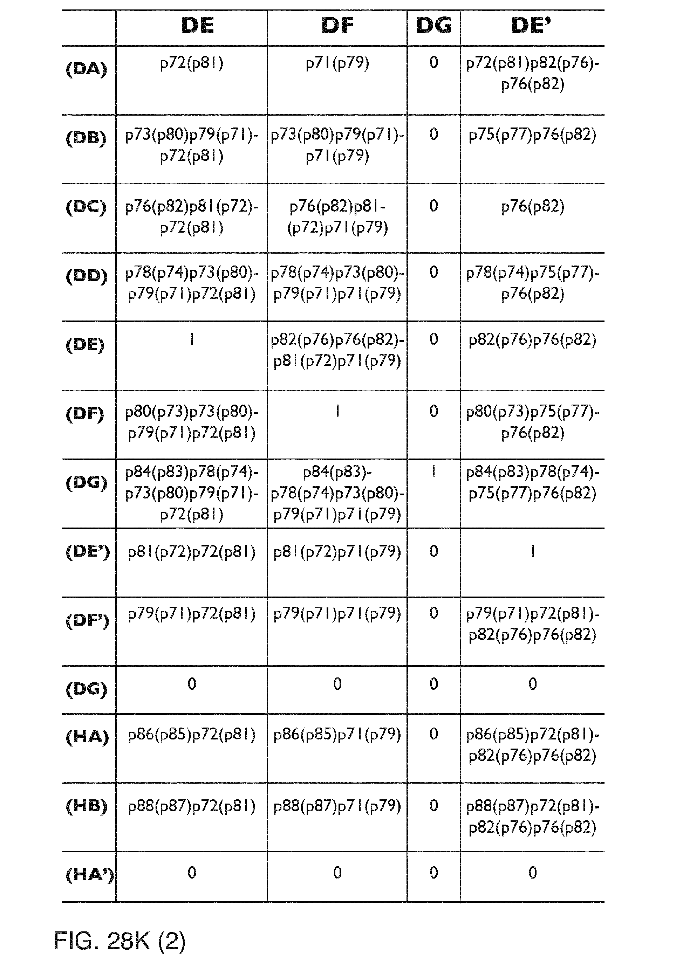

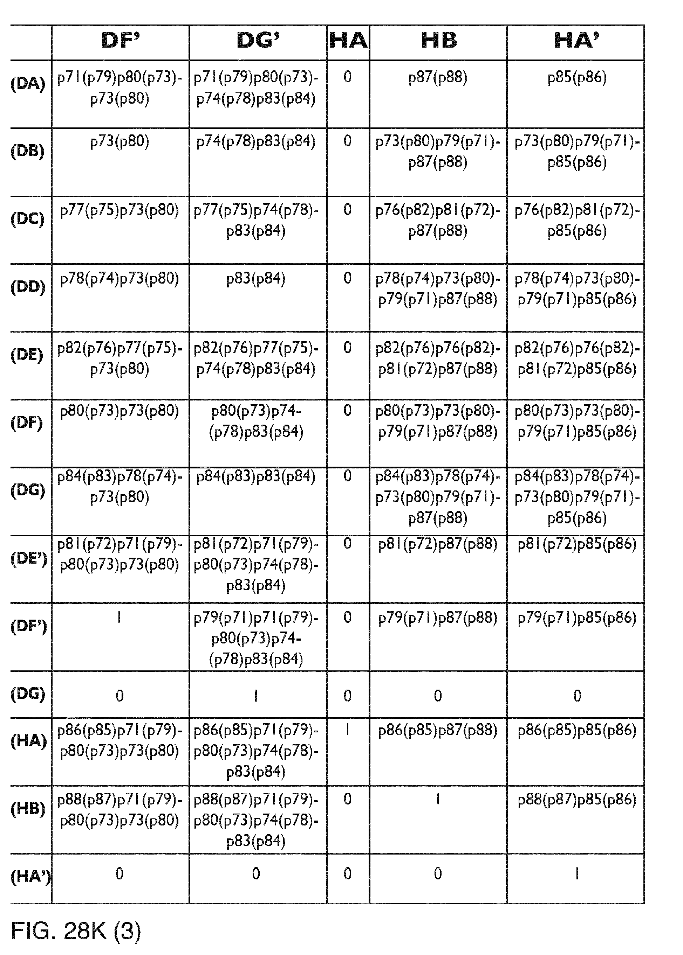

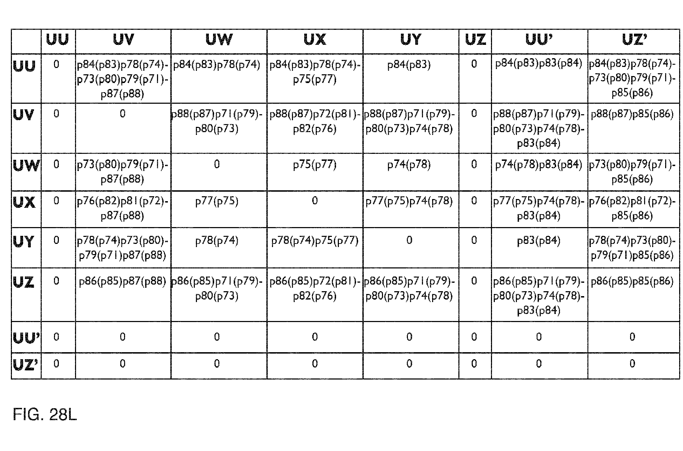

in which after $(M^{PoA}_{AAA/KKK-AAA} \cdot F^{PoA}_{AAA} \cdot M^{PoA}_{AAA-AAA/KKK})$ the value of cell i,j is set to value 1 (one) in case index i and index j identify the same node. In which after the complete operation the value of cell i,j is set to value 0 (zero) in case index i and index j identify the same node. An example of such a matrix $A^{PoA\,ALL}_{UUU}$ for logical network UUU is shown in figure 28L, while an intermediate step for the calculation is shown in figure 28K.

The term $(M^{PoA}_{AAA/KKK-AAA} \cdot F^{PoA}_{AAA} \cdot M^{PoA}_{AAA-AAA/KKK})$ with the value of cell i,j set to value 1 (one) in case index i and index j identify the same node represents the paths between all physical and virtual nodes.

The matrix $A^{PoA\ ALL}_{VVV}$ contains all possible adjacency relationships between all logical nodes of logical network VVV. Note that the paths between physical and virtual nodes of networks AAA and KKK respectively, have been translated to all possible adjacency relationships between all logical nodes of logical network VVV.

The corresponding cost matrix cost $A^{Cost\ k\ ALL}_{VVV}$ for each cost type is calculated by:

$$A^{Cost\ k\ ALL}_{VVV} = M^{Cost\ k}_{VVV\text{-}AAA/KKK} \bullet (M^{Cost\ k}_{AAA/KKK\text{-}AAA} \bullet F^{Cost\ k}_{AAA} \bullet M^{Cost\ k}_{AAA\text{-}AAA/KKK}) \bullet M^{Cost\ k}_{AAA/KKK\text{-}VVV}$$

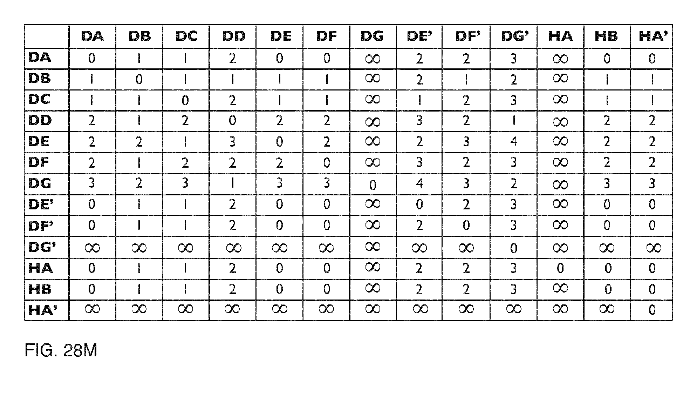

In which after $(M^{Cost\ k}_{AAA/KKK\text{-}AAA} \bullet F^{Cost\ k}_{AAA} \bullet M^{Cost\ k}_{AAA\text{-}AAA/KKK})$ the value of cell i,j is set to value 0 (zero) in case index i and index j identify the same node. In which after the complete operation the value of cell i,j is set to value ∞ (infinity) in case index i and index j identify the same node. An example of such a matrix $A^{Cost1\ ALL}_{UUU}$ for logical network UUU is shown in figure 28N, while an intermediate step in the calculation is shown in figure 28M.

The term $(M^{Cost\ k}_{AAA/KKK\text{-}AAA} \bullet F^{Cost\ k}_{AAA} \bullet M^{Cost\ k}_{AAA\text{-}AAA/KKK})$ with the value of cell i,j set to value 0 (zero) in case index i and index j identify the same node represents the cost of the paths between all physical and virtual nodes.

The matrix $A^{Cost\ k\ ALL}_{VVV}$ contains the cost of all possible adjacency relationships between all logical nodes of logical network VVV, based on the cost in the physical network, the cost of physical to virtual mapping and the cost of physical/virtual to logical mapping. The calculation of the $A^{Cost\ k\ ALL}_{VVV}$ is optional. Its values could be used to define the costs of adjacencies in the logical network VVV.

It is observed that this step 6 can be summarized as performing two sub-steps:

a) transforming paths in the physical network to paths between a set of nodes comprising the physical nodes and virtual nodes in dependence on the physical forwarding point-of-attachment relation and on a first mapping relation, as well as

b) transforming paths between the set of physical nodes and virtual nodes to possible link relationships between the logical nodes in dependence on the paths between the set of physical nodes and virtual nodes and on a second mapping relation.

Here, the first mapping relation defines how the virtual nodes and the physical nodes are mapped to one another, and the second mapping relation defines how the logical nodes are mapped to the physical nodes and the virtual nodes.

Actually this first sub-step reflects the calculation of $(M^{PoA}_{AAA/KKK\text{-}AAA} \bullet F^{PoA}_{AAA} \bullet M^{PoA}_{AAA\text{-}AAA/KKK})$, and the second sub-step reflects the remainder of the calculation of matrix $A^{PoA\ ALL}_{VVV}$.

Step 7:

From all possible adjacency relationships resulting from step 6, we define the adjacencies of logical network VVV and optionally a Cost for each adjacency for each Cost Type n. A cost of value infinity (∞) denotes there is no adjacency between two nodes. The cost type and cost values of logical network VVV are completely independent from the cost type and cost value of physical network AAA, the cost of physical to virtual mapping and the cost of physical/virtual to logical mapping. The cost in the logical network can be based on, or identical to the cost in the physical network however, which is stored in matrix $F^{Cost\ k}_{AAA}$. The cost in the logical network can be based on the cost stored in matrix $A^{Cost\ k\ ALL}_{VVV}$.

Step 8:

Based on the adjacencies defined in step 7, a single adjacency PoA matrix $A^{PoA}_{VVV}$ of logical network VVV is created. An example adjacency matrix $A^{PoA}_{UUU}$ for network UUU is shown in figure 29B. One or more accompanying adjacency cost matrices $A^{Cost\ n}_{VVV}$ are created, one for each Cost Type n. An example adjacency cost matrix $A^{Cost2}_{UUU}$ for network UUU is shown in figure 29A.

$A^{PoA}_{VVV}$ is derived from $A^{PoA\ ALL}_{VVV}$ according to:

$$A^{PoA}{}_{VVV}(i,j) = 0 \qquad \text{if } A^{Cost\,n}{}_{VVV}(i,j) \text{ equals } \infty \text{ (infinity)}$$

$$A^{PoA}{}_{VVV}(i,j) = A^{PoA\,ALL}{}_{VVV}(i,j) \qquad \text{if } A^{Cost\,n}{}_{VVV}(i,j) \text{ does not equal } \infty \text{ (infinity)}$$

A cost of value infinity ($\infty$) denotes there is no adjacency between two nodes, irrespective of the particular cost type used. Hence any of the cost types can be used in the above statement to determine $A^{PoA}{}_{VVV}(i,j)$.

Step 9:

We define a Forwarding Policy $P_{VVV}$ of Network VVV, essentially a function providing a translation of the adjacencies in network VVV to a set of forwarding paths in network VVV. When applying forwarding policy, the specific type of the logical node, being logical switch node or logical host node as depicted in figure 13 should be taken into account. Examples of various forwarding policies were given in the description of step 4 above for the physical network. The same examples apply to the forwarding policy of the logical network.

Step 10:

A single forwarding PoA matrix $F^{PoA}{}_{VVV}$ of logical network VVV is created, containing all the paths within logical network VVV expressed in terms of physical and virtual PoAs. An example forwarding matrix $F^{PoA}{}_{UUU}$ for network UUU is shown in figure 29C.

One or more accompanying forwarding cost matrices $F^{Cost\,n}{}_{VVV}$ are created, one for each Cost Type n. $F^{PoA}{}_{VVV}$ and $F^{Cost\,n}{}_{VVV}$ are calculated by:

$$(F^{PoA}{}_{VVV}, F^{Cost\,n}{}_{VVV}) = P_{VVV}(A^{PoA}{}_{VVV}, A^{Cost\,n}{}_{VVV})$$

An example forwarding cost matrix $F^{Cost2}{}_{UUU}$ for network UUU is shown in figure 29D.

Any forwarding loops resulting from the applied policy $P_{VVV}$ are detected by scanning each row of element i,j of forwarding matrix $F^{PoA}{}_{VVV}$ for any duplicate input ports. Forwarding loops are not allowed by the SDN Compiler as they would result in a packet being forwarded in a loop. In terms of forwarding entries created by the SDN compiler in step 11, they would result in multiple forwarding entries with identical logical source, logical destination and physical or virtual input ports. In case a forwarding loop is detected, any or more of the following possible actions or other appropriate actions can be taken:

- The forwarding loop is removed from the path by removing the sequence of PoAs in between the duplicate input ports as well as the first occurrence of this duplicate input port.

- A different path is calculated based on an alternative policy specified

- The user of the SDN Compiler is notified

It is observed that forwarding matrices $F^{PoA}{}_{VVV}$ and $F^{Cost\,n}{}_{VVV}$ (output of step 10) can be used as a starting point for Step 5 again, creating recursion. In this case a logical network represented by forwarding matrix $F^{PoA}{}_{VVV}$, $F^{Cost\,n}{}_{VVV}$ would be input to Step 5, creating another logical network SSS by following steps 5 through 10. Please note that in that case matrices $M_{AAA/KKK\text{-}AAA}$ and $M_{AAA\text{-}AAA/KKK}$ created in step 5 and used in steps 6 are both Identity Matrices I with size identical to the size of forwarding matrix $F^{PoA}{}_{VVV}$. This would reduce the transformation step of step 6 to:

$$A^{PoA\,ALL}{}_{SSS} = M^{PoA}{}_{SSS\text{-}VVV} \bullet F^{PoA}{}_{VVV} \bullet M^{PoA}{}_{VVV\text{-}SSS}$$

And optionally:

$$A^{\text{Cost n ALL}}_{\text{SSS}} = M^{\text{Cost n}}_{\text{SSS-VVV}} \bullet F^{\text{Cost n}}_{\text{VVV}} \bullet M^{\text{Cost n}}_{\text{VVV-SSS}}$$

Forwarding matrix $F^{\text{PoA}}_{\text{VVV}}$ contains the 'network state', being all forwarding paths between a particular logical source node and a particular logical destination node expressed in physical and virtual PoAs. Here we use the term 'state' as typically used in computing. Forwarding matrix $F^{\text{PoA}}_{\text{VVV}}$ determines the forwarding behavior of the physical and virtual nodes in a deterministic way. Also, as forwarding matrix $F^{\text{PoA}}_{\text{VVV}}$ contains the 'network state', forwarding matrix $F^{\text{PoA}}_{\text{VVV}}$ can be used for further analysis either in the SDN Compiler or outside of the SDN Compiler. As an example, forwarding matrix $F^{\text{PoA}}_{\text{VVV}}$ could be checked against path traces (e.g. traceroute information) reported by physical and virtual nodes identified by logical node names to verify consistency. Also, the 'network state' contained in forwarding matrix $F^{\text{PoA}}_{\text{VVV}}$ could be stored at particular moments (e.g. after each change in forwarding matrix $F^{\text{PoA}}_{\text{VVV}}$ or at regular intervals), to restore that particular 'network state' when needed.

Step 11:

In order to be able to calculate the corresponding forwarding table entries, the separation between host and host' in forwarding matrix $F^{\text{PoA}}_{\text{VVV}}$ and $F^{\text{Cost n}}_{\text{VVV}}$ is removed according to the below process:

-Start

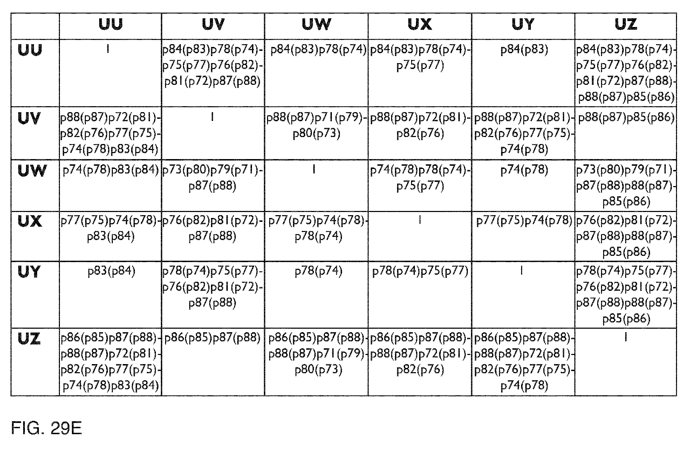

Step 1: Create a forwarding matrix table $F^{\text{PoA Table}}_{\text{VVV}}$ identical to $F^{\text{PoA}}_{\text{VVV}}$. An example forwarding matrix table $F^{\text{PoA Table}}_{\text{UUU}}$ for network UUU is shown in figure 29E.

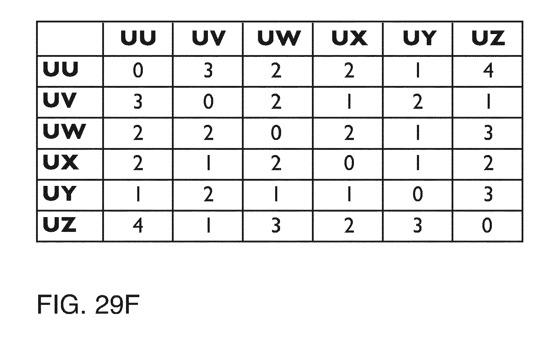

Step 2: Create a forwarding cost matrix table $F^{\text{Cost n Table}}_{\text{VVV}}$ identical to $F^{\text{Cost n}}_{\text{VVV}}$. An example forwarding cost matrix table $F^{\text{Cost2 Table}}_{\text{UUU}}$ for network UUU is shown in figure 29F.

Step 3: Remove each row in forwarding matrix table $F^{\text{PoA Table}}_{\text{VVV}}$ and $F^{\text{Cost n Table}}_{\text{VVV}}$ indexed by a host' node

Step 4: For each column in forwarding matrix table $F^{\text{PoA Table}}_{\text{VVV}}$ and forwarding cost matrix table $F^{\text{Cost n Table}}_{\text{VVV}}$ indexed by a host' node, copy values of matrix elements to column indexed by corresponding host node for all rows, except for the row indexed by host.

Step 5: Remove each column in forwarding matrix table $F^{\text{PoA Table}}_{\text{VVV}}$ and forwarding cost matrix table $F^{\text{Cost n Table}}_{\text{VVV}}$ indexed by a host' node

-End

The host nodes are now identified by a single node in matrices forwarding matrix table $F^{\text{PoA Table}}_{\text{VVV}}$ and forwarding cost matrix table $F^{\text{Cost n Table}}_{\text{VVV}}$.
For each output port in forwarding matrix table $F^{\text{PoA Table}}_{\text{VVV}}$ create a forwarding entry for physical or virtual node to whom the output port belongs, with the following items:

-   Logical source node: row index i of element in forwarding matrix table $F^{\text{PoA Table}}_{\text{VVV}}$ in which the output port occurs

-   Logical destination node: column index j of element in forwarding matrix table $F^{\text{PoA Table}}_{\text{VVV}}$ in which the output port occurs

-   Input port: input port at position (h-1) for output port at position h in the sequence of PoAs or "local" in case output port is the first PoA in the sequence of PoAs.

-   Optional load-balancing identifier

-   Output Port: output port

For each input port that is the last PoA in a sequence of PoAs in forwarding matrix table $F^{\text{PoA Table}}_{\text{VVV}}$ create

a forwarding entry for physical or virtual node to whom the input port belongs, with the following items:

- Logical source node: row index i of element in forwarding matrix table $F^{PoA\ Table}_{VVV}$ in which input port occurs

- Logical destination node: column index j of element in forwarding matrix table $F^{PoA\ Table}_{VVV}$ in which the input port occurs

- Input Port: input port

- Optional load-balancing identifier

- Output Port: "local"

A forwarding entry with input port value "local" denotes a source node, hence the packet should be sent by that node. A forwarding entry with output port value "local" denotes a destination node, hence the packet should be received by that node.

An optional load-balancing identifier can be used in case multiple paths exist between a logical source and a logical destination node in network VVV. In case multiple paths exist between a logical source and a logical destination node the corresponding element of forwarding matrix $F^{PoA}_{VVV}$ contains multiple rows, each containing a particular sequence of PoAs denoting a path. As an example the load-balancer identifier could be stored in a load-balancing matrix with the same dimensions and indexing as forwarding matrix $F^{PoA}_{VVV}$, with the element value being a particular load-balancing identifier associated with that path. Similar to the process above for forwarding matrix table $F^{PoA\ Table}_{VVV}$ the separation between host and host' in this matrix can be removed to create a load-balancing matrix with the same dimensions as forwarding matrix table $F^{PoA\ Table}_{VVV}$.

Similarly, the SDN Compiler could maintain a matrix containing backup path(s) that could be used in case the path currently in use cannot be used. This will allow for fast restoration of service, avoiding recalculation of (part of) the process of figure 25. The usability of the backup path obviously depends on the exact cause that makes the path currently in use unusable. The backup path(s) might be unusable as well, in which case a new path to be used will result from recalculation of the process as described below.

Also, higher-layer identifiers, such as but not limited to an Application Port identifier, could be used to select a particular path from multiple possible paths in forwarding matrix $F^{PoA}_{VVV}$ between a logical source node and logical destination node for that particular Application Port. This allows for forwarding traffic for a particular application along a particular path. As an example TCP and UDP port numbers could be used as Application Port identifiers.

Step 12:

The forwarding table entries are now sent to the 'SDN Controller' responsible for the distribution of the forwarding table entries to the physical and virtual nodes of network AAA and/or KKK respectively. Alternatively, depending on the implementation, the 'SDN Compiler' could also send the forwarding entries directly to the physical nodes of network AAA and/or virtual nodes of network KKK.

Repeat Process:

The process as described above may be, in whole or partly, be repeated when any change takes place in any physical, virtual or logical network or mapping, such as:

- Physical Node, physical node type (switch node, host node, NIC node), physical network, physical link, physical PoA, physical link cost type, physical link cost value, physical forwarding policy

- Virtual node, virtual node type (switch node, host node), virtual network, virtual PoA

- Logical node, logical node type (switch node, host node), logical network, logical link, logical link cost type, logical link cost value, logical forwarding Policy

- Mapping between physical and virtual nodes, mapping between physical/virtual and logical nodes

In the above flowchart of figure 25, we have made a distinction between the various types of nodes: switch, host and NIC. We introduced NIC'-type and host'-type nodes in the matrices used to be able to apply the appropriate forwarding policy (e.g. SPF) in the physical network and logical network. Alternatively, we could choose not to make a distinction between the various types of nodes and not introduce the NIC'-type and host'-type nodes in the matrices used. The same process described in the flowchart of figure 25 could be applied, but when applying Forwarding Policy (in step 4 and step 10) additional information would have to be added identifying the particular node type: switch, host or NIC.

In the above flowchart of figure 25, we have used PoA-type matrices of the format specified in figure 21A. Alternatively, the 'input port' (which is indicated between brackets) could be omitted in the PoA-type matrices. During step 11 of the flowchart of figure 25, the appropriate physical or virtual 'input port' could be added after each physical or virtual output port in the sequence of PoAs or alternatively in the forwarding table entry. The values of the physical input port corresponding to a particular physical output port could be obtained from the appropriate physical PoA-type adjacency matrix. The values of the virtual input port corresponding to a particular virtual output port could be obtained from the appropriate PoA-type mapping matrices representing the corresponding physical to virtual mapping.

Note that the rows and columns of the defined matrices could be interchanged, which is mathematically equivalent.

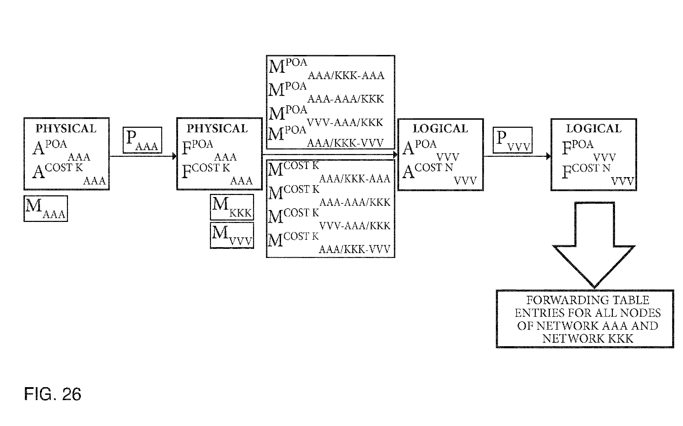

The process described in the flowchart of figure 25 is summarized in the diagram of figure 26. The process starts with adjacency matrices (PoA-type and Cost-type) of physical network AAA, onto which forwarding policy P of physical network AAA is applied, resulting in forwarding matrices (PoA-type and Cost-type) of physical AAA. Using the 4 PoA-type mapping matrices describing the physical to virtual mapping and the physical/virtual to logical mapping an adjacency matrix of logical network VVV is created containing all possible adjacencies (not shown in diagram). Optionally, the 4 Cost-type mapping matrices describing the cost of the physical to virtual mapping and the physical/virtual to logical mapping can be used to calculate the cost values of cost type k of all possible adjacencies of network VVV. Based on the adjacencies defined for logical network VVV, the adjacency matrices (PoA-type and Cost-type) of logical network VVV are created. Forwarding policy $P_{VVV}$ of logical network VVV is applied to these adjacency matrices of VVV, resulting in forwarding matrices (PoA-type and Cost-type) of logical network VVV. The PoA-type forwarding matrix of logical network VVV contains all the paths between all logical nodes in logical network VVV, expressed in terms of physical and virtual PoAs, from which the forwarding tables for all physical and virtual nodes of physical network AAA and virtual network KKK are derived. The matrices $M_{AAA}$, $M_{KKK}$, $M_{VVV}$ define the relationship between the nodes and the network for respectively physical network AAA, virtual network KKK and logical network VVV.

In the above process depicted in figure 25, typically the user of the SDN Compiler defines (inputs) the following items:

1. Name of the logical network
2. Name of the logical nodes of which the logical network consists
3. Adjacencies between logical nodes
4. One or more Cost Types of the logical network
5. Cost of logical adjacencies between logical nodes for each Cost Type
6. Forwarding policy of logical network
7. Mapping from physical and/or virtual nodes to logical nodes and optional mapping cost value

The following items would typically be specified and/or reported by a SDN Controller, a Server Management System or Cloud Management System or a combination of these:

1. Name of virtual nodes (resources)
2. Name of virtual network (collection of virtual nodes)
3. Virtual node type (switch node, host node)
4. Virtual PoAs
5. Mapping from physical nodes to virtual nodes and optional mapping cost value
6. Optional function(s) performed by the virtual node

The following items would typically be specified and/or reported by a SDN Controller or a Network Management System, a Server Management System or a combination of these:

1. Name of the physical network
2. Name of the physical nodes (resources) of which the physical network consists
3. Physical node type (switch node, host node, NIC node)
4. Physical PoAs
5. Adjacencies between physical nodes
6. One or more Cost Types of the physical network

7. Cost of physical adjacencies between physical nodes for each Cost Type
8. Forwarding policy of physical network
9. Optional function(s) performed by the physical node

By now, we have reached our objective for a Software Defined Network. The logical network can now entirely be defined in software by the user of the SDN Compiler and can be compiled against arbitrary physical and virtual networking and computing resources, resulting in the instructions for these resources. Multiple logical networks can be defined and created simultaneously on the same physical and/or virtual networking and/or computing resources. Furthermore, our method provides a tight integration with and control over the virtual networking and computing resources, creating instructions for both networking and computing resources. It extends the creation of forwarding tables to physical host nodes, physical NIC nodes, virtual switch nodes and virtual host nodes, beyond the usual creation of forwarding tables for physical switch nodes. Furthermore, the SDN Compiler could request the SDN Controller, a Server Management System and/or Cloud Management System to create, modify, delete and/or move (to a different physical resource) virtual resources in case this is required to meet the requirements of the user of the SDN Compiler. Furthermore, the SDN Compiler could request the SDN Controller or a Network Management System to modify properties of the physical network that can be modified, e.g. request to modify the links between physical nodes in case an optical network consisting of Remote Optical Add/Drop Multiplexers (ROADMs) or Optical Cross Connects is used to interconnect the nodes of the packet switching network. As such, the SDN Compiler becomes the central component that can optimize physical and virtual networking and computing resources based on the needs of the user(s) of the SDN Compiler such as e.g. applications.

The paths in the network can be instantiated in various ways:

- Proactive path instantiation - The SDN Compiler calculates the forwarding paths upfront between all logical source and logical destination nodes in the network (as far as forwarding policy allows for these paths) and distributes all the resulting forwarding entries to the physical and/or virtual nodes either through the SDN Controller or directly.
- Reactive path instantiation - When a packet is received by a physical or virtual node that does not match against a forwarding entry, a request is made by the physical or virtual node to the SDN Compiler to provide the relevant forwarding entry.
- Hybrid path instantiation - A combination of proactive path instantiation and reactive path instantiation for different paths.

The described SDN Compiler method may be arranged to support all 3 above methods of path instantiation.

As an example, in a typical implementation the Ethernet MAC Address could be used as the PoA identifier to identify physical and virtual PoAs. The Ethernet MAC Address is globally unique, has sufficient length (48 bits) to provide a large number of addresses, is used to identify both physical and virtual PoAs and is in widespread use.

In our method, we are naming both the network and the node with a logical name. As an example, in a typical implementation the subnet part of an IPv4 address could be used to identify the logical network and the host part of an IPv4 address could be used to identify the logical node. As an example, alternatively, an IPv6 address Global Routing Prefix + Subnet Identifier could be used to identify the logical network, while the Interface Identifier could be used to identify the logical node.

In current networks the IPv4 and IPv6 address denotes an interface not the node. This is creating well-known limitations in IP-networking such as the multi-homing issue. This can be dealt with in 2 ways:

a) Use the IP address to denote a node. As a Software Defined Network will not require any control protocols between nodes dependency on control protocols that expect the IP address to denote an interface is removed.
b) In case this is not possible, a 1:N physical/virtual to logical mapping could be used to create multiple logical nodes for a single physical or virtual node.

Each logical node would be given an IP address, resulting in multiple IP-addresses for a single physical or virtual node.

We now consider the naming of the logical nodes and networks. In order to make the proposed approach scalable, we introduce hierarchy in the logical naming of networks and nodes of the following form:

..... Network-of-Network-of-Networks. Network-of-Networks . Network. Node

The dot symbol "." separates the different elements the logical name consists of. We will refer to Network-of-Networks-of-Networks as NoNoNs and to Network-of-Networks as NoNs. The above naming structure introduces hierarchy in a recursive way:

- A Network is a collection of Nodes
- A NoNs is a collection of Networks
- A NoNoNs is a collection of NoNs
- And so on, as indicated by '....' in the above definition of the used naming form.

This creates an arbitrary number of hierarchy-levels in the network, obviously in a deployment limited to practical constraints.

Using the above structure a Node is identified by:

..... Network-of-Network-of-Networks . Network-of-Networks . Network. Node Similarly, a Network is identified by:

..... Network-of-Network-of-Networks . Network-of-Networks . Network Similarly, a NoNs is identified by:

..... Network-of-Network-of-Networks . Network-of-Networks And so on for various levels in the hierarchy.

This provides a means to locate the node within the overall network. We refer to the 'overall network' as the overall structure of '..... Network-of-Network-of-Networks . Network-of-Networks . Network . Node'

Further, the above approach abstracts every network to a node on its particular level in the hierarchy. E.g. A NoNs is consisting of a collection of Networks with adjacencies between Networks, in the same way as a Network is consisting of a collection of Nodes with adjacencies between nodes. Inter-Domain Nodes (IDNs) provide interconnection between various Networks, NoNs's, NoNoNs's, etc. Following the hierarchy of the naming structure, we can distinguish between the following types of IDNs:

- IDNs between Networks: the adjacency/adjacencies between a pair of IDNs crosses the borders of 2 networks.

- IDNs between NoNs's: the adjacency/adjacencies between a pair of IDNs crosses the borders of 2 NoNs

- IDNs between NoNoNs's: the adjacency/adjacencies between a pair of IDNs crosses the borders of 2 NoNoNs

And so on for various levels in the hierarchy.

Now, we can apply the method of the SDN Compiler to a network consisting of IDNs, and apply the process of the flowchart of figure 25 to the network consisting of IDNs. The resulting forwarding table entries depict the forwarding between IDNs. The PoA-type forwarding matrix of the network consisting of IDNs also contains the forwarding behavior for one or more nodes within the network within which the IDN resides. In this way forwarding table entries can be created for interconnection between networks, NoNs, NoNoNs, etc depending on the hierarchy level the IDNs provides interconnectivity for.

Note that within the network of IDNs policy can be applied, determining the forwarding path(s) between networks, NoNs, NoNoNs, etc depending on the network hierarchy level the IDNs provide interconnectivity for.

Using the above approach, for a NoNs the forwarding is decomposed to:

a) Forwarding from source node to IDN in source node network

b) Forwarding from IDN in source node network to IDN in destination network

c) Forwarding from IDN in destination network to destination node

The forwarding table entries for a) are derived from the PoA-type forwarding matrix of the network of the source node. The forwarding table entries for c) are derived from the PoA-type forwarding matrix of network of the destination node. The forwarding entries for b) are derived from the PoA-type forwarding matrix of the network of IDNs.

The same process can be repeated for each level in the hierarchy in a recursive manner. The above approach can be extended to IDNs between NoNs's, IDNs between NoNoNs's etc. Note that by using the above recursive naming structure, the Adjacency, Forwarding and Mapping matrices explained above can be kept to a reasonable size, allowing for fast computation of the matrices, while the size of the overall network can scale to a very large number of nodes. Also the size of the forwarding tables can be kept within reasonable limits by forwarding traffic of a collection of nodes between networks through a limited set of paths between IDNs, determined by the forwarding policy of the network of IDNs.

As stated above, in a typical implementation consisting of a single logical network, the subnet part of an IPv4 address could be used to identify the logical network and the host part of an IPv4 address could be used to identify the logical node. When using the logical naming hierarchy presented above to support a hierarchy of networks, a host part of an IPv4 address could be used to identify the logical node, while a network, NoNs, NoNoNs, etc could be denoted by Classless Inter-Domain Routing (CIDR) notation of the subnet of the IPv4 address.

As stated above, in a typical implementation consisting of a single logical network, an IPv6 address Global Routing Prefix + Subnet Identifier could be used to identify the logical network, while the Interface Identifier could be used to identify the logical node. When using the logical naming hierarchy presented above to support a hierarchy of networks, the Interface Identifier of an IPv6 address could be used to identify the logical node, while a network, NoNs, NoNoNs, etc could be denoted by subnetting of the IPv6 Global Routing Prefix and/or Subnet Identifier address.

In order to support mobility of logical nodes within the network(s) controlled by the SDN Compiler, the logical node should be identified by a name unique within the network(s) being controlled by the SDN Compiler, or be globally unique to support global mobility. This can be used in any of the followings ways:

a) Splitting the IPv6 address space into a part that denotes the network, NoNs, NoNoNs, etc. and a part that denotes the node

b) Splitting the IPv4 address space into a part that denotes the network, NoNs, NoNoNs, etc. and a part that denotes the node

c) Introducing an IPv4 or IPv6 address to denote the node and a second IPv4 or IPv6 address to denote the network, NoNs, NoNoNs.

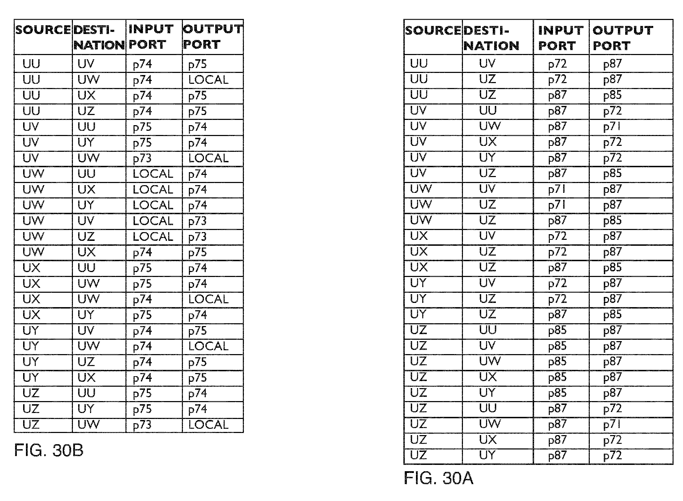

The SDN compiler method for a single physical network, a single virtual network and a single logical network as depicted in the flowchart in figure 25 is now applied to the example network depicted in figures 14A-14E, 15A-15C, 16. Figures 27A-27E, 28A-28N, 29A-29F depict the various matrices and figures 30A-30I depicts the forwarding tables for different nodes DA-DG, and HA, HB.

The physical nodes of figure 14A are depicted in the functional model of figure 14B and in the weighted directed graph of figure 14C. We define physical network DAA as the collection of physical nodes DA, DB, DC, DD, DE, DF, DG, DE', DF', DG' represented in matrix $M_{DAA}$ shown in figure 27A. The adjacencies in network DAA are represented in matrix $A^{PoA}_{DAA}$ (figure 27B) containing the PoAs of the adjacencies and matrix $A^{Cost1}_{DAA}$ (figure 27C) containing the cost values of cost type 'Cost1' of the adjacencies. Applying a Shortest-Path-First Forwarding Policy $P_{DAA}$ using cost type 'Cost1' results in forwarding matrices $F^{PoA}_{DAA}$ (figure 27D) containing the PoAs of the paths and matrix $F^{Cost1}_{DAA}$ (figure 27E) containing the cost values of cost type 'Cost1' of the paths.

We define virtual network HAA as the collection of virtual nodes HA, HB and HA' represented in network-mapping matrix $M_{HAA}$ shown in figure 28A. Please note $M_{HAA}$ is merely a collection of nodes, as there are no links between the virtual machines HA and HB as shown in figures 14A and 14D. We now define the first mapping, between physical network DAA and virtual network HAA. $M^{PoA}_{DAA/HAA-DAA}$ provides the mapping from network DAA and HAA (represented as DAA/HAA) to network DAA (figure 28B), while $M^{PoA}_{DAA-DAA/HAA}$ provides the mapping from network DAA to network DAA and HAA (represented as DAA/HAA) (figure 28C). The dashed lines in figures 14D and 16 depict this mapping which is a 1:2 mapping between physical node DA and virtual nodes HA and HB. $M^{Cost1}_{DAA/HAA-DAA}$ provides the cost of the mapping from network DAA and HAA (represented as DAA/HAA) to network DAA (figure 28D), while $M^{Cost1}_{DAA-DAA/HAA}$ provides the cost of the mapping from network DAA to network DAA and HAA (represented as DAA/HAA) (figure 28E). The mapping cost value is zero for all mappings between physical nodes and virtual nodes in this example.

The logical network UUU is depicted in figure 15A (functional representation) and figure 15B (graph representation). We define logical network UUU as the collection of logical nodes UU, UV, UW, UX, UY, UZ, UU', UZ' represented in network-mapping matrix $M_{UUU}$ shown in figure 28F. We now define a second mapping, between physical network DAA / virtual network HAA and logical network UUU. $M^{PoA}_{UUU-DAA/HAA}$ provides the mapping from network UUU to network DAA and HAA (DAA/HAA) (figure 28G), while $M^{PoA}_{DAA/HAA-UUU}$ provides the mapping from network DAA and HAA (DAA/HAA) to network UUU (figure 28H). $M^{Cost1}_{UUU-DAA/HAA}$ provides the cost of the mapping from network UUU to network DAA and HAA (DAA/HAA) (figure 28I), while $M^{Cost1}_{DAA/HAA-UUU}$ provides the cost of the mapping from network DAA and HAA (DAA/HAA) to network UUU (figure 28J). The mapping cost value is zero for all mappings between all physical/virtual nodes and logical nodes in this example.

In this example a 1:1 mapping between nodes DG, HB, DB, DC, DD, HA, DG', HA' and UU, UV, UW, UX, UY, UZ, UU', UZ' respectively is used as depicted by the dotted line in figure 15C. In general 1:N or N: mapping can also be applied. Please note that the physical, virtual and logical host nodes are split in a host (sending host) and host' (receiving host) node. A physical or virtual host node is mapped to a logical host node, while a physical or virtual host' node is mapped to a logical host' node.

The forwarding (path) relationships in physical network DAA are now transformed to all possible adjacency relationships between all logical nodes of logical network UUU by:

$$A^{PoA\ ALL}{}_{UUU} = M^{PoA}{}_{UUU\text{-}DAA/HAA} \cdot (M^{PoA}{}_{DAA/HAA\text{-}DAA} \cdot F^{PoA}{}_{DAA} \cdot M^{PoA}{}_{DAA\text{-}DAA/HAA}) \cdot$$

$$M^{PoA}{}_{DAA/HAA\text{-}UUU}$$

In which after $(M^{PoA}{}_{DAA/HAA\text{-}DAA} \cdot F^{PoA}{}_{DAA} \cdot M^{PoA}{}_{DAA\text{-}DAA/HAA})$ the value of cell i,j is set to value 1 (one) in case index i and index j identify the same node. In which after the complete operation the value of cell i,j is set to value 0 (zero) in case index i and index j identify the same node.

The intermediate step in the calculation $(M^{PoA}{}_{DAA/HAA\text{-}DAA} \cdot F^{PoA}{}_{DAA} \cdot M^{PoA}{}_{DAA\text{-}DAA/HAA})$ with the value of cell i,j set to value 1 (one) in case index i and index j identify the same node is shown in figure 28K. $A^{PoA\ ALL}{}_{UUU}$ is shown in figure 28L and contains all possible adjacency relationships between all logical nodes of logical network UUU.

The cost of cost type Cost1' of the all possible adjacency relationships between all logical nodes of logical network UUU is given by:

$$A^{Cost1\ ALL}{}_{UUU} = M^{Cost1}{}_{UUU\text{-}DAA/HAA} \cdot (M^{Cost1}{}_{DAA/HAA\text{-}DAA} \cdot F^{Cost1}{}_{DAA} \cdot$$

$$M^{Cost1}{}_{DAA\text{-}DAA/HAA}) \cdot M^{Cost1}{}_{DAA/HAA\text{-}UUU}$$

In which after $(M^{Cost1}{}_{DAA/HAA\text{-}DAA} \cdot F^{Cost1}{}_{DAA} \cdot M^{Cost1}{}_{DAA\text{-}DAA/HAA})$ the value of cell i,j is set to value 0 (zero) in case index i and index j identify the same node. In which after the complete operation the value of cell i,j is set to value $\infty$ (infinity) in case index i and index j identify the same node.

The intermediate step in the calculation $(M^{Cost1}{}_{DAA/HAA\text{-}DAA} \cdot F^{Cost1}{}_{DAA} \cdot M^{Cost1}{}_{DAA\text{-}DAA/HAA})$ with the value of cell i,j set to value 0 (zero) in case index i and index j identify the same node is shown in figure 28M. $A^{Cost1\ ALL}{}_{UUU}$ is shown in figure 28N and contains the cost of cost type 'Cost1' of all possible adjacency relationships between all logical nodes of logical network UUU.

According to the links and link cost values of a particular cost type of network UUU defined in figure 15A and figure 15B we create $A^{Cost2}{}_{UUU}$ with 'Cost2' being the cost type used (figure 29A). Cost of value infinity ($\infty$) denotes there is no adjacency between two nodes. The cost type Cost2 and its cost values of logical network UUU is completely independent from cost type Cost1 and its cost values. However, one can choose to use cost values that were used in $F^{Cost1}{}_{DAA}$ and/or $A^{Cost1\ ALL}{}_{UUU}$.

A single adjacency PoA matrix $A^{PoA}{}_{UUU}$ of logical network UUU is created based on $A^{Cost2}{}_{UUU}$ and $A^{PoA\ ALL}{}_{UUU}$ as shown in figure 29B. Applying a Shortest-Path-First Forwarding Policy $P_{UUU}$ using cost type 'Cost2' results in forwarding matrices $F^{PoA}{}_{UUU}$ (figure 29C) containing the PoAs of the paths and matrix $F^{Cost2}{}_{UUU}$ (figure 29D) containing the cost values of cost type 'Cost2' of the paths.

In order to be able to calculate the corresponding forwarding table entries, the separation between host and host' in $F^{PoA}{}_{UUU}$ and $F^{Cost}{}_{UUU}$ is removed according to the process explained in step 11 of the flowchart of figure 25. The resulting host nodes are now identified by a single node in matrices $F^{PoA\ Table}{}_{UUU}$ and $F^{Cost2\ Table}{}_{UUU}$ shown in figure 29E and figure 29F respectively.

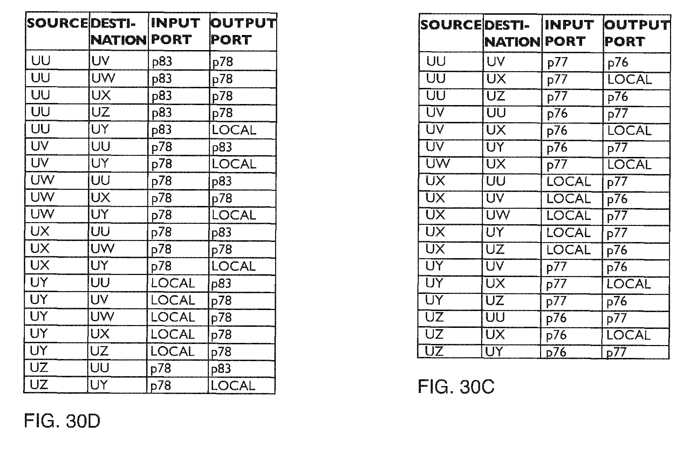

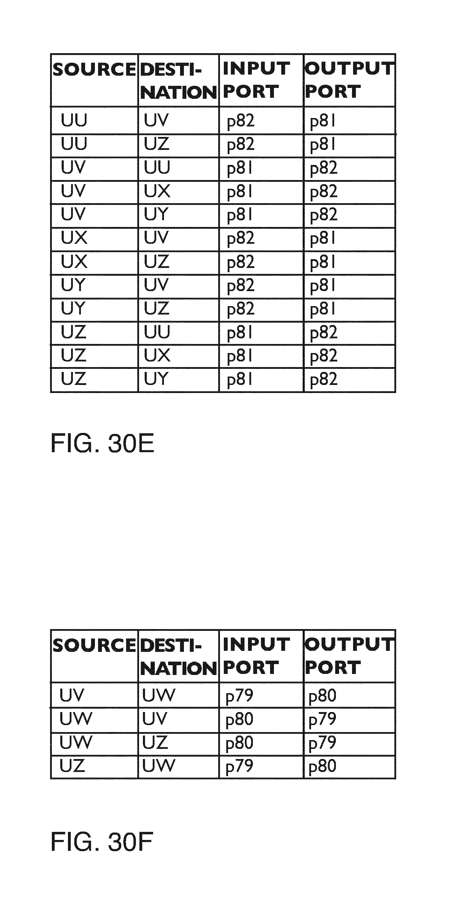

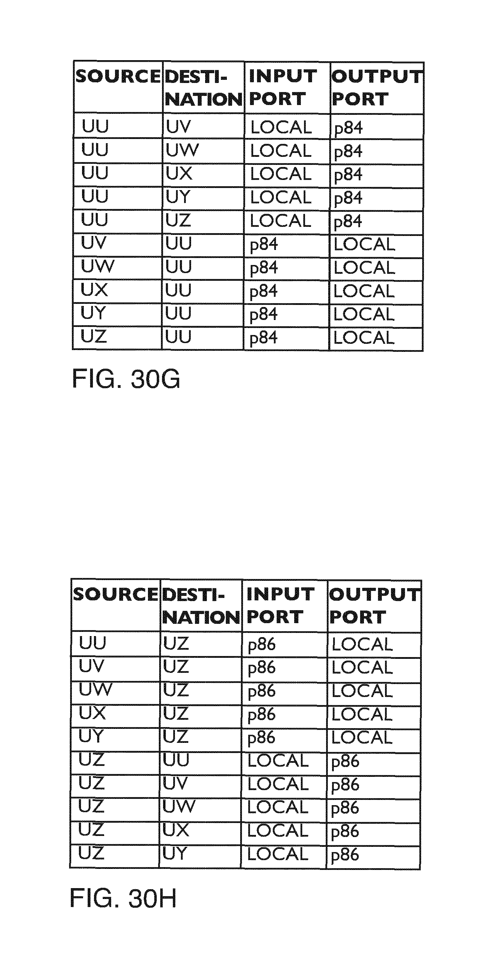

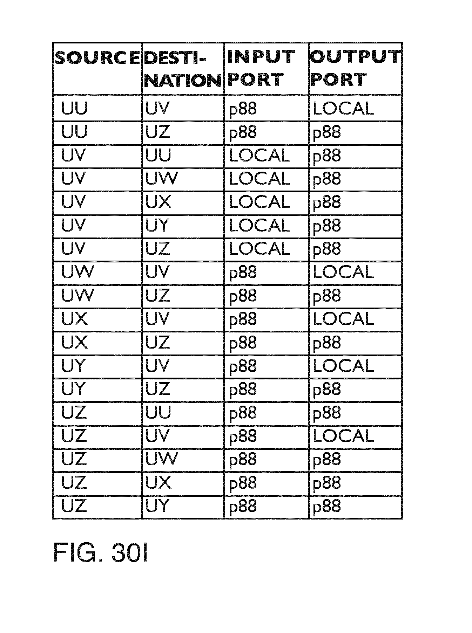

The resulting forwarding tables are shown in figure 30. For each output port in $F^{PoA\ Table}{}_{UUU}$ a forwarding entry is created for physical nodes (DA, DB, DC, DD, DE, DF, DG) or virtual nodes (HA, HB) to whom output port belongs, with the following items:

- Logical source node: row index i of element in $F^{PoA\ Table}{}_{UUU}$ in which output port occurs

- Logical destination node: column index j of element in $F^{PoA\ Table}{}_{UUU}$ in which output port occurs

- Input port: input port at position (h-1) for output port at position h in the sequence of PoAs or "local" in case output port is the first PoA in the sequence of PoAs.

- Output Port: output port

For each input port that is the last PoA in a sequence of PoAs in $F^{PoA\ Table}{}_{UUU}$ a forwarding entry for physical or virtual node to whom input port belongs is created for physical (nodes DA, DB, DC, DD, DE, DF, DG) or virtual nodes (HA, HB) to whom output port belongs, with the following items:

- Logical source node: row index i of element in $F^{PoA\ Table}_{UUU}$ in which input port occurs

- Logical destination node: column index j of element in $F^{PoA\ Table}_{UUU}$ in which input port occurs

- Input Port: input port

- Output Port: "local"

An optional load-balancing identifier is not used in this example.

The forwarding table entries can now be sent to the 'SDN Controller' responsible for the distribution of the forwarding table entries or alternatively directly to the physical and virtual nodes, depending on the implementation. When any change takes place in any physical, virtual or logical network or mapping (part of) the process depicted in figure 25 is repeated. The equivalent of the various matrices used in this example are also shown in the diagram of figure 26.

The forwarding tables shown in figures 30A-30I of the physical and virtual nodes reflect the node type of the particular node:

- Physical switch nodes DA,DB,DC,DD: Logical nodes UW,UX,UY were mapped to physical switch nodes DB,DC,DD, hence the forwarding tables of nodes DB,DC,DD contain forwarding entries for traffic with source or destination of their respective logical node. As DB,DC,DD are switch nodes traffic originating from or destined for other nodes is forwarded. Please note that no logical node was mapped to switch node DA, hence traffic only originating from or destined for other nodes is forwarded (no forwarding entries with input port or output port value 'local').
- Physical host node DG: forwarding table contains only forwarding entries depicting logical node UU as source or destination node. As per desired behavior, no forwarding takes place in the host node DG.
- Physical NIC nodes DE, DF: no logical nodes can be mapped to a NIC node, therefore NIC nodes DE, DF only provide forwarding of packets originating from other nodes. Please note the fixed forwarding relationship between ports p81 and p82 and ports p79 and p80 in node DE and node DF respectively.
- Virtual switch node HB: Logical switch node UV was mapped to virtual switch node HB, hence the forwarding table of node HB contains forwarding entries for traffic with source or destination UV. As HB is a switch node traffic originating from or destined for other nodes is forwarded.
- Virtual host node HA: forwarding table contains only forwarding entries depicting logical node UZ as source or destination node. As per desired behavior, no forwarding takes place in host node HA.

Virtual switch node HB illustrates Network Functions Virtualization (NFV): a virtual switch node implemented in a virtual machine is introduced in a physical network DAA, through which traffic is forwarded. Typically, the virtual switch node would perform optional operations such as but not limited to monitoring and/or recording and/or modifying of the incoming packet header and/or payload before forwarding the packet to one or more of it's output ports. Virtual switch node HB might also not forward (block) the packet.

A method with a minimum set of actions to be performed by an SDN compiler in accordance with the present invention can be defined as follows (between brackets references are made to the above steps relating to figure 25, however, the actions as defined here worded more generally):

method of controlling a network by a compiler based on a logical network model, the network comprising a first number of physical nodes and a second number of virtual nodes, said first number being equal to or larger than one, said second number being equal to or larger than zero, but said first and second numbers being such that their sum is at least two, the physical nodes being interconnected by physical links in accordance with a physical network layout, the logical network model comprising a third number of logical nodes, each logical node being indicated with a logical node name, each logical node name referring to at least one physical or at least one virtual node in the network, the method as performed by the compiler comprising the following actions:

a) Storing physical node names, each physical node name being an unique identifier of one physical node, and storing point-of-attachment names of said physical nodes, each of the point-of-attachment names of a physical node concerned being an unique identifier of a point-of-attachment between the certain physical node concerned and a physical link connecting the physical node concerned to another physical node [cf. step 1 and 2 of figure 25];

b) Storing a physical forwarding point-of-attachment relation defining physical paths of said physical network in dependence on a physical forwarding policy of said physical network, on said physical node names, and on said point-of-attachment names of said physical nodes, a physical path denoting a physical route a packet follows from a physical source node to a physical destination node [cf. steps 3 and 4 of figure 25];

c) Storing virtual node names, storing a first mapping relation defining how said virtual nodes and said physical nodes are mapped to one another, and storing a second mapping relation defining how said logical nodes are mapped to the physical nodes and the virtual nodes [cf. step 5 of figure 25];

d) Transforming paths in said physical network to paths between a set of nodes comprising said physical nodes and virtual nodes in dependence on said physical forwarding point-of-attachment relation and on said first mapping relation, as well as transforming paths between said set of physical nodes and virtual nodes to possible link relationships between said logical nodes in dependence on said paths between said set of physical nodes and virtual nodes and on said second mapping relation [cf. step 6 of figure 25];

e) Storing logical node names for said logical nodes and a set of logical links between said logical nodes, ; [cf. step 7 of figure 25]

f) Calculating a logical forwarding point-of-attachment relation defining logical paths in said logical network in dependence on a logical forwarding policy of said logical network, on said logical node names, and on said set of logical links between said logical nodes, a logical path denoting a logical route a packet follows from a logical source node to a logical destination node, [cf. step 8, 9 and 10 of figure 25]

g) Creating forwarding table entries for said physical nodes and said virtual nodes from said logical forwarding point-of-attachment relation; [cf. step 11 of figure 25]

h) Sending said forwarding table entries, either directly or indirectly, to selected physical nodes and selected virtual nodes. [cf. step 12 of figure 25]

In the above specification, reference has been made to many different kinds of units, like controller, compiler, node, virtual machine, NIC, etc. As will be apparent to persons skilled in the art, the functionality of such units is performed by at least one of hardware and software running on a processing unit. Such hardware may be any known type of hardware (now and in the future) arranged to perform the claimed functions. Figure 31 shows a schematic diagram of a computer arrangement that can perform such functions. Figure 31 shows a kind of "complete" picture: it will be evident that some components (like a printer) may not be used for many of the units specified in the present document.

The arrangement shown in figure 31 comprises a processor 1 for carrying out arithmetic operations.

The processor 1 is connected to a plurality of memory components, including a hard disk 5, Read Only Memory (ROM) 7, Electrically Erasable Programmable Read Only Memory (EEPROM) 9, and Random Access Memory (RAM) 11. Not all of these memory types need necessarily be provided. Moreover, these memory components need not be located physically close to the processor 1 but may be located remote from the processor 1.

The processor 1 is also connected to units for inputting instructions, data etc. by a user, like a keyboard 13, and a mouse 15. Other input units, such as a touch screen, a track ball and/or a voice converter, known to persons skilled in the art may be provided too.

A reading unit 17 connected to the processor 1 is provided. The reading unit 17 is arranged to read data from and possibly write data on a data carrier like a floppy disk 19 or a CDROM 21. Other data carriers may be tapes, DVD, Blu Ray disks, Compact Flash (CF), Secure Digital (SD), Micro SD, Mini SD, Extreme Digital (xD), and memory sticks, etc. as is known to persons skilled in the art. The data carrier may be provided with a computer program product comprising instructions and data arranged to be read by the processor 1 and, after being read, allowing the processor 1 to perform a method in accordance with the invention. Such a computer program product may then be loaded in one of the memory components 5, 7, 9, 11. However, such computer program product may, alternatively, be downloaded via the telecommunication network 27.

The processor 1 may be connected to a printer 23 for printing output data on paper, as well as to a display 3, for instance, a monitor or LCD (Liquid Crystal Display) screen, a plasma display panel, an Organic Light Emitting Diode (OLED), an Active Matrix OLED (AMOLED) or any other type of display known to persons skilled in the art.

The processor 1 may be connected to a communication network 27, for instance, the Public Switched Telephone Network (PSTN), a Local Area Network (LAN), a Wide Area Network (WAN), the Internet, etc. by means of an I/O unit 25. The processor 1 may be arranged to communicate with other communication arrangements through the network 27.

The processor 1 may be implemented as stand alone system, or as a plurality of parallel operating processors each arranged to carry out subtasks of a larger computer program, or as one or more main processors with several sub-processors. Parts of the functionality of the invention may even be carried out by remote processors communicating with processor 1 through the network 27.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

**Claims**

1. Method of controlling a network by a compiler based on a logical network model, the network comprising a first number of physical nodes and a second number of virtual nodes, said first number being equal to or larger than one, said second number being equal to or larger than zero, but said first and second numbers being such that their sum is at least two, the physical nodes being interconnected by physical links in accordance with a physical network layout, the logical network model comprising a third number of logical nodes, each logical node being indicated with a logical node name, each logical node name referring to at least one physical or at least one virtual node in the network, the method as performed by the compiler comprising the following actions:

   a) Storing physical node names, each physical node name being an unique identifier of one physical node, and storing point-of-attachment names of said physical nodes, each of the point-of-attachment names of a physical node concerned being an unique identifier of a point-of-attachment between the certain physical node concerned and a physical link connecting the physical node concerned to another physical node;
   b) Storing a physical forwarding point-of-attachment relation defining physical paths of said physical network in dependence on a physical forwarding policy of said physical network, on said physical node names, and on said point-of-attachment names of said physical nodes, a physical path denoting a physical route a packet follows from a physical source node to a physical destination node,
   c) Storing virtual node names, storing a first mapping relation defining how said virtual nodes and said physical nodes are mapped to one another, and storing a second mapping relation defining how said logical nodes are mapped to the physical nodes and the virtual nodes,
   d) Transforming paths in said physical network to paths between a set of nodes comprising said physical nodes and virtual nodes in dependence on said physical forwarding point-of-attachment relation and on said first mapping relation, as well as transforming paths between said set of physical nodes and virtual nodes to possible link relationships between said logical nodes in dependence on said paths between said set of physical nodes and virtual nodes and on said second mapping relation;
   e) Storing logical node names for said logical nodes and a set of logical links between said logical nodes, ;
   f) Calculating a logical forwarding point-of-attachment relation defining logical paths in said logical network in dependence on a logical forwarding policy of said logical network, on said logical node names, and on said set of logical links between said logical nodes, a logical path denoting a logical route a packet follows from a logical source node to a logical destination node,
   g) Creating forwarding table entries for said physical nodes and said virtual nodes from said logical forwarding point-of-attachment relation;
   h) Sending said forwarding table entries, either directly or indirectly, to selected physical nodes and selected virtual nodes.

2. The method according to claim 1, wherein, in action h), said forwarding table entries are sent to a software defined network, SDN, controller arranged to control said network.

3. The method according to any of the claims 1 and 2, wherein said action b) comprises calculating said physical forwarding point-of-attachment relation by said compiler before storing said physical forwarding point-of-attachment relation.

4. The method of any of the claims 1-3, wherein each physical node comprises at least one of a physical switch node, a physical network interfaces card node, and a physical host node, and each virtual node comprises at least one of a virtual switch node and a virtual host node, and wherein the method comprises creating instructions for said at least one of a physical switch node, a physical network interfaces card node, and a physical host node, and for said at least one of a virtual switch node and a virtual host node.

5. The method of any of the claims 1-4, wherein the method further comprises at least one of:

- storing the point of attachments names of said physical nodes in the form of a first matrix,
- storing the physical forwarding point-of-attachment relation in the form of a second matrix,
- storing the first mapping relation in the form of a third matrix,
- storing the second mapping relation in the form of a fourth matrix,
- storing the point of attachments names of said physical nodes and of said virtual nodes in the form of a fifth matrix,
- storing the logical forwarding point-of-attachment relation in the form of a sixth matrix.

6. The method according to claim 5, further comprising detecting forwarding loops in the physical network in the second matrix relating to the physical forwarding point-of-attachment relation and in the sixth matrix relating to the logical forwarding point-of-attachment relation, and removing any such forwarding loops.

7. The method according to any of the preceding claims, the method comprising at least one of the following actions:

- action a) also comprises storing physical link costs for each physical link in said physical network, and storing costs of said first mapping relation in a direction from physical nodes to virtual nodes, and action b) also comprises storing said physical forwarding point-of-attachment relation defining physical paths of said physical network in dependence on said physical link costs and storing costs of said physical forwarding point-of-attachment relation;
- action c) also comprises storing costs of said first mapping relation in said direction from virtual nodes to physical nodes, and action d) also comprises storing costs of said second mapping relation in a direction from physical nodes to logical nodes and from virtual nodes to logical nodes, and storing costs of said second mapping relation in a direction from logical nodes to physical nodes and from logical nodes to virtual nodes;
- action e) also comprises storing logical link costs for each one of said logical links in said set of logical links, and action f) also comprises calculating said logical forwarding point-of-attachment relation defining logical paths in said logical network in dependence on said logical link costs and storing costs of said logical forwarding point-of-attachment relation.

8. The method of claim 7, wherein the method further comprises at least one of:

- storing physical link costs in the form of a seventh matrix,
- storing the physical forwarding point-of-attachment relation costs in the form of an eighth matrix,
- storing costs of said first mapping relation in a direction from physical nodes to virtual nodes in the form of a ninth matrix,
- storing costs of said first mapping relation in said direction from virtual nodes to physical nodes in the form of an tenth matrix,
- storing costs of said second mapping relation in a direction from physical nodes to logical nodes and from virtual nodes to logical nodes in the form of a eleventh matrix,
- storing costs of said second mapping relation in a direction from logical nodes to physical nodes and from logical nodes to virtual nodes in the form of a twelth matrix,
- storing logical link costs for each one of said logical links in said set of logical links in the form of a thirteenth matrix,
- storing the logical forwarding point-of-attachment relation costs in the form of a fourteenth matrix.

9. The method according to claim 6 or 8 further comprising performing matrix multiplications.

10. The method according to any of the preceding claims, further comprising storing a load-balancing identifier per set of logical source node and logical destination node and wherein action g) further comprises calculating the forwarding table entries using the load-balancing identifiers.

11. The method according to any of the preceding claims, wherein said physical network comprises physical inter-domain nodes, a physical inter-domain node providing connectivity between physical networks, and said logical network comprises logical inter-domain nodes, a logical inter-domain node providing connectivity between logical networks.

12. A compiler arranged to perform the method of any of the claims 1-11.

13. A network comprising a compiler according to claim 12, as well as a first number of physical nodes and a second number of virtual nodes, said first number being equal to or larger than one, said second number being equal to or larger than zero, but said first and second numbers being such that their sum is at least two, the physical nodes being interconnected by physical links in accordance with a physical network layout, the physical nodes and virtual nodes being interconnected as defined in the first mapping relation.

14. The network according to claim 13, at least comprising at least one of a physical switch node and a virtual switch node, said at least one of said physical switch node and said virtual switch node being arranged to perform an additional operation on a received packet apart from forwarding said packet to an output port, said additional operation including at least one of a set of predetermined additional operations including monitoring a packet header, modifying said packet header, recording said packet header, monitoring a packet payload, modifying said packet payload, recording said packet payload and blocking the packet.

15. An electronic device comprising a packet forwarding system (CD) having a point-of-attachment (p166) to receive and transmit, respectively, messages (packets) from and to, respectively, external equipment, said electronic device being arranged to at least create and delete one or more virtual machines (GL) connected to the packet forwarding system (CD) via one or more internal connections, said one or more virtual machines providing at least one of virtual switch node and virtual host node functionality.

16. The electronic device according to claim 15, implemented by means of one or more hardware components, such as Application-Specific Integrated Circuits, and virtualization software to provide packet switching from and to external equipment as well as from and to one or more virtual machines.

FIG. 1

BA       BB       BD

BC

FIG. 2A

BAA

BA —— BB —— BD

BC

FIG. 2B

BA ~p101~ p103~ BB ~p104 p108~ BD

p102

p105

p107

p106 BC

FIG. 2C

BA ~1~ ~3~ BB ~2~ ~5~ BD

1

1

1

2 BC

FIG. 2D

FIG. 2E

FIG. 2F

FIG. 2G

| NODE TYPE | SWITCH | HOST | NIC |
|---|:---:|:---:|:---:|
| SEND SOURCE PACKET | X | X | |
| RECEIVE DESTINATION PACKET | X | X | |
| FORWARD INCOMING PACKET TO ANY OUTPUT PORT | X | | |
| PERFORM OPTIONAL OPERATION ON PACKET | X | | |
| FORWARD PACKET TO FIXED OUTPUT PORT | | | X |
| DROP PACKET | X | X | X |
| ENCAPSULATE AND REDIRECT PACKET TO SDN COMPILER (OPTIONAL) | X | X | X |

## FIG. 2H

| NODE | SWITCH | HOST | NIC |
|---|:---:|:---:|:---:|
| PHYSICAL | ⊗ | ◎ | ⊖ |
| VIRTUAL | (⊗) | (◎) | ▨ |

## FIG. 2I

○ PHYSICAL NODE

⊗ PHYSICAL SWITCH NODE

◎ PHYSICAL HOST NODE

⊖ PHYSICAL NIC (NETWORK INTERFACE CARD) NODE

( ) VIRTUAL NODE

(⊗) VIRTUAL SWITCH NODE

(◎) VIRTUAL HOST NODE

## FIG. 2J

POINT-OF-ATTACHMENT (POA)

PACKET FORWARDING
SYSTEM
**BE**

p109 · · ·

FIG. 3A

p109 · · ·

p109 · · · p109

FIG. 3B          FIG. 3C

COMPUTING
EQUIPMENT
**BF**

p110 · · ·

FIG. 4A

**BF**
p110 · · ·

FIG. 4B

**BF**   **BF'**
p110    p110 · · ·

FIG. 4C

COMPUTING EQUIPMENT

**GA**
VIRTUAL MACHINE

**GB**
VIRTUAL MACHINE

. . .

**GC**
VIRTUAL MACHINE

. . .

**GD**
VIRTUAL MACHINE

pl18

pl22

pl20

pl24

pl26

pl17

pl19

pl21

pl23

pl25

VIRTUAL SWITCH
**BJ**

. . .

VIRTUAL SWITCH
**BK**

pl13

pl12

pl16

pl15

NIC  **BG** . . .

NIC  **BH** . . .

pl11

pl14

FIG. 5A

(GA) (GB) . . . (GC) . . . (GD)

p118
p120
p122
p124
p126

p117 p119
p121 p123 p125

BJ

BK

p113 p112
p116 p115

BG . . .

BH . . .

p111
p114

FIG. 5B

( )

( ) . . .

( )

POA COST
POA COST
POA COST

POA COST
POA COST
POA COST

. . .

FIG. 6A

FIG. 6B

FIG. 6C

FIG. 7A

GH · · ·                    (GI) · · ·

pl49                    pl5l    pl53

· · ·

pl48
        pl46
BR   · · ·   pl47   BS   · · ·   BU   · · ·
pl35    pl40              pl37         pl50   pl52

pl34    pl36      pl39   pl42         pl45
              pl4l                   pl44

BP   BV · · · BQ  BW   · · ·          BT   · · ·

pl33  pl33   pl38  pl38               pl43

FIG. 7B

pl55                pl55              pl55    pl55
      BX                   BX              BX      BX'
pl54                pl54              pl54    pl54

FIG. 8A         FIG. 8B              FIG. 8C

FIG. 9A

FIG. 9B

FIG. 9C

COMPUTING EQUIPMENT

**GK**

VIRTUAL MACHINE

. . .

p165

. . .

p164

VIRTUAL
SWITCH

**CC**

. . .

p163 | p162

NIC | . . . **CB**

p161

. . .

p160

PACKET
FORWARDING SYSTEM
**CA**

p159 . . .

**FIG. 10A**

(**GK**) . . .

p165

. . .

p164

**CC** . . .

p163
p162

**CB** . . .

p161
p160

**CA**

p159 . . .

**FIG. 10B**

FIG. 11A

FIG. 11B

FIG. 12A

FIG. 12B

FIG. 12C

FIG. 12D

FIG. 12E

FIG. 12F

FIG. 12G

| NODE | SWITCH | HOST | NIC |
|---|---|---|---|
| PHYSICAL | ⊗ | ◎ | ⊘ |
| VIRTUAL | (⊗) | (◎) | ▨ |

| NODE | SWITCH | HOST | NIC |
|---|---|---|---|
| LOGICAL | (⊗) | (◎) | ▨ |

FIG. 13A

○ PHYSICAL NODE

⊗ PHYSICAL SWITCH NODE

◎ PHYSICAL HOST NODE

⊘ PHYSICAL NIC (NETWORK INTER-FACE CARD) NODE

( ) VIRTUAL NODE

(⊗) VIRTUAL SWITCH NODE

(◎) VIRTUAL HOST NODE

LOGICAL NODE

LOGICAL SWITCH NODE

LOGICAL HOST NODE

FIG. 13B

FIG. 14A

FIG. 14B

FIG. 14C

FIG. 14D

FIG. 14E

FIG. 15A

FIG. 15B

FIG. 15C

FIG. 16

FORWARDING
TABLE 66

. . .

FORWARDING
FUNCTION

PACKET IN

INPUT
PORT

PACKET OUT

OUTPUT
PORT

DROP
PACKET

ENCAPSULATE PACKET
AND REDIRECT TO
COMPILER (OPTIONAL)

FIG. 17

FORWARDING
TABLE

. . .

LOCAL
(DESTINATION)

LOCAL
(SOURCE)

FORWARDING
FUNCTION

PACKET IN

INPUT
PORT

PACKET OUT

OUTPUT
PORT

DROP
PACKET

ENCAPSULATE PACKET
AND REDIRECT TO
COMPILER (OPTIONAL)

FIG. 18A

FIG. 18B

FORWARDING
TABLE

. . .

LOCAL
(DESTINATION)

LOCAL
(SOURCE)

FORWARDING
FUNCTION

PACKET IN

INPUT
PORT

OUTPUT
PORT

PACKET OUT

DROP
PACKET

ENCAPSULATE PACKET
AND REDIRECT TO
COMPILER (OPTIONAL)

FIG. 19

FORWARDING
TABLE

. . .

FORWARDING
FUNCTION

PACKET IN

PACKET OUT

DROP
PACKET

ENCAPSULATE PACKET
AND REDIRECT TO
COMPILER (OPTIONAL)

FIG. 20A

FIG. 20B

FIG. 20C

| | RD | RE | RC | ... |
|---|---|---|---|---|
| **RA** | OUTPUT PORT (INPUT PORT) ... ⋮ | OUTPUT PORT (INPUT PORT) ... ⋮ | OUTPUT PORT (INPUT PORT) ... ⋮ | ... |
| **RB** | OUTPUT PORT (INPUT PORT) ... ⋮ | OUTPUT PORT (INPUT PORT) ... ⋮ | OUTPUT PORT (INPUT PORT) ... ⋮ | ... |
| **RC** | OUTPUT PORT (INPUT PORT) ... ⋮ | OUTPUT PORT (INPUT PORT) ... ⋮ | OUTPUT PORT (INPUT PORT) ... ⋮ | ... |
| ⋮ | ⋮ | ⋮ | ⋮ | |

FIG. 21A

| | RD | RE | RF | ... |
|---|---|---|---|---|
| **RA** | COST VALUE ⋮ | COST VALUE ⋮ | COST VALUE ⋮ | ... |
| **RB** | COST VALUE ⋮ | COST VALUE ⋮ | COST VALUE ⋮ | ... |
| **RC** | COST VALUE ⋮ | COST VALUE ⋮ | COST VALUE ⋮ | ... |
| ⋮ | ⋮ | ⋮ | ⋮ | |

FIG. 21B

| | RK | RL | RM | ... |
|---|---|---|---|---|
| **RG** | MAPPING STATEMENT | MAPPING STATEMENT | MAPPING STATEMENT | ... |
| **RH** | MAPPING STATEMENT | MAPPING STATEMENT | MAPPING STATEMENT | ... |
| **RJ** | MAPPING STATEMENT | MAPPING STATEMENT | MAPPING STATEMENT | ... |
| ⋮ | ⋮ | ⋮ | ⋮ | |

FIG. 22A

| | RO | RP | RQ | ... |
|---|---|---|---|---|
| **RN** | MAPPING STATEMENT | MAPPING STATEMENT | MAPPING STATEMENT | ... |

FIG. 22B

|      | RU  | RV  | RW  |
|------|-----|-----|-----|
| RR   | sa  | sb  | sc  |
| RS   | sd  | se  | sf  |
| RT   | sg  | sh  | sj  |

FIG. 23A

$$sa_1$$
$$sa_2$$
$$\ldots$$
$$sa_q$$

FIG. 23B

$$sb_1$$
$$sb_2$$
$$\ldots$$
$$sb_r$$

FIG. 23C

$$sc_1$$
$$sc_2$$
$$\ldots$$
$$sc_s$$

FIG. 23D

|      | RX  | RY  | RZ  |
|------|-----|-----|-----|
| RU   | sk  | sl  | sm  |
| RV   | sn  | sp  | sq  |
| RW   | sr  | ss  | st  |

FIG. 23E

$sk_1$
$sk_2$
. . .
$sk_t$

**FIG. 23F**

$sn_1$
$sn_2$
. . .
$sn_u$

**FIG. 23G**

$sr_1$
$sr_2$
. . .
$sr_w$

**FIG. 23H**

| | RX | RY | RZ |
|---|---|---|---|
| **RR** | sa ** sk<br>sb ** sn<br>sc ** sr | sa ** sl<br>sb ** sp<br>sc ** ss | sa ** sm<br>sb ** sq<br>sc ** st |
| **RS** | sd ** sk<br>se ** sn<br>sf ** sr | sd ** sl<br>se ** sp<br>sf ** ss | sd ** sm<br>se ** sq<br>sf ** st |
| **RT** | sg ** sk<br>sh ** sn<br>sj ** sr | sg ** sl<br>sh ** sp<br>sj ** ss | sg ** sm<br>sh ** sq<br>sj ** st |

**FIG. 24A**

FIG. 24B

$sa_1sk_1$
$sa_1sk_2$
. . .
$sa_1sk_t$
$sa_2sk_1$
$sa_2sk_2$
. . .
$sa_2sk_t$

. . .

$sa_qsk_1$
$sa_qsk_2$
. . .
$sa_qsk_t$

FIG. 24C

$sa_1sk_1$
$sa_1sk_2$
. . .
$sa_1sk_t$
$sa_2sk_1$
$sa_2sk_2$
. . .
$sa_2sk_t$

. . .

$sa_qsk_1$
$sa_qsk_2$
. . .
$sa_qsk_t$
$sb_1sn_1$
$sb_1sn_2$
. . .
$sb_1sn_u$
$sb_2sn_1$
$sb_2sn_2$
. . .
$sb_2sn_u$

. . .

$sb_rsn_1$
$sb_rsn_2$
. . .
$sb_rsn_u$
$sc_1sr_1$
$sc_1sr_2$
. . .
$sc_1sr_w$
$sc_2sr_1$
$sc_2sr_2$
. . .
$sc_2sr_w$

. . .

$sc_ssr_1$
$sc_ssr_2$
. . .
$sc_ssr_w$

FIG. 24D

$sk_1$
$sk_2$
. . .
$sk_t$
$sa_2sk_1$
$sa_2sk_2$
. . .
$sa_2sk_t$

. . .

$sa_qsk_1$
$sa_qsk_2$
. . .
$sa_qsk_t$

|  | RX | RY | RZ |
|---|---|---|---|
| **RR** | sa ++ sk<br>sb ++ sn<br>sc ++ sr | sa ++ sl<br>sb ++ sp<br>sc ++ ss | sa ++ sm<br>sb ++ sq<br>sc ++ st |
| **RS** | sd ++ sk<br>se ++ sn<br>sf ++ sr | sd ++ sl<br>se ++ sp<br>sf ++ ss | sd ++ sm<br>se ++ sq<br>sf ++ st |
| **RT** | sg ++ sk<br>sh ++ sn<br>sj ++ sr | sg ++ sl<br>sh ++ sp<br>sj ++ ss | sg ++ sm<br>sh ++ sq<br>sj ++ st |

FIG. 24E

$sa_1 + sk_1$
$sa_1 + sk_2$
$\ldots$
$sa_1 + sk_t$
$sa_2 + sk_1$
$sa_2 + sk_2$
$\ldots$
$sa_2 + sk_t$

$\ldots$

$sa_q + sk_1$
$sa_q + sk_2$
$\ldots$
$sa_q + sk_t$

FIG. 24F

$sa_1 + sk_1$
$sa_1 + sk_2$
$\ldots$
$sa_1 + sk_t$
$sa_2 + sk_1$
$sa_2 + sk_2$
$\ldots$
$sa_2 + sk_t$

$\ldots$

$sa_q + sk_1$
$sa_q + sk_2$
$\ldots$
$sa_q + sk_t$
$sb_1 + sn_1$
$sb_1 + sn_2$
$\ldots$
$sb_1 + sn_u$
$sb_2 + sn_1$
$sb_2 + sn_2$
$\ldots$
$sb_2 + sn_u$

$\ldots$

$sb_r + sn_1$
$sb_r + sn_2$
$\ldots$
$sb_r + sn_u$
$sc_1 + sr_1$
$sc_1 + sr_2$
$\ldots$
$sc_1 + sr_w$
$sc_2 + sr_1$
$sc_2 + sr_2$
$\ldots$
$sc_2 + sr_w$

$\ldots$

$sc_s + sr_1$
$sc_s + sr_2$
$\ldots$
$sc_s + sr_w$

FIG. 24G

FIG. 24H

FIG. 24I

|     | CH         | CJ         | CK         | CL         |
|-----|------------|------------|------------|------------|
| CH  | 0          | pl7l(pl73) | pl72(pl76) | 0          |
| CJ  | pl73(pl7l) | 0          | pl75(pl77) | pl74(pl78) |
| CK  | pl76(pl72) | pl77(pl75) | 0          | 0          |
| CL  | 0          | pl78(pl74) | 0          | 0          |

FIG. 24J

|  | CH | CJ | CK | CL |
|---|---|---|---|---|
| **CH** | I | pI7I(pI73) | pI72(pI76)<br><br>pI7I(pI73)pI75(pI77) | pI7I(pI73)pI74(pI78) |
| **CJ** | pI73(pI7I) | I | pI75(pI77) | pI74(pI78) |
| **CK** | pI76(pI72)<br><br>pI77(pI75)pI73(pI7I) | pI77(pI75) | I | pI77(pI75)pI74(pI78) |
| **CL** | pI78(pI74)pI73(pI7I) | pI78(pI74) | pI78(pI74)pI75(pI77) | I |

FIG. 24K

|  | CH | CJ | CK | CL |
|---|---|---|---|---|
| **GR** | p180(p179) | 0 | 0 | 0 |
| **GS** | 0 | p182(p181) | 0 | 0 |
| **GT** | 0 | p184(p183) | 0 | 0 |

FIG. 24L

| | CH | CJ | CK | CL |
|---|---|---|---|---|
| **GR** | p180(p179) | p180(p179)p171(p173) | p180(p179)p172(p176)<br><br>p180(p179)p171(p173)-p175(p177) | p180(p179)p171(p173)-p174(p178) |
| **GS** | p182(p181)p173(p171) | p182(p181) | p182(p181)p175(p177) | p182(p181)p174(p178) |
| **GT** | p184(p183)p173(p171) | p184(p183) | p184(p183)p175(p177) | p184(p183)p174(p178) |

FIG. 24M

START

**1** RETRIEVE AND STORE PHYSICAL NODE NAMES, PHYSICAL NODE TYPES, PHYSICAL LINKS OF PHYSICAL NETWORK AAA AND PHYSICAL AND VIRTUAL POINT-OF-ATTACHMENT'S (POA'S). RETRIEVE AND/OR DEFINE AND STORE OPTIONAL LINK AND MAPPING COSTS FOR EACH COST TYPE K

$M_{AAA}$

**2** CREATE ADJACENCY MATRICES OF NETWORK AAA: $A^{POA}_{AAA}$ (SINGLE MATRIX) AND $A^{COST\,K}_{AAA}$ FOR EACH COST TYPE K (MATRIX FOR EACH COST TYPE K)

$A^{POA}_{AAA}$ $A^{COST\,K}_{AAA}$

**3** DEFINE FORWARDING POLICY $P_{AAA}$ OF NETWORK AAA

$P_{AAA}$

**4** CALCULATE PATHS OF NETWORK AAA ACCORDING TO $(F^{POA}_{AAA}, F^{COST\,K}_{AAA}) = P_{AAA}(A^{POA}_{AAA}, A^{COST\,K}_{AAA})$ (FOR ALL COST K)

$F^{POA}_{AAA}$ $F^{COST\,K}_{AAA}$

**5** RETRIEVE AND STORE VIRTUAL NODE NAMES, VIRTUAL NODE TYPES, VIRTUAL POA'S AND OPTIONAL MAPPING COSTS FOR EACH COST TYPE K OF VIRTUAL NETWORK KKK. DEFINE LOGICAL NODES OF LOGICAL NETWORK VVV AND OPTIONAL MAPPING COSTS FOR EACH COST TYPE K. CREATE MAPPING MATRICES.

$M^{COST\,K}_{AAA/KKK-AAA}$ $M^{COST\,K}_{AAA-AAA/KKK}$ $M^{POA}_{AAA/KKK-AAA}$ $M^{POA}_{AAA-AAA/KKK}$
$M^{COST\,K}_{VVV-AAA/KKK}$ $M^{COST\,K}_{AAA/KKK-VVV}$ $M^{POA}_{VVV-AAA/KKK}$ $M^{POA}_{AAA/KKK-VVV}$
$M_{KKK}$ $M_{VVV}$

$M^{COST\,K}_{AAA/KKK-AAA}$
$M^{COST\,K}_{AAA-AAA/KKK}$
$M^{COST\,K}_{VVV-AAA/KKK}$
$M^{COST\,K}_{AAA/KKK-VVV}$

$M^{POA}_{AAA/KKK-AAA}$
$M^{POA}_{AAA-AAA/KKK}$
$M^{POA}_{VVV-AAA/KKK}$
$M^{POA}_{AAA/KKK-VVV}$

$M_{KKK}$
$M_{VVV}$

(TO STEP 6)

FIG. 25(1)

(FROM STEP 5)

**6** TRANSFORM PATH RELATIONSHIPS IN NETWORK AAA AND NETWORK KKK TO ALL POSSIBLE LINK RELATIONSHIPS IN NETWORK VVV:

$$A^{POA\ ALL}_{VVV} = M^{POA}_{VVV-AAA/KKK} \cdot (M^{POA}_{AAA/KKK-AAA} \cdot F^{POA}_{AAA} \cdot M^{POA}_{AAA-AAA/KKK}) \cdot M^{POA}_{AAA/KKK-VVV}$$

$$A^{COST\ K\ ALL}_{VVV} = M^{COST\ K}_{VVV-AAA/KKK} \cdot (M^{COST\ K}_{AAA/KKK-AAA} \cdot F^{COST\ K}_{AAA} \cdot M^{COST\ K}_{AAA-AAA/KKK}) \cdot M^{COST\ K}_{AAA/KKK-VVV}$$

(OPTIONAL)

$A^{POA\ ALL}_{VVV}$    $A^{COST\ K\ ALL}_{VVV}$

**7** DEFINE & STORE LINKS OF LOGICAL NETWORK VVV AND OPTIONAL LINK COSTS FOR EACH COST TYPE N

**8** CREATE ADJACENCY MATRICES OF NETWORK VVV: DEFINE $A^{COST\ N}_{VVV}$ (MATRIX FOR EACH COST TYPE N) AND CREATE $A^{POA}_{VVV}$ (SINGLE MATRIX) BY REMOVING ADJACENCIES FROM $A^{POA\ ALL}_{VVV}$

$A^{POA}_{VVV}$    $A^{COST\ N}_{VVV}$

**9** DEFINE FORWARDING POLICY $P_{VVV}$ OF NETWORK VVV

$P_{VVV}$

**10** CALCULATE PATHS IN NETWORK VVV ACCORDING TO $(F^{POA}_{VVV}, F^{COST\ N}_{VVV}) = P_{VVV}(A^{POA}_{VVV}, A^{COST\ N}_{VVV})$ (FOR ALL COST N)

$F^{POA}_{VVV}$    $F^{COST\ N}_{VVV}$

**11** CREATE FORWARDING TABLE ENTRIES FOR ALL NODES IN NETWORK AAA AND NETWORK KKK FROM $F^{POA}_{VVV}$

**12** DISTRIBUTE FORWARDING TABLE ENTRIES TO:
A) SDN CONTROLLER OR
B) ALL NODES IN NETWORK AAA AND NETWORK KKK DIRECTLY

END

REPEAT (PART OF) PROCESS IN CASE OF ANY CHANGE

FIG. 25 (2)

PHYSICAL

$A^{POA}_{AAA}$
$A^{COST\,K}_{AAA}$

$\boxed{M_{AAA}}$

$\boxed{P_{AAA}}$

PHYSICAL

$F^{POA}_{AAA}$
$F^{COST\,K}_{AAA}$

$\boxed{M_{KKK}}$
$\boxed{M_{VVV}}$

$M^{POA}_{AAA/KKK-AAA}$
$M^{POA}_{AAA-AAA/KKK}$
$M^{POA}_{VVV-AAA/KKK}$
$M^{POA}_{AAA/KKK-VVV}$

$M^{COST\,K}_{AAA/KKK-AAA}$
$M^{COST\,K}_{AAA-AAA/KKK}$
$M^{COST\,K}_{VVV-AAA/KKK}$
$M^{COST\,K}_{AAA/KKK-VVV}$

LOGICAL

$A^{POA}_{VVV}$
$A^{COST\,N}_{VVV}$

$\boxed{P_{VVV}}$

LOGICAL

$F^{POA}_{VVV}$
$F^{COST\,N}_{VVV}$

FORWARDING TABLE
ENTRIES FOR ALL NODES
OF NETWORK AAA AND
NETWORK KKK

FIG. 26

|  | DA | DB | DC | DD | DE | DF | DG | DE' | DF' | DG' |
|-----|-----|-----|-----|-----|-----|-----|-----|-----|-----|-----|
| **DAA** | I | I | I | I | I | I | I | I | I | I |

FIG. 27A

|  | DA | DB | DC | DD | DE | DF | DG | DE' | DF' | DG' |
|-----|-----|-----|-----|-----|-----|-----|-----|-----|-----|-----|
| **DA** | 0 | 0 | 0 | 0 | p72(p81) | p71(p79) | 0 | 0 | 0 | 0 |
| **DB** | 0 | 0 | p75(p77) | p74(p78) | 0 | 0 | 0 | 0 | p73(p80) | 0 |
| **DC** | 0 | p77(p75) | 0 | 0 | 0 | 0 | 0 | p76(p82) | 0 | 0 |
| **DD** | 0 | p78(p74) | 0 | 0 | 0 | 0 | 0 | 0 | 0 | p83(p84) |
| **DE** | 0 | 0 | p82(p76) | 0 | 0 | 0 | 0 | 0 | 0 | 0 |
| **DF** | 0 | p80(p73) | 0 | 0 | 0 | 0 | 0 | 0 | 0 | 0 |
| **DG** | 0 | 0 | 0 | p84(p83) | 0 | 0 | 0 | 0 | 0 | 0 |
| **DE'** | p81(p72) | 0 | 0 | 0 | 0 | 0 | 0 | 0 | 0 | 0 |
| **DF'** | p79(p71) | 0 | 0 | 0 | 0 | 0 | 0 | 0 | 0 | 0 |
| **DG'** | 0 | 0 | 0 | 0 | 0 | 0 | 0 | 0 | 0 | 0 |

FIG. 27B

|  | DA | DB | DC | DD | DE | DF | DG | DE' | DF' | DG' |
|---|---|---|---|---|---|---|---|---|---|---|
| **DA** | ∞ | ∞ | ∞ | ∞ | 0 | 0 | ∞ | ∞ | ∞ | ∞ |
| **DB** | ∞ | ∞ | I | I | ∞ | ∞ | ∞ | ∞ | I | ∞ |
| **DC** | ∞ | I | ∞ | ∞ | ∞ | ∞ | ∞ | I | ∞ | ∞ |
| **DD** | ∞ | I | ∞ | ∞ | ∞ | ∞ | ∞ | ∞ | ∞ | I |
| **DE** | ∞ | ∞ | I | ∞ | ∞ | ∞ | ∞ | ∞ | ∞ | ∞ |
| **DF** | ∞ | I | ∞ | ∞ | ∞ | ∞ | ∞ | ∞ | ∞ | ∞ |
| **DG** | ∞ | ∞ | ∞ | I | ∞ | ∞ | ∞ | ∞ | ∞ | ∞ |
| **DE'** | 0 | ∞ | ∞ | ∞ | ∞ | ∞ | ∞ | ∞ | ∞ | ∞ |
| **DF'** | 0 | ∞ | ∞ | ∞ | ∞ | ∞ | ∞ | ∞ | ∞ | ∞ |
| **DG'** | ∞ | ∞ | ∞ | ∞ | ∞ | ∞ | ∞ | ∞ | ∞ | ∞ |

FIG. 27C

| | DA | DB | DC | DD | DE |
|---|---|---|---|---|---|
| **DA** | I | p71(p79)p80(p73) | p72(p81)p82(p76) | p71(p79)p80(p73)-p74(p78) | p72(p81) |
| **DB** | p73(p80)p79(p71) | I | p75(p77) | p74(p78) | p73(p80)p79(p71)-p72(p81) |
| **DC** | p76(p82)p81(p72) | p77(p75) | I | p77(p75)p74(p78) | p76(p82)p81(p72)-p72(p81) |
| **DD** | p78(p74)p73(p80)-p79(p71) | p78(p74) | p78(p74)p75(p77) | I | p78(p74)p73(p80)-p79(p71)p72(p81) |
| **DE** | p82(p76)p76(p82)-p81(p72) | p82(p76)p77(p75) | p82(p76) | p82(p76)p77(p75)-p74(p78) | I |
| **DF** | p80(p73)p73(p80)-p79(p71) | p80(p73) | p80(p73)p75(p77) | p80(p73)p74(p78) | p80(p73)p73(p80)-p79(p71)p72(p81) |
| **DG** | p84(p83)p78(p74)-p73(p80)p79(p71) | p84(p83)p78(p74) | p84(p83)p78(p74)-p75(p77) | p84(p83) | p84(p83)p78(p74)-p73(p80)p79(p71)-p72(p81) |
| **DE'** | p81(p72) | p81(p72)p71(p79)-p80(p73) | p81(p72)p72(p81)-p82(p76) | p81(p72)p71(p79)-p80(p73)p74(p78) | p81(p72)p72(p81) |
| **DF'** | p79(p71) | p79(p71)p71(p79)-p80(p73) | p79(p71)p72(p81)-p82(p76) | p79(p71)p71(p79)-p80(p73)p74(p78) | p79(p71)p72(p81) |
| **DG'** | 0 | 0 | 0 | 0 | 0 |

FIG. 27D (1)

| | DF | DG | DE' | DF' | DG' |
|---|---|---|---|---|---|
| **(DA)** | p71(p79) | 0 | p72(p81)p82(p76)-p76(p82) | p71(p79)p80(p73)-p73(p80) | p71(p79)p80(p73)-p74(p78)p83(p84) |
| **(DB)** | p73(p80)p79(p71)-p71(p79) | 0 | p75(p77)p76(p82) | p73(p80) | p74(p78)p83(p84) |
| **(DC)** | p76(p82)p81-(p72)p71(p79) | 0 | p76(p82) | p77(p75)p73(p80) | p77(p75)p74(p78)-p83(p84) |
| **(DD)** | p78(p74)p73(p80)-p79(p71)p71(p79) | 0 | p78(p74)p75(p77)-p76(p82) | p78(p74)p73(p80) | p83(p84) |
| **(DE)** | p82(p76)p76(p82)-p81(p72)p71(p79) | 0 | p82(p76)p76(p82) | p72(p76)p77(p75)-p73(p80) | p82(p76)p77(p75)-p74(p78)p83(p84) |
| **(DF)** | I | 0 | p80(p73)p75(p77)-p76(p82) | p80(p73)p73(p80) | p80(p73)p74(p78)-p83(p84) |
| **(DG)** | p84(p83)p78(p74)-p73(p80)p79(p71)-p71(p79) | I | p84(p83)p78(p74)-p75(p77)p76(p82) | p84(p83)p78(p74)-p73(p80) | p84(p83)p83(p84) |
| **(DE')** | p81(p72)p71(p79) | 0 | I | p81(p72)p71(p79)-p80(p73)p73(p80) | p81(p72)p71(p79)-p80(p73)p74(p78)-p83(p84) |
| **(DF')** | p79(p71)p71(p79) | 0 | p79(p71)p72(p81)-p82(p76)p76(p82) | I | p79(p71)p71(p79)-p80(p73)p74-(p78)p83(p84) |
| **(DG')** | 0 | 0 | 0 | 0 | I |

FIG. 27D (2)

80

| | DA | DB | DC | DD | DE | DF | DG | DE' | DF' | DG' |
|---|---|---|---|---|---|---|---|---|---|---|
| **DA** | 0 | 1 | 1 | 2 | 0 | 0 | ∞ | 2 | 2 | 3 |
| **DB** | 1 | 0 | 1 | 1 | 1 | 1 | ∞ | 2 | 1 | 2 |
| **DC** | 1 | 1 | 0 | 2 | 1 | 1 | ∞ | 1 | 2 | 3 |
| **DD** | 2 | 1 | 2 | 0 | 2 | 2 | ∞ | 3 | 2 | 1 |
| **DE** | 2 | 2 | 1 | 3 | 0 | 2 | ∞ | 2 | 3 | 4 |
| **DF** | 2 | 1 | 2 | 2 | 2 | 0 | ∞ | 3 | 2 | 3 |
| **DG** | 3 | 2 | 3 | 1 | 3 | 3 | 0 | 4 | 3 | 2 |
| **DE'** | 0 | 1 | 1 | 2 | 0 | 0 | ∞ | 0 | 2 | 3 |
| **DF'** | 0 | 1 | 1 | 2 | 0 | 0 | ∞ | 2 | 0 | 3 |
| **DG'** | ∞ | ∞ | ∞ | ∞ | ∞ | ∞ | ∞ | ∞ | ∞ | 0 |

FIG. 27E

| | HA | HB | HA' |
|---|---|---|---|
| **HAA** | 1 | 1 | 1 |

FIG. 28A

|      | DA       | DB | DC | DD | DE | DF | DG | DE' | DF' | DG' |
|------|----------|-----|-----|-----|-----|-----|-----|-----|-----|-----|
| **DA**  | I        | 0   | 0   | 0   | 0   | 0   | 0   | 0   | 0   | 0   |
| **DB**  | 0        | I   | 0   | 0   | 0   | 0   | 0   | 0   | 0   | 0   |
| **DC**  | 0        | 0   | I   | 0   | 0   | 0   | 0   | 0   | 0   | 0   |
| **DD**  | 0        | 0   | 0   | I   | 0   | 0   | 0   | 0   | 0   | 0   |
| **DE**  | 0        | 0   | 0   | 0   | I   | 0   | 0   | 0   | 0   | 0   |
| **DF**  | 0        | 0   | 0   | 0   | 0   | I   | 0   | 0   | 0   | 0   |
| **DG**  | 0        | 0   | 0   | 0   | 0   | 0   | I   | 0   | 0   | 0   |
| **DE'** | 0        | 0   | 0   | 0   | 0   | 0   | 0   | I   | 0   | 0   |
| **DF'** | 0        | 0   | 0   | 0   | 0   | 0   | 0   | 0   | I   | 0   |
| **DG'** | 0        | 0   | 0   | 0   | 0   | 0   | 0   | 0   | 0   | I   |
| **HA**  | p86(p85) | 0   | 0   | 0   | 0   | 0   | 0   | 0   | 0   | 0   |
| **HB**  | p88(p87) | 0   | 0   | 0   | 0   | 0   | 0   | 0   | 0   | 0   |
| **HA'** | 0        | 0   | 0   | 0   | 0   | 0   | 0   | 0   | 0   | 0   |

FIG. 28B

|      | DA | DB | DC | DD | DE | DF | DG | DE' | DF' | DG' | HA | HB | HA' |
|------|----|----|----|----|----|----|----|-----|-----|-----|----|----|-----|
| **DA** | I | 0 | 0 | 0 | 0 | 0 | 0 | 0 | 0 | 0 | 0 | p87(p88) | p85(p86) |
| **DB** | 0 | I | 0 | 0 | 0 | 0 | 0 | 0 | 0 | 0 | 0 | 0 | 0 |
| **DC** | 0 | 0 | I | 0 | 0 | 0 | 0 | 0 | 0 | 0 | 0 | 0 | 0 |
| **DD** | 0 | 0 | 0 | I | 0 | 0 | 0 | 0 | 0 | 0 | 0 | 0 | 0 |
| **DE** | 0 | 0 | 0 | 0 | I | 0 | 0 | 0 | 0 | 0 | 0 | 0 | 0 |
| **DF** | 0 | 0 | 0 | 0 | 0 | I | 0 | 0 | 0 | 0 | 0 | 0 | 0 |
| **DG** | 0 | 0 | 0 | 0 | 0 | 0 | I | 0 | 0 | 0 | 0 | 0 | 0 |
| **DE'** | 0 | 0 | 0 | 0 | 0 | 0 | 0 | I | 0 | 0 | 0 | 0 | 0 |
| **DF'** | 0 | 0 | 0 | 0 | 0 | 0 | 0 | 0 | I | 0 | 0 | 0 | 0 |
| **DG'** | 0 | 0 | 0 | 0 | 0 | 0 | 0 | 0 | 0 | I | 0 | 0 | 0 |

FIG. 28C

|      | DA | DB | DC | DD | DE | DF | DG | DE' | DF' | DG' |
|------|----|----|----|----|----|----|----|-----|-----|-----|
| DA   | 0  | ∞  | ∞  | ∞  | ∞  | ∞  | ∞  | ∞   | ∞   | ∞   |
| DB   | ∞  | 0  | ∞  | ∞  | ∞  | ∞  | ∞  | ∞   | ∞   | ∞   |
| DC   | ∞  | ∞  | 0  | ∞  | ∞  | ∞  | ∞  | ∞   | ∞   | ∞   |
| DD   | ∞  | ∞  | ∞  | 0  | ∞  | ∞  | ∞  | ∞   | ∞   | ∞   |
| DE   | ∞  | ∞  | ∞  | ∞  | 0  | ∞  | ∞  | ∞   | ∞   | ∞   |
| DF   | ∞  | ∞  | ∞  | ∞  | ∞  | 0  | ∞  | ∞   | ∞   | ∞   |
| DG   | ∞  | ∞  | ∞  | ∞  | ∞  | ∞  | 0  | ∞   | ∞   | ∞   |
| DE'  | ∞  | ∞  | ∞  | ∞  | ∞  | ∞  | ∞  | 0   | ∞   | ∞   |
| DF'  | ∞  | ∞  | ∞  | ∞  | ∞  | ∞  | ∞  | ∞   | 0   | ∞   |
| DG'  | ∞  | ∞  | ∞  | ∞  | ∞  | ∞  | ∞  | ∞   | ∞   | 0   |
| HA   | 0  | ∞  | ∞  | ∞  | ∞  | ∞  | ∞  | ∞   | ∞   | ∞   |
| HB   | 0  | ∞  | ∞  | ∞  | ∞  | ∞  | ∞  | ∞   | ∞   | ∞   |
| HA'  | ∞  | ∞  | ∞  | ∞  | ∞  | ∞  | ∞  | ∞   | ∞   | ∞   |

FIG. 28D

|     | DA | DB | DC | DD | DE | DF | DG | DE' | DF' | DG' | HA | HB | HA' |
|-----|-----|-----|-----|-----|-----|-----|-----|-----|-----|-----|-----|-----|-----|
| **DA** | 0 | ∞ | ∞ | ∞ | ∞ | ∞ | ∞ | ∞ | ∞ | ∞ | ∞ | 0 | 0 |
| **DB** | ∞ | 0 | ∞ | ∞ | ∞ | ∞ | ∞ | ∞ | ∞ | ∞ | ∞ | ∞ | ∞ |
| **DC** | ∞ | ∞ | 0 | ∞ | ∞ | ∞ | ∞ | ∞ | ∞ | ∞ | ∞ | ∞ | ∞ |
| **DD** | ∞ | ∞ | ∞ | 0 | ∞ | ∞ | ∞ | ∞ | ∞ | ∞ | ∞ | ∞ | ∞ |
| **DE** | ∞ | ∞ | ∞ | ∞ | 0 | ∞ | ∞ | ∞ | ∞ | ∞ | ∞ | ∞ | ∞ |
| **DF** | ∞ | ∞ | ∞ | ∞ | ∞ | 0 | ∞ | ∞ | ∞ | ∞ | ∞ | ∞ | ∞ |
| **DG** | ∞ | ∞ | ∞ | ∞ | ∞ | ∞ | 0 | ∞ | ∞ | ∞ | ∞ | ∞ | ∞ |
| **DE'** | ∞ | ∞ | ∞ | ∞ | ∞ | ∞ | ∞ | 0 | ∞ | ∞ | ∞ | ∞ | ∞ |
| **DF'** | ∞ | ∞ | ∞ | ∞ | ∞ | ∞ | ∞ | ∞ | 0 | ∞ | ∞ | ∞ | ∞ |
| **DG'** | ∞ | ∞ | ∞ | ∞ | ∞ | ∞ | ∞ | ∞ | ∞ | 0 | ∞ | ∞ | ∞ |

FIG. 28E

| | UU | UV | UW | UX | UY | UZ | UU' | UZ' |
|---|---|---|---|---|---|---|---|---|
| **UUU** | I | I | I | I | I | I | I | I |

FIG. 28F

| | DA | DB | DC | DD | DE | DF | DG | DE' | DF' | DG' | HA | HB | HA' |
|---|---|---|---|---|---|---|---|---|---|---|---|---|---|
| **UU** | 0 | 0 | 0 | 0 | 0 | 0 | I | 0 | 0 | 0 | 0 | 0 | 0 |
| **UV** | 0 | 0 | 0 | 0 | 0 | 0 | 0 | 0 | 0 | 0 | 0 | I | 0 |
| **UW** | 0 | I | 0 | 0 | 0 | 0 | 0 | 0 | 0 | 0 | 0 | 0 | 0 |
| **UX** | 0 | 0 | I | 0 | 0 | 0 | 0 | 0 | 0 | 0 | 0 | 0 | 0 |
| **UY** | 0 | 0 | 0 | I | 0 | 0 | 0 | 0 | 0 | 0 | 0 | 0 | 0 |
| **UZ** | 0 | 0 | 0 | 0 | 0 | 0 | 0 | 0 | 0 | 0 | I | 0 | 0 |
| **UU'** | 0 | 0 | 0 | 0 | 0 | 0 | 0 | 0 | 0 | I | 0 | 0 | 0 |
| **UZ'** | 0 | 0 | 0 | 0 | 0 | 0 | 0 | 0 | 0 | 0 | 0 | 0 | I |

FIG. 28G

| | UU | UV | UW | UX | UY | UZ | UU' | UZ' |
|-----|----|----|----|----|----|----|-----|-----|
| DA | 0 | 0 | 0 | 0 | 0 | 0 | 0 | 0 |
| DB | 0 | 0 | I | 0 | 0 | 0 | 0 | 0 |
| DC | 0 | 0 | 0 | I | 0 | 0 | 0 | 0 |
| DD | 0 | 0 | 0 | 0 | I | 0 | 0 | 0 |
| DE | 0 | 0 | 0 | 0 | 0 | 0 | 0 | 0 |
| DF | 0 | 0 | 0 | 0 | 0 | 0 | 0 | 0 |
| DG | I | 0 | 0 | 0 | 0 | 0 | 0 | 0 |
| DE' | 0 | 0 | 0 | 0 | 0 | 0 | 0 | 0 |
| DF' | 0 | 0 | 0 | 0 | 0 | 0 | 0 | 0 |
| DG' | 0 | 0 | 0 | 0 | 0 | 0 | I | 0 |
| HA | 0 | 0 | 0 | 0 | 0 | I | 0 | 0 |
| HB | 0 | I | 0 | 0 | 0 | 0 | 0 | 0 |
| HA' | 0 | 0 | 0 | 0 | 0 | 0 | 0 | I |

FIG. 28H

|     | DA | DB | DC | DD | DE | DF | DG | DE' | DF' | DG' | HA | HB | HA' |
|-----|----|----|----|----|----|----|----|-----|-----|-----|----|----|-----|
| UU  | $\infty$ | $\infty$ | $\infty$ | $\infty$ | $\infty$ | $\infty$ | 0 | $\infty$ | $\infty$ | $\infty$ | $\infty$ | $\infty$ | $\infty$ |
| UV  | $\infty$ | $\infty$ | $\infty$ | $\infty$ | $\infty$ | $\infty$ | $\infty$ | $\infty$ | $\infty$ | $\infty$ | $\infty$ | 0 | $\infty$ |
| UW  | $\infty$ | 0 | $\infty$ | $\infty$ | $\infty$ | $\infty$ | $\infty$ | $\infty$ | $\infty$ | $\infty$ | $\infty$ | $\infty$ | $\infty$ |
| UX  | $\infty$ | $\infty$ | 0 | $\infty$ | $\infty$ | $\infty$ | $\infty$ | $\infty$ | $\infty$ | $\infty$ | $\infty$ | $\infty$ | $\infty$ |
| UY  | $\infty$ | $\infty$ | $\infty$ | 0 | $\infty$ | $\infty$ | $\infty$ | $\infty$ | $\infty$ | $\infty$ | $\infty$ | $\infty$ | $\infty$ |
| UZ  | $\infty$ | $\infty$ | $\infty$ | $\infty$ | $\infty$ | $\infty$ | $\infty$ | $\infty$ | $\infty$ | $\infty$ | 0 | $\infty$ | $\infty$ |
| UU' | $\infty$ | $\infty$ | $\infty$ | $\infty$ | $\infty$ | $\infty$ | $\infty$ | $\infty$ | $\infty$ | 0 | $\infty$ | $\infty$ | $\infty$ |
| UZ' | $\infty$ | $\infty$ | $\infty$ | $\infty$ | $\infty$ | $\infty$ | $\infty$ | $\infty$ | $\infty$ | $\infty$ | $\infty$ | $\infty$ | 0 |

FIG. 28I

|      | UU | UV | UW | UX | UY | UZ | UU' | UZ' |
|------|----|----|----|----|----|----|-----|-----|
| DA   | ∞  | ∞  | ∞  | ∞  | ∞  | ∞  | ∞   | ∞   |
| DB   | ∞  | ∞  | 0  | ∞  | ∞  | ∞  | ∞   | ∞   |
| DC   | ∞  | ∞  | ∞  | 0  | ∞  | ∞  | ∞   | ∞   |
| DD   | ∞  | ∞  | ∞  | ∞  | 0  | ∞  | ∞   | ∞   |
| DE   | ∞  | ∞  | ∞  | ∞  | ∞  | ∞  | ∞   | ∞   |
| DF   | ∞  | ∞  | ∞  | ∞  | ∞  | ∞  | ∞   | ∞   |
| DG   | 0  | ∞  | ∞  | ∞  | ∞  | ∞  | ∞   | ∞   |
| DE'  | ∞  | ∞  | ∞  | ∞  | ∞  | ∞  | ∞   | ∞   |
| DF'  | ∞  | ∞  | ∞  | ∞  | ∞  | ∞  | ∞   | ∞   |
| DG'  | ∞  | ∞  | ∞  | ∞  | ∞  | ∞  | 0   | ∞   |
| HA   | ∞  | ∞  | ∞  | ∞  | ∞  | 0  | ∞   | ∞   |
| HB   | ∞  | 0  | ∞  | ∞  | ∞  | ∞  | ∞   | ∞   |
| HA'  | ∞  | ∞  | ∞  | ∞  | ∞  | ∞  | ∞   | 0   |

FIG. 28J

|      | **DA** | **DB** | **DC** | **DD** |
|------|--------|--------|--------|--------|
| **DA** | I | p71(p79)p80(p73) | p72(p81)p82(p76) | p71(p79)p80(p73)-p74(p78) |
| **DB** | p73(p80)p79(p71) | I | p75(p77) | p74(p78) |
| **DC** | p76(p82)p81(p72) | p77(p75) | I | p77(p75)p74(p78) |
| **DD** | p78(p74)p73(p80)-p79(p71) | p78(p74) | p78(p74)p75(p77) | I |
| **DE** | p82(p76)p76(p82)-p81(p72) | p82(p76)p77(p75) | p82(p76) | p82(p76)p77(p75)-p74(p78) |
| **DF** | p80(p73)p73(p80)-p79(p71) | p80(p73) | p80(p73)p75(p77) | p80(p73)p74(p78) |
| **DG** | p84(p83)p78(p74)-p73(p80)p79(p71) | p84(p83)p78(p74) | p84(p83)p78(p74)-p75(p77) | p84(p83) |
| **DE'** | p81(p72) | p81(p72)p71(p79)-p80(p73) | p81(p72)p72(p81)-p82(p76) | p81(p72)p71(p79)-p80(p73)p74(p78) |
| **DF'** | p79(p71) | p79(p71)p71(p79)-p80(p73) | p79(p71)p72(p81)-p82(p76) | p79(p71)p71(p79)-p80(p73)p74(p78) |
| **DG'** | 0 | 0 | 0 | 0 |
| **HA** | p86(p85) | p86(p85)p71(p79)-p80(p73) | p86(p85)p72(p81)-p82(p76) | p86(p85)p71(p79)-p80(p73)p74(p78) |
| **HB** | p88(p87) | p88(p87)p71(p79)-p80(p73) | p88(p87)p72(p81)-p82(p76) | p88(p87)p71(p79)-p80(p73)p74(p78) |
| **HA'** | 0 | 0 | 0 | 0 |

FIG. 28K (1)

| | DE | DF | DG | DE' |
|---|---|---|---|---|
| (DA) | p72(p81) | p71(p79) | 0 | p72(p81)p82(p76)-p76(p82) |
| (DB) | p73(p80)p79(p71)-p72(p81) | p73(p80)p79(p71)-p71(p79) | 0 | p75(p77)p76(p82) |
| (DC) | p76(p82)p81(p72)-p72(p81) | p76(p82)p81-(p72)p71(p79) | 0 | p76(p82) |
| (DD) | p78(p74)p73(p80)-p79(p71)p72(p81) | p78(p74)p73(p80)-p79(p71)p71(p79) | 0 | p78(p74)p75(p77)-p76(p82) |
| (DE) | I | p82(p76)p76(p82)-p81(p72)p71(p79) | 0 | p82(p76)p76(p82) |
| (DF) | p80(p73)p73(p80)-p79(p71)p72(p81) | I | 0 | p80(p73)p75(p77)-p76(p82) |
| (DG) | p84(p83)p78(p74)-p73(p80)p79(p71)-p72(p81) | p84(p83)-p78(p74)p73(p80)-p79(p71)p71(p79) | I | p84(p83)p78(p74)-p75(p77)p76(p82) |
| (DE') | p81(p72)p72(p81) | p81(p72)p71(p79) | 0 | I |
| (DF') | p79(p71)p72(p81) | p79(p71)p71(p79) | 0 | p79(p71)p72(p81)-p82(p76)p76(p82) |
| (DG) | 0 | 0 | 0 | 0 |
| (HA) | p86(p85)p72(p81) | p86(p85)p71(p79) | 0 | p86(p85)p72(p81)-p82(p76)p76(p82) |
| (HB) | p88(p87)p72(p81) | p88(p87)p71(p79) | 0 | p88(p87)p72(p81)-p82(p76)p76(p82) |
| (HA') | 0 | 0 | 0 | 0 |

FIG. 28K (2)

| | DF' | DG' | HA | HB | HA' |
|---|---|---|---|---|---|
| **(DA)** | p71(p79)p80(p73)-p73(p80) | p71(p79)p80(p73)-p74(p78)p83(p84) | 0 | p87(p88) | p85(p86) |
| **(DB)** | p73(p80) | p74(p78)p83(p84) | 0 | p73(p80)p79(p71)-p87(p88) | p73(p80)p79(p71)-p85(p86) |
| **(DC)** | p77(p75)p73(p80) | p77(p75)p74(p78)-p83(p84) | 0 | p76(p82)p81(p72)-p87(p88) | p76(p82)p81(p72)-p85(p86) |
| **(DD)** | p78(p74)p73(p80) | p83(p84) | 0 | p78(p74)p73(p80)-p79(p71)p87(p88) | p78(p74)p73(p80)-p79(p71)p85(p86) |
| **(DE)** | p82(p76)p77(p75)-p73(p80) | p82(p76)p77(p75)-p74(p78)p83(p84) | 0 | p82(p76)p76(p82)-p81(p72)p87(p88) | p82(p76)p76(p82)-p81(p72)p85(p86) |
| **(DF)** | p80(p73)p73(p80) | p80(p73)p74-(p78)p83(p84) | 0 | p80(p73)p73(p80)-p79(p71)p87(p88) | p80(p73)p73(p80)-p79(p71)p85(p86) |
| **(DG)** | p84(p83)p78(p74)-p73(p80) | p84(p83)p83(p84) | 0 | p84(p83)p78(p74)-p73(p80)p79(p71)-p87(p88) | p84(p83)p78(p74)-p73(p80)p79(p71)-p85(p86) |
| **(DE')** | p81(p72)p71(p79)-p80(p73)p73(p80) | p81(p72)p71(p79)-p80(p73)p74(p78)-p83(p84) | 0 | p81(p72)p87(p88) | p81(p72)p85(p86) |
| **(DF')** | l | p79(p71)p71(p79)-p80(p73)p74-(p78)p83(p84) | 0 | p79(p71)p87(p88) | p79(p71)p85(p86) |
| **(DG)** | 0 | l | 0 | 0 | 0 |
| **(HA)** | p86(p85)p71(p79)-p80(p73)p73(p80) | p86(p85)p71(p79)-p80(p73)p74(p78)-p83(p84) | l | p86(p85)p87(p88) | p86(p85)p85(p86) |
| **(HB)** | p88(p87)p71(p79)-p80(p73)p73(p80) | p88(p87)p71(p79)-p80(p73)p74(p78)-p83(p84) | 0 | l | p88(p87)p85(p86) |
| **(HA')** | 0 | 0 | 0 | 0 | l |

FIG. 28K (3)

| | UU | UV | UW | UX | UY | UZ | UU' | UZ' |
|---|---|---|---|---|---|---|---|---|
| UU | 0 | p84(p83)p78(p74)-p73(p80)p79(p71)-p87(p88) | p84(p83)p78(p74) | p84(p83)p78(p74)-p75(p77) | p84(p83) | 0 | p84(p83)p83(p84) | p84(p83)p78(p74)-p73(p80)p79(p71)-p85(p86) |
| UV | 0 | 0 | p88(p87)p71(p79)-p80(p73) | p88(p87)p72(p81)-p82(p76) | p88(p87)p71(p79)-p80(p73)p74(p78) | 0 | p88(p87)p71(p79)-p80(p73)p74(p78)-p83(p84) | p88(p87)p85(p86) |
| UW | 0 | p73(p80)p79(p71)-p87(p88) | 0 | p75(p77) | p74(p78) | 0 | p74(p78)p83(p84) | p73(p80)p79(p71)-p85(p86) |
| UX | 0 | p76(p82)p81(p72)-p87(p88) | p77(p75) | 0 | p77(p75)p74(p78) | 0 | p77(p75)p74(p78)-p83(p84) | p76(p82)p81(p72)-p85(p86) |
| UY | 0 | p78(p74)p73(p80)-p79(p71)p87(p88) | p78(p74) | p78(p74)p75(p77) | 0 | 0 | p83(p84) | p78(p74)p73(p80)-p79(p71)p85(p86) |
| UZ | 0 | p86(p85)p87(p88) | p86(p85)p71(p79)-p80(p73) | p86(p85)p72(p81)-p82(p76) | p86(p85)p71(p79)-p80(p73)p74(p78) | 0 | p86(p85)p71(p79)-p80(p73)p74(p78)-p83(p84) | p86(p85)p85(p86) |
| UU' | 0 | 0 | 0 | 0 | 0 | 0 | 0 | 0 |
| UZ' | 0 | 0 | 0 | 0 | 0 | 0 | 0 | 0 |

FIG. 28L

|      | DA | DB | DC | DD | DE | DF | DG | DE' | DF' | DG' | HA | HB | HA' |
|------|----|----|----|----|----|----|----|-----|-----|-----|----|----|-----|
| DA   | 0  | 1  | 1  | 2  | 0  | 0  | ∞  | 2   | 2   | 3   | ∞  | 0  | 0   |
| DB   | 1  | 0  | 1  | 1  | 1  | 1  | ∞  | 2   | 1   | 2   | ∞  | 1  | 1   |
| DC   | 1  | 1  | 0  | 2  | 1  | 1  | ∞  | 1   | 2   | 3   | ∞  | 1  | 1   |
| DD   | 2  | 1  | 2  | 0  | 2  | 2  | ∞  | 3   | 2   | 1   | ∞  | 2  | 2   |
| DE   | 2  | 2  | 1  | 3  | 0  | 2  | ∞  | 2   | 3   | 4   | ∞  | 2  | 2   |
| DF   | 2  | 1  | 2  | 2  | 2  | 0  | ∞  | 3   | 2   | 3   | ∞  | 2  | 2   |
| DG   | 3  | 2  | 3  | 1  | 3  | 3  | 0  | 4   | 3   | 2   | ∞  | 3  | 3   |
| DE'  | 0  | 1  | 1  | 2  | 0  | 0  | ∞  | 0   | 2   | 3   | ∞  | 0  | 0   |
| DF'  | 0  | 1  | 1  | 2  | 0  | 0  | ∞  | 2   | 0   | 3   | ∞  | 0  | 0   |
| DG'  | ∞  | ∞  | ∞  | ∞  | ∞  | ∞  | ∞  | ∞   | ∞   | 0   | ∞  | ∞  | ∞   |
| HA   | 0  | 1  | 1  | 2  | 0  | 0  | ∞  | 2   | 2   | 3   | 0  | 0  | 0   |
| HB   | 0  | 1  | 1  | 2  | 0  | 0  | ∞  | 2   | 2   | 3   | ∞  | 0  | 0   |
| HA'  | ∞  | ∞  | ∞  | ∞  | ∞  | ∞  | ∞  | ∞   | ∞   | ∞   | ∞  | ∞  | 0   |

FIG. 28M

|      | UU | UV | UW | UX | UY | UZ | UU' | UZ' |
|------|----|----|----|----|----|----|----|----|
| UU   | ∞  | 3  | 2  | 3  | 1  | ∞  | 2  | 3  |
| UV   | ∞  | ∞  | 1  | 1  | 2  | ∞  | 3  | 0  |
| UW   | ∞  | 1  | ∞  | 1  | 1  | ∞  | 2  | 1  |
| UX   | ∞  | 1  | 1  | ∞  | 2  | ∞  | 3  | 1  |
| UY   | ∞  | 2  | 1  | 2  | ∞  | ∞  | 1  | 2  |
| UZ   | ∞  | 0  | 1  | 1  | 2  | ∞  | 3  | 0  |
| UU'  | ∞  | ∞  | ∞  | ∞  | ∞  | ∞  | ∞  | ∞  |
| UZ'  | ∞  | ∞  | ∞  | ∞  | ∞  | ∞  | ∞  | ∞  |

FIG. 28N

|      | UU | UV | UW | UX | UY | UZ | UU' | UZ' |
|------|----|----|----|----|----|----|----|----|
| UU   | ∞  | ∞  | ∞  | ∞  | 1  | ∞  | ∞  | ∞  |
| UV   | ∞  | ∞  | 2  | 1  | ∞  | ∞  | ∞  | 1  |
| UW   | ∞  | 2  | ∞  | ∞  | 1  | ∞  | ∞  | ∞  |
| UX   | ∞  | 1  | ∞  | ∞  | 1  | ∞  | ∞  | ∞  |
| UY   | ∞  | ∞  | 1  | 1  | ∞  | ∞  | 1  | ∞  |
| UZ   | ∞  | 1  | ∞  | ∞  | ∞  | ∞  | ∞  | ∞  |
| UU'  | ∞  | ∞  | ∞  | ∞  | ∞  | ∞  | ∞  | ∞  |
| UZ'  | ∞  | ∞  | ∞  | ∞  | ∞  | ∞  | ∞  | ∞  |

FIG. 29A

|     | UU | UV | UW | UX | UY | UZ | UU' | UZ' |
|-----|----|----|----|----|----|----|-----|-----|
| UU  | 0  | 0  | 0  | 0  | p84(p83) | 0 | 0 | 0 |
| UV  | 0  | 0  | p88(p87)p71(p79)-p80(p73) | p88(p87)p72(p81)-p82(p76) | 0 | 0 | 0 | p88(p87)p85(p86) |
| UW  | 0  | p73(p80)p79(p71)-p87(p88) | 0 | 0 | p74(p78) | 0 | 0 | 0 |
| UX  | 0  | p76(p82)p81(p72)-p87(p88) | 0 | 0 | p77(p75)p74(p78) | 0 | 0 | 0 |
| UY  | 0  | 0 | p78(p74) | p78(p74)p75(p77) | 0 | 0 | p83(p84) | 0 |
| UZ  | 0  | p86(p85)p87(p88) | 0 | 0 | 0 | 0 | 0 | 0 |
| UU' | 0  | 0 | 0 | 0 | 0 | 0 | 0 | 0 |
| UZ' | 0  | 0 | 0 | 0 | 0 | 0 | 0 | 0 |

FIG. 29B

| | UU | UV | UW | UX | UY | UZ | UU' | UZ' |
|---|---|---|---|---|---|---|---|---|
| **UU** | I | p84(p83)p78(p74)-p75(p77)p76(p82)-p81(p72)p87(p88) | p84(p83)p78(p74) | p84(p83)p78(p74)-p75(p77) | p84(p83) | 0 | p84(p83)p83(p84) | p84(p83)p78(p74)-p75(p77)p76(p82)-p81(p72)p87(p88)-p88(p87)p85(p86) |
| **UV** | 0 | I | p88(p87)p71(p79)-p80(p73) | p88(p87)p72(p81)-p82(p76) | p88(p87)p72(p81)-p82(p76)p77(p75)-p74(p78) | 0 | p88(p87)p72(p81)-p82(p76)p77(p75)-p74(p78)p83(p84) | p88(p87)p85(p86) |
| **UW** | 0 | p73(p80)p79(p71)-p87(p88) | I | p74(p78)p78(p74)-p75(p77) | p74(p78) | 0 | p74(p78)p83(p84) | p73(p80)p79(p71)-p87(p88)p88(p87)-p85(p86) |
| **UX** | 0 | p76(p82)p81(p72)-p87(p88) | p77(p75)p74(p78)-p78(p74) | I | p77(p75)p74(p78) | 0 | p77(p75)p74(p78)-p83(p84) | p76(p82)p81(p72)-p87(p88)p88(p87)-p85(p86) |
| **UY** | 0 | p78(p74)p75(p77)-p76(p82)p81(p72)-p87(p88) | p78(p74) | p78(p74)p75(p77) | I | 0 | p83(p84) | p78(p74)p75(p77)-p76(p82)p81(p72)-p87(p88)p88(p87)-p85(p86) |
| **UZ** | 0 | p86(p85)p87(p88) | p86(p85)p87(p88)-p88(p87)p71(p79)-p80(p73) | p86(p85)p87(p88)-p88(p87)p72(p81)-p82(p76) | p86(p85)p87(p88)-p88(p87)p72(p81)-p82(p76)p77(p75)-p74(p78) | I | p86(p85)p87(p88)-p88(p87)p72(p81)-p82(p76)p77(p75)-p74(p78)p83(p84) | p86(p85)p87(p88)-p88(p87)p85(p86) |
| **UU'** | 0 | 0 | 0 | 0 | 0 | 0 | I | 0 |
| **UZ'** | 0 | 0 | 0 | 0 | 0 | 0 | 0 | I |

FIG. 29C

|      | UU | UV | UW | UX | UY | UZ | UU' | UZ' |
|------|----|----|----|----|----|----|-----|-----|
| UU   | 0  | 3  | 2  | 2  | 1  | ∞  | 2   | 4   |
| UV   | ∞  | 0  | 2  | 1  | 2  | ∞  | 3   | 1   |
| UW   | ∞  | 2  | 0  | 2  | 1  | ∞  | 2   | 3   |
| UX   | ∞  | 1  | 2  | 0  | 1  | ∞  | 2   | 2   |
| UY   | ∞  | 2  | 1  | 1  | 0  | ∞  | 1   | 3   |
| UZ   | ∞  | 1  | 3  | 2  | 3  | 0  | 4   | 2   |
| UU'  | ∞  | ∞  | ∞  | ∞  | ∞  | ∞  | 0   | ∞   |
| UZ'  | ∞  | ∞  | ∞  | ∞  | ∞  | ∞  | ∞   | 0   |

FIG. 29D

| | UU | UV | UW | UX | UY | UZ |
|---|---|---|---|---|---|---|
| **UU** | I | p84(p83)p78(p74)-p75(p77)p76(p82)-p81(p72)p87(p88) | p84(p83)p78(p74) | p84(p83)p78(p74)-p75(p77) | p84(p83) | p84(p83)p78(p74)-p75(p77)p76(p82)-p81(p72)p87(p88)-p88(p87)p85(p86) |
| **UV** | p88(p87)p72(p81)-p82(p76)p77(p75)-p74(p78)p83(p84) | I | p88(p87)p71(p79)-p80(p73) | p88(p87)p72(p81)-p82(p76) | p88(p87)p72(p81)-p82(p76)p77(p75)-p74(p78) | p88(p87)p85(p86) |
| **UW** | p74(p78)p83(p84) | p73(p80)p79(p71)-p87(p88) | I | p74(p78)p78(p74)-p75(p77) | p74(p78) | p73(p80)p79(p71)-p87(p88)p88(p87)-p85(p86) |
| **UX** | p77(p75)p74(p78)-p83(p84) | p76(p82)p81(p72)-p87(p88) | p77(p75)p74(p78)-p78(p74) | I | p77(p75)p74(p78) | p76(p82)p81(p72)-p87(p88)p88(p87)-p85(p86) |
| **UY** | p83(p84) | p78(p74)p75(p77)-p76(p82)p81(p72)-p87(p88) | p78(p74) | p78(p74)p75(p77) | I | p78(p74)p75(p77)-p76(p82)p81(p72)-p87(p88)p88(p87)-p85(p86) |
| **UZ** | p86(p85)p87(p88)-p88(p87)p72(p81)-p82(p76)p77(p75)-p74(p78)p83(p84) | p86(p85)p87(p88) | p86(p85)p87(p88)-p88(p87)p71(p79)-p80(p73) | p86(p85)p87(p88)-p88(p87)p72(p81)-p82(p76) | p86(p85)p87(p88)-p88(p87)p72(p81)-p82(p76)p77(p75)-p74(p78) | I |

FIG. 29E

| | UU | UV | UW | UX | UY | UZ |
|---|---|---|---|---|---|---|
| **UU** | 0 | 3 | 2 | 2 | 1 | 4 |
| **UV** | 3 | 0 | 2 | 1 | 2 | 1 |
| **UW** | 2 | 2 | 0 | 2 | 1 | 3 |
| **UX** | 2 | 1 | 2 | 0 | 1 | 2 |
| **UY** | 1 | 2 | 1 | 1 | 0 | 3 |
| **UZ** | 4 | 1 | 3 | 2 | 3 | 0 |

FIG. 29F

| SOURCE | DESTI-NATION | INPUT PORT | OUTPUT PORT |
|--------|--------------|------------|-------------|
| UU | UV | p74 | p75 |
| UU | UW | p74 | LOCAL |
| UU | UX | p74 | p75 |
| UU | UZ | p74 | p75 |
| UV | UU | p75 | p74 |
| UV | UY | p75 | p74 |
| UV | UW | p73 | LOCAL |
| UW | UU | LOCAL | p74 |
| UW | UX | LOCAL | p74 |
| UW | UY | LOCAL | p74 |
| UW | UV | LOCAL | p73 |
| UW | UZ | LOCAL | p73 |
| UW | UX | p74 | p75 |
| UX | UU | p75 | p74 |
| UX | UW | p75 | p74 |
| UX | UW | p74 | LOCAL |
| UX | UY | p75 | p74 |
| UY | UV | p74 | p75 |
| UY | UW | p74 | LOCAL |
| UY | UZ | p74 | p75 |
| UY | UX | p74 | p75 |
| UZ | UU | p75 | p74 |
| UZ | UY | p75 | p74 |
| UZ | UW | p73 | LOCAL |

FIG. 30B

| SOURCE | DESTI-NATION | INPUT PORT | OUTPUT PORT |
|--------|--------------|------------|-------------|
| UU | UV | p72 | p87 |
| UU | UZ | p72 | p87 |
| UU | UZ | p87 | p85 |
| UV | UU | p87 | p72 |
| UV | UW | p87 | p71 |
| UV | UX | p87 | p72 |
| UV | UY | p87 | p72 |
| UV | UZ | p87 | p85 |
| UW | UV | p71 | p87 |
| UW | UZ | p71 | p87 |
| UW | UZ | p87 | p85 |
| UX | UV | p72 | p87 |
| UX | UZ | p72 | p87 |
| UX | UZ | p87 | p85 |
| UY | UV | p72 | p87 |
| UY | UZ | p72 | p87 |
| UY | UZ | p87 | p85 |
| UZ | UU | p85 | p87 |
| UZ | UV | p85 | p87 |
| UZ | UW | p85 | p87 |
| UZ | UX | p85 | p87 |
| UZ | UY | p85 | p87 |
| UZ | UU | p87 | p72 |
| UZ | UW | p87 | p71 |
| UZ | UX | p87 | p72 |
| UZ | UY | p87 | p72 |

FIG. 30A

101

| SOURCE | DESTI-NATION | INPUT PORT | OUTPUT PORT |
|--------|--------------|------------|-------------|
| UU | UV | p83 | p78 |
| UU | UW | p83 | p78 |
| UU | UX | p83 | p78 |
| UU | UZ | p83 | p78 |
| UU | UY | p83 | LOCAL |
| UV | UU | p78 | p83 |
| UV | UY | p78 | LOCAL |
| UW | UU | p78 | p83 |
| UW | UX | p78 | p78 |
| UW | UY | p78 | LOCAL |
| UX | UU | p78 | p83 |
| UX | UW | p78 | p78 |
| UX | UY | p78 | LOCAL |
| UY | UU | LOCAL | p83 |
| UY | UV | LOCAL | p78 |
| UY | UW | LOCAL | p78 |
| UY | UX | LOCAL | p78 |
| UY | UZ | LOCAL | p78 |
| UZ | UU | p78 | p83 |
| UZ | UY | p78 | LOCAL |

FIG. 30D

| SOURCE | DESTI-NATION | INPUT PORT | OUTPUT PORT |
|--------|--------------|------------|-------------|
| UU | UV | p77 | p76 |
| UU | UX | p77 | LOCAL |
| UU | UZ | p77 | p76 |
| UV | UU | p76 | p77 |
| UV | UX | p76 | LOCAL |
| UV | UY | p76 | p77 |
| UW | UX | p77 | LOCAL |
| UX | UU | LOCAL | p77 |
| UX | UV | LOCAL | p76 |
| UX | UW | LOCAL | p77 |
| UX | UY | LOCAL | p77 |
| UX | UZ | LOCAL | p76 |
| UY | UV | p77 | p76 |
| UY | UX | p77 | LOCAL |
| UY | UZ | p77 | p76 |
| UZ | UU | p76 | p77 |
| UZ | UX | p76 | LOCAL |
| UZ | UY | p76 | p77 |

FIG. 30C

| SOURCE | DESTI-NATION | INPUT PORT | OUTPUT PORT |
|--------|--------------|------------|-------------|
| UU | UV | p82 | p81 |
| UU | UZ | p82 | p81 |
| UV | UU | p81 | p82 |
| UV | UX | p81 | p82 |
| UV | UY | p81 | p82 |
| UX | UV | p82 | p81 |
| UX | UZ | p82 | p81 |
| UY | UV | p82 | p81 |
| UY | UZ | p82 | p81 |
| UZ | UU | p81 | p82 |
| UZ | UX | p81 | p82 |
| UZ | UY | p81 | p82 |

FIG. 30E

| SOURCE | DESTI-NATION | INPUT PORT | OUTPUT PORT |
|--------|--------------|------------|-------------|
| UV | UW | p79 | p80 |
| UW | UV | p80 | p79 |
| UW | UZ | p80 | p79 |
| UZ | UW | p79 | p80 |

FIG. 30F

| SOURCE | DESTI-NATION | INPUT PORT | OUTPUT PORT |
|--------|--------------|------------|-------------|
| UU | UV | LOCAL | p84 |
| UU | UW | LOCAL | p84 |
| UU | UX | LOCAL | p84 |
| UU | UY | LOCAL | p84 |
| UU | UZ | LOCAL | p84 |
| UV | UU | p84 | LOCAL |
| UW | UU | p84 | LOCAL |
| UX | UU | p84 | LOCAL |
| UY | UU | p84 | LOCAL |
| UZ | UU | p84 | LOCAL |

FIG. 30G

| SOURCE | DESTI-NATION | INPUT PORT | OUTPUT PORT |
|--------|--------------|------------|-------------|
| UU | UZ | p86 | LOCAL |
| UV | UZ | p86 | LOCAL |
| UW | UZ | p86 | LOCAL |
| UX | UZ | p86 | LOCAL |
| UY | UZ | p86 | LOCAL |
| UZ | UU | LOCAL | p86 |
| UZ | UV | LOCAL | p86 |
| UZ | UW | LOCAL | p86 |
| UZ | UX | LOCAL | p86 |
| UZ | UY | LOCAL | p86 |

FIG. 30H

| SOURCE | DESTI-NATION | INPUT PORT | OUTPUT PORT |
|--------|--------------|------------|-------------|
| UU | UV | p88 | LOCAL |
| UU | UZ | p88 | p88 |
| UV | UU | LOCAL | p88 |
| UV | UW | LOCAL | p88 |
| UV | UX | LOCAL | p88 |
| UV | UY | LOCAL | p88 |
| UV | UZ | LOCAL | p88 |
| UW | UV | p88 | LOCAL |
| UW | UZ | p88 | p88 |
| UX | UV | p88 | LOCAL |
| UX | UZ | p88 | p88 |
| UY | UV | p88 | LOCAL |
| UY | UZ | p88 | p88 |
| UZ | UU | p88 | p88 |
| UZ | UV | p88 | LOCAL |
| UZ | UW | p88 | p88 |
| UZ | UX | p88 | p88 |
| UZ | UY | p88 | p88 |

FIG. 30I

FIG. 31

Europäisches
Patentamt

European
Patent Office

Office européen
des brevets

## EUROPEAN SEARCH REPORT

**Application Number**

EP 13 16 0228

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/044641 A1 (KOPONEN TEEMU [US] ET AL) 21 February 2013 (2013-02-21) <br> * paragraphs [0003] - [0010] * <br> * paragraphs [0068] - [0073] * <br> * paragraph [0078] * <br> * paragraphs [0106] - [0120] * <br> * paragraphs [0132] - [0133] * <br> ----- | 1-16 | INV. <br> H04L12/24 <br> H04L12/751 <br> H04L12/715 <br> H04L12/931 <br><br> ADD. <br> H04L12/803 <br> H04L12/705 |
| X | US 2013/058215 A1 (KOPONEN TEEMU [US] ET AL) 7 March 2013 (2013-03-07) <br> * abstract * <br> * paragraphs [0002] - [0016] * <br> * paragraphs [0071] - [0088] * <br> ----- | 1-16 | |
| X | US 2011/022694 A1 (DALAL ANUPAM [US] ET AL) 27 January 2011 (2011-01-27) <br> * paragraphs [0002] - [0006] * <br> * paragraphs [0020] - [0022] * <br> * paragraphs [0024] - [0025] * <br> * paragraph [0030] * <br> * paragraphs [0036] - [0039] * <br> * figures 1,3,4,6,7,12 * <br> ----- | 15,16 | |
| A | Kireeti Kompella: "Research Problems in SDN", <br> Proceedings of IETF 85 - SDNRG, <br> 6 November 2012 (2012-11-06), XP055082587, <br> Atlanta, GA, USA <br> Retrieved from the Internet: <br> URL:http://www.1-4-5.net/~dmm/sdnrg/IETF85 <br> /presentations/Kompella.SDN-irtf.pptx.pdf <br> [retrieved on 2013-10-04] <br> * page 5 * <br> * pages 12-14 * <br> ----- | 1-16 | TECHNICAL FIELDS SEARCHED (IPC) <br><br> H04L <br> G05B |

The present search report has been drawn up for all claims

| Place of search | Date of completion of the search | Examiner |
|---|---|---|
| The Hague | 7 October 2013 | Krause, Sven |

EPO FORM 1503 03.82 (P04C01)

## ANNEX TO THE EUROPEAN SEARCH REPORT
## ON EUROPEAN PATENT APPLICATION NO.

EP 13 16 0228

This annex lists the patent family members relating to the patent documents cited in  the above-mentioned European search report.
The members are as contained in the European Patent Office EDP file on
The European Patent Office is in no way liable for these particulars which are merely given for the purpose of information.

07-10-2013

| Patent document cited in search report | Publication date | Patent family member(s) | Publication date |
|---|---|---|---|
| US 2013044641  A1 | 21-02-2013 | US   2013044641  A1 | 21-02-2013 |
|  |  | US   2013044751  A1 | 21-02-2013 |
|  |  | US   2013044752  A1 | 21-02-2013 |
|  |  | US   2013044761  A1 | 21-02-2013 |
|  |  | US   2013044762  A1 | 21-02-2013 |
|  |  | US   2013044763  A1 | 21-02-2013 |
|  |  | US   2013044764  A1 | 21-02-2013 |
|  |  | US   2013142203  A1 | 06-06-2013 |
|  |  | WO   2013026050  A1 | 21-02-2013 |
| US 2013058215  A1 | 07-03-2013 | US   2013058208  A1 | 07-03-2013 |
|  |  | US   2013058215  A1 | 07-03-2013 |
|  |  | US   2013058225  A1 | 07-03-2013 |
|  |  | US   2013058226  A1 | 07-03-2013 |
|  |  | US   2013058228  A1 | 07-03-2013 |
|  |  | US   2013058250  A1 | 07-03-2013 |
|  |  | US   2013058251  A1 | 07-03-2013 |
|  |  | US   2013058252  A1 | 07-03-2013 |
|  |  | US   2013058255  A1 | 07-03-2013 |
|  |  | US   2013058331  A1 | 07-03-2013 |
|  |  | US   2013058334  A1 | 07-03-2013 |
|  |  | US   2013058339  A1 | 07-03-2013 |
|  |  | US   2013058340  A1 | 07-03-2013 |
|  |  | US   2013058341  A1 | 07-03-2013 |
|  |  | US   2013058342  A1 | 07-03-2013 |
|  |  | US   2013058343  A1 | 07-03-2013 |
|  |  | US   2013058344  A1 | 07-03-2013 |
|  |  | US   2013058348  A1 | 07-03-2013 |
|  |  | US   2013058353  A1 | 07-03-2013 |
|  |  | US   2013058354  A1 | 07-03-2013 |
|  |  | US   2013058356  A1 | 07-03-2013 |
|  |  | US   2013058357  A1 | 07-03-2013 |
|  |  | US   2013058358  A1 | 07-03-2013 |
|  |  | US   2013060736  A1 | 07-03-2013 |
|  |  | US   2013060737  A1 | 07-03-2013 |
|  |  | US   2013060738  A1 | 07-03-2013 |
|  |  | US   2013060817  A1 | 07-03-2013 |
|  |  | US   2013060818  A1 | 07-03-2013 |
|  |  | US   2013060819  A1 | 07-03-2013 |
|  |  | US   2013060922  A1 | 07-03-2013 |
|  |  | US   2013060929  A1 | 07-03-2013 |
|  |  | US   2013060940  A1 | 07-03-2013 |
| US 2011022694  A1 | 27-01-2011 | NONE |  |

EPO FORM P0459

For more details about this annex : see Official Journal of the European Patent Office, No. 12/82

**REFERENCES CITED IN THE DESCRIPTION**

**Patent documents cited in the description**

- WO 2010115060 A

- WO 2012082988 A